(19) **Europäisches Patentamt / European Patent Office / Office européen des brevets**

(11) **EP 4 604 652 A1**

(12) **EUROPEAN PATENT APPLICATION**
published in accordance with Art. 153(4) EPC

(43) Date of publication:
**20.08.2025 Bulletin 2025/34**

(21) Application number: **23889124.6**

(22) Date of filing: **07.11.2023**

(51) International Patent Classification (IPC):
*H04W 72/25* (2023.01)   *H04L 1/18* (2023.01)
*H04L 5/00* (2006.01)   *H04W 74/08* (2024.01)
*H04W 92/18* (2009.01)   *H04W 72/04* (2023.01)
*H04W 72/12* (2023.01)

(52) Cooperative Patent Classification (CPC):
**H04L 1/18; H04L 5/00; H04W 72/04; H04W 72/12;
H04W 72/25; H04W 74/08; H04W 92/18**

(86) International application number:
**PCT/KR2023/017803**

(87) International publication number:
**WO 2024/101866 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022   KR 20220147432
14.02.2023   KR 20230019697**

(71) Applicant: **Wilus Institute of Standards and
Technology Inc.
Gyeonggi-do 13595 (KR)**

(72) Inventors:
• **NOH, Minseok**
  **Seongnam-si Gyeonggi-do 13595 (KR)**
• **SEOK, Geunyoung**
  **Seongnam-si Gyeonggi-do 13595 (KR)**
• **YOON, Youngjoon**
  **Seongnam-si Gyeonggi-do 13595 (KR)**
• **SON, Juhyung**
  **Seongnam-si Gyeonggi-do 13595 (KR)**
• **KWAK, Jinsam**
  **Seongnam-si Gyeonggi-do 13595 (KR)**

(74) Representative: **Metroconsult Srl
Via Sestriere, 100
10060 None (TO) (IT)**

(54) **METHOD AND DEVICE FOR TRANSMITTING SIGNAL IN WIRELESS COMMUNICATION SYSTEM**

(57)     This terminal for performing wireless communication in a wireless communication system may comprise: a communication module; and a processor for controlling the communication module, wherein the processor receives a physical sidelink shared channel (PSSCH), and transmits a physical sidelink feedback channel (PSFCH) including hybrid automatic repeat request-acknowledgement (HARQ-ACK) feedback information corresponding to the PSSCH, the PSFCH is transmitted in at least one resource block (RB) set, each RB set of the at least one RB set includes physical resource blocks (PRBs) of a first interlace structure and PRBs of a second interlace structure, first data is mapped to the PRBs of the first interlace structure, second data is mapped to the PRBs of the second interlace structure, the first data is the HARQ-ACK feedback information, and the first data and the second data are different from each other.

[Fig. 37]

Receive physical sidelink shared channel (PSSCH) — S3710

Transmit physical sidelink feedback channel (PSFCH) including hybrid automatic repeat request – acknowledgement (HARQ-ACK) feedback information corresponding to PSSCH — S3720

**Description**

**Technical Field**

The present disclosure relates to a wireless communication system and relates to a method for transmitting a signal and a device therefor.

**Background Art**

After commercialization of 4th generation (4G) communication systems, in order to meet the increasing demand for wireless data traffic, efforts are being made to develop a new 5th generation (5G) communication system. The 5G communication system is called as a beyond 4G network communication system, a post-LTE system, or a new radio (NR) system. In order to achieve a high data transfer rate, the 5G communication system includes a system operated using the extremely high frequency (mmWave) band of 6 GHz or more, and includes a communication system operated using a frequency band of 6 GHz or less in terms of ensuring coverage so that implementation in a base station and a terminal is under consideration.

A 3rd Generation Partnership Project (3GPP) NR system enhances spectral efficiency of a network and enables a communication provider to provide more data and voice services over a given bandwidth. Accordingly, the 3GPP NR system is designed to meet the demands for high-speed data and media transmission in addition to supports for large volumes of voice. The advantages of the NR system are to have a higher throughput and a lower latency in an identical platform, support for frequency division duplex (FDD) and time division duplex (TDD), and a low operation cost with an enhanced end-user environment and a simple architecture.

For more efficient data processing, dynamic TDD of the NR system may use a method for varying the number of orthogonal frequency division multiplexing (OFDM) symbols that may be used in an uplink and downlink according to data traffic directions of cell users. For example, when the downlink traffic of the cell is larger than the uplink traffic, the base station may allocate a plurality of downlink OFDM symbols to a slot (or subframe). Information about the slot configuration should be transmitted to the terminals.

In order to alleviate the path loss of radio waves and increase the transmission distance of radio waves in the extremely high frequency band, in 5G communication systems, beamforming, massive multiple input/output (massive MIMO), full dimensional MIMO (FD-MIMO), array antenna, analog beam-forming, hybrid beamforming that combines analog beamforming and digital beamforming, and large scale antenna technologies are discussed. In addition, for network improvement of the system, in the 5G communication system, technology developments related to evolved small cells, advanced small cells, cloud radio access network (cloud RAN), ultra-dense network, device to device communication (D2D), vehicle to everything communication (V2X), wireless backhaul, non-terrestrial network communication (NTN), moving network, cooperative communication, coordinated multi-points (CoMP), interference cancellation, and the like are being made. In addition, in the 5G system, hybrid FSK and QAM modulation (FQAM) and sliding window superposition coding (SWSC), which are advanced coding modulation (ACM) schemes, and filter bank multi-carrier (FBMC), non-orthogonal multiple access (NOMA), and sparse code multiple access (SCMA), which are advanced connectivity technologies, are being developed.

Meanwhile, in a human-centric connection network where humans generate and consume information, the Internet has evolved into the Internet of Things (IoT) network, which exchanges information among distributed components such as objects. Internet of Everything (IoE) technology, which combines IoT technology with big data processing technology through connection with cloud servers, is also emerging. In order to implement IoT, technology elements such as sensing technology, wired/wireless communication and network infrastructure, service interface technology, and security technology are required, so that in recent years, technologies such as sensor network, machine to machine (M2M), and machine type communication (MTC) have been studied for connecting of objects. In the IoT environment, an intelligent internet technology (IT) service that collects and analyzes data generated from connected objects to create new value in human life can be provided. Through the fusion and mixture of existing information technology (IT) and various industries, IoT can be applied to fields such as smart homes, smart buildings, smart cities, smart cars or connected cars, smart grids, healthcare, smart home appliances, and advanced medical services.

Accordingly, various attempts have been made to apply the 5G communication system to the IoT network. For example, technologies such as a sensor network, a machine to machine (M2M), and a machine type communication (MTC) are implemented by techniques such as beamforming, MIMO, and array antennas, which are 5G communication techniques. The application of the cloud RAN as the big data processing technology described above is an example of the fusion of 5G technology and IoT technology. Generally, a mobile communication system has been developed to provide voice service while ensuring the user's activity.

However, the mobile communication system is gradually expanding not only the voice but also the data service, and now it has developed to the extent of providing high-speed data service. However, in a mobile communication system in which services are currently being provided, a more advanced mobile communication system is required due to a shortage phenomenon of resources and a high-speed service demand of users.

In recent years, with an explosive increase of mobile traffic due to the spread of smart devices, it has been difficult to cope with data usage which increases for providing a cellular communication service only by a conventional licensed frequency spectrum or LTE-licensed frequency band.

In such a situation, a scheme that uses an unlicensed frequency spectrum or LTE-Unlicensed frequency band (e.g., 2.4 GHz band, 5 GHz band, or the like) for providing the cellular communication service has been devised as a solution for a spectrum shortage problem.

Unlike the licensed band in which a communication service provider secures an exclusive frequency use right through a procedure such as auction, or the like, in the unlicensed band, multiple communication facilities can be used simultaneously without limit when only a predetermined level of adjacent band protection regulation is observed. As a result, when the unlicensed band is used in the cellular communication service, it is difficult to guarantee communication quality at a level provided in the licensed band and an interference problem with a conventional wireless communication device (e.g., wireless LAN device) using the unlicensed band may occur.

Research into a coexistence scheme with the conventional unlicensed band device and a scheme for efficiently sharing a radio channel needs to be preferentially made in order to settle LTE and NR technologies in the unlicensed band. That is, a robust coexistence mechanism (RCM) needs to be developed in order to prevent a device using the LTE and NR technologies in the unlicensed band from influencing the conventional unlicensed band device.

**Disclosure of Invention**

**Technical Problem**

An aspect of the present disclosure is to provide a method for transmitting a signal and a device therefor.

**Solution to Problem**

The present disclosure provides a terminal for performing wireless communication in a wireless communication system and a method for performing wireless communication.

Specifically, the terminal may include a communication module, and a processor configured to control the communication module, wherein the processor is configured to: receive a physical sidelink shared channel (PSSCH); and transmit a physical sidelink feedback channel (PSFCH) including hybrid automatic repeat request-acknowledgement (HARQ-ACK) feedback information corresponding to the PSSCH, the PSFCH is transmitted in one or more resource block (RB) sets, each RB set of the one or more RB sets includes physical resource blocks (PRBs) having a first interlace structure and PRBs having a second interlace structure, first data is mapped to the PRBs having the first interlace structure, second data is mapped to the PRBs having the second interlace structure, the first data is the HARQ-ACK feedback information, and the first data and the second data are different from each other.

The processor may be configured to receive indication information indicating at least one PRB among the PRBs having the first interlace structure, to which the HARQ-ACK feedback information is mapped, wherein the HARQ-ACK feedback information is mapped to a resource of the at least one PRB indicated by the indication information.

In addition, in the present disclosure, a wireless communication method performed by a terminal in a wireless communication system may include: receiving a physical sidelink shared channel (PSSCH); and transmitting a physical sidelink feedback channel (PSFCH) including hybrid automatic repeat request-acknowledgement (HARQ-ACK) feedback information corresponding to the PSSCH, wherein the PSFCH is transmitted in one or more resource block (RB) sets, each RB set of the one or more RB sets includes physical resource blocks (PRBs) having a first interlace structure and PRBs having a second interlace structure, first data is mapped to the PRBs having the first interlace structure, second data is mapped to the PRBs having the second interlace structure, the first data is the HARQ-ACK feedback information, and the first data and the second data are different from each other.

The method may further include receiving indication information indicating at least one PRB among the PRBs having the first interlace structure, to which the HARQ-ACK feedback information is mapped, wherein the HARQ-ACK feedback information is mapped to a resource of the at least one PRB indicated by the indication information.

In addition, in the present disclosure, the PRBs having the second interlace structure may be also commonly configured for a terminal other than the terminal, which communicates with the terminal.

In addition, in the present disclosure, when the PSSCH is received on multiple RB sets, an RB set in which the PSFCH is transmitted may be an RB set having a lowest index among the multiple RB sets.

In addition, in the present disclosure, the indication information may include an index indicating the number of the PRBs having the first interlace structure.

In addition, in the present disclosure, the resource to which the HARQ-ACK feedback information is mapped may be determined based on the index and an ID of the terminal.

**Advantageous Effects of Invention**

The purpose of the present disclosure is to provide a method for transmitting a signal in a wireless communication system.

**Brief Description of Drawings**

FIG. 1 illustrates an example of a wireless frame structure used in a wireless communication system.
FIG. 2 illustrates an example of a downlink (DL)/uplink (UL) slot structure in a wireless communication system.
FIG. 3 is a diagram for explaining a physical channel used in a 3GPP system and a typical signal transmission method using the physical channel.
FIG. 4 illustrates an SS/PBCH block for initial cell access in a 3GPP NR system.
FIGS. 5(a) and 5(b) illustrate a procedure for transmitting control information and a control channel in a 3GPP NR system.
FIG. 6 illustrates a control resource set (CORESET) in which a physical downlink control channel (PUCCH) may be transmitted in a 3GPP NR system.
FIG. 7 illustrates a method for configuring a PDCCH search space in a 3GPP NR system.
FIG. 8 is a conceptual diagram illustrating carrier aggregation.
FIG. 9 is a diagram for explaining single carrier communication and multiple carrier communication.
FIG. 10 is a diagram showing an example in which a cross carrier scheduling technique is applied.
FIG. 19 illustrates an example of a procedure of transmitting or receiving HARQ feedback by a UE in groupcast SL communication.
FIG. 20 illustrates an example of a procedure of transmitting or receiving HARQ feedback for a PSCCH and/or a PSSCH.
FIG. 21 illustrates an example of a procedure of transmitting or receiving HARQ feedback for a PSCCH and/or a PSSCH in groupcast SL communication.
FIG. 22 illustrates a downlink channel access procedure according to an embodiment of the present disclosure
FIG. 23 illustrates scheduling uplink transmission according to an embodiment of the present disclosure.
FIG. 24 illustrates an LBT operation process based on FBE according to an embodiment of the present disclosure.
FIG. 25 illustrates an FBE operation according to an embodiment of the present disclosure.

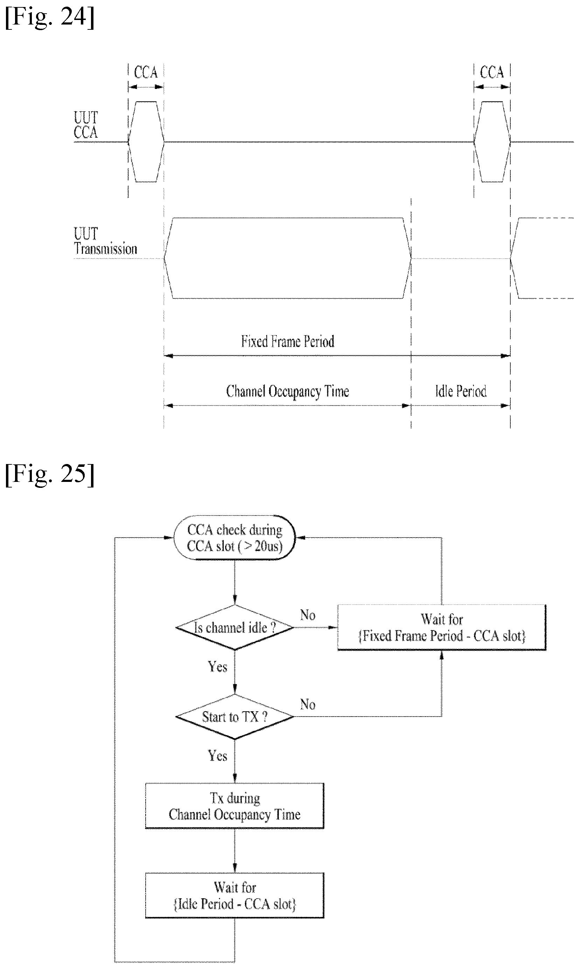

FIG. 25 illustrates an FBE operation according to an embodiment of the present disclosure.

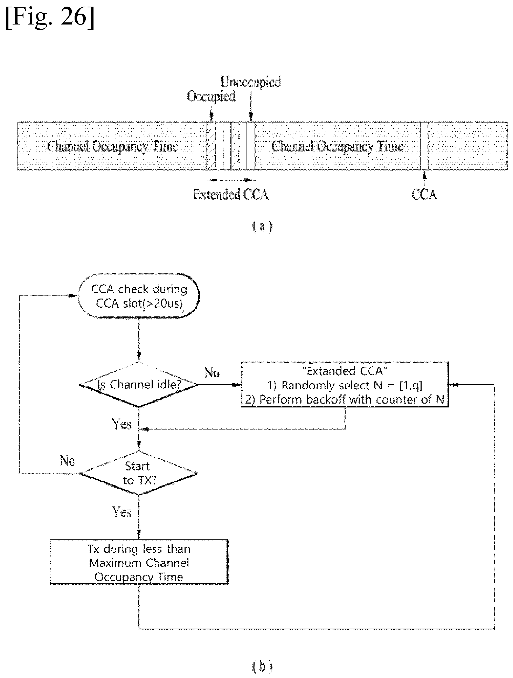

FIG. 26 illustrates an LBE operation according to an embodiment of the present disclosure.

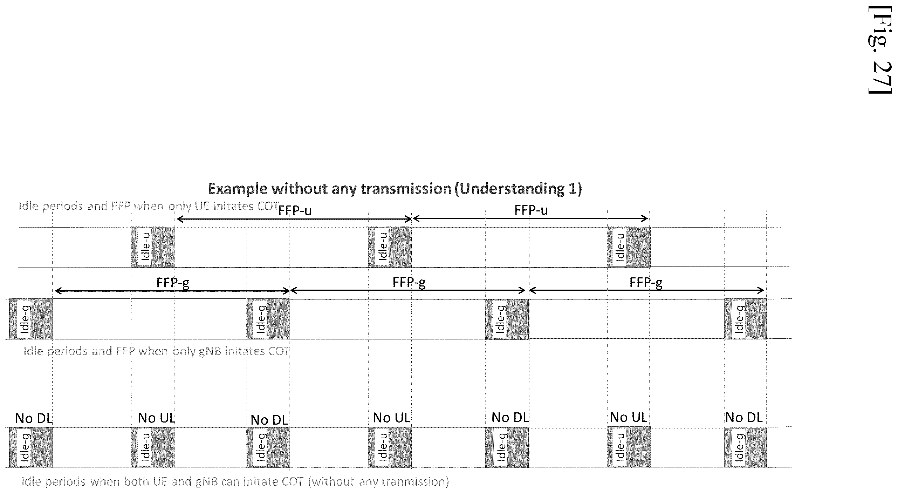

FIGS. 27 to 30 illustrate a method for performing uplink transmission and downlink transmission when different FFPs are configured for a base station and a UE according to an embodiment of the present disclosure.

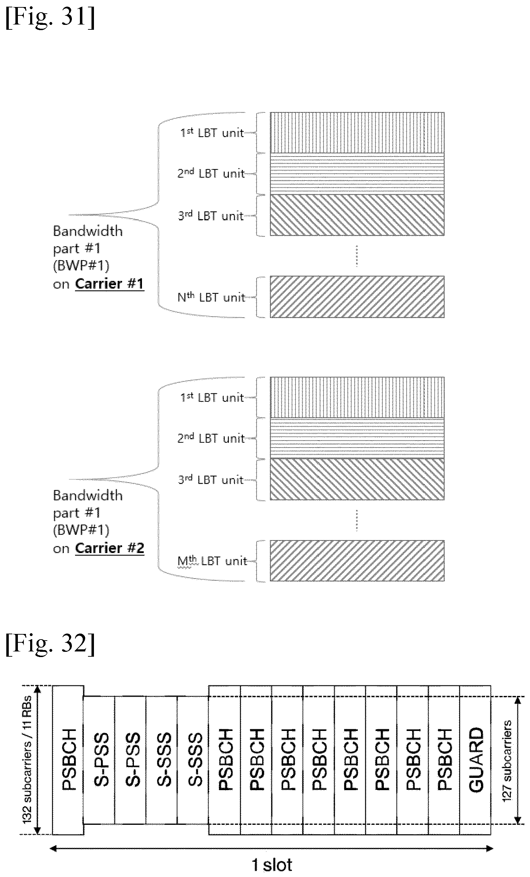

FIG. 31 illustrates a method for configuring a BWP in a carrier according to an embodiment of the present disclosure.
FIG. 32 illustrates an S-SSB block according to an embodiment of the present disclosure.

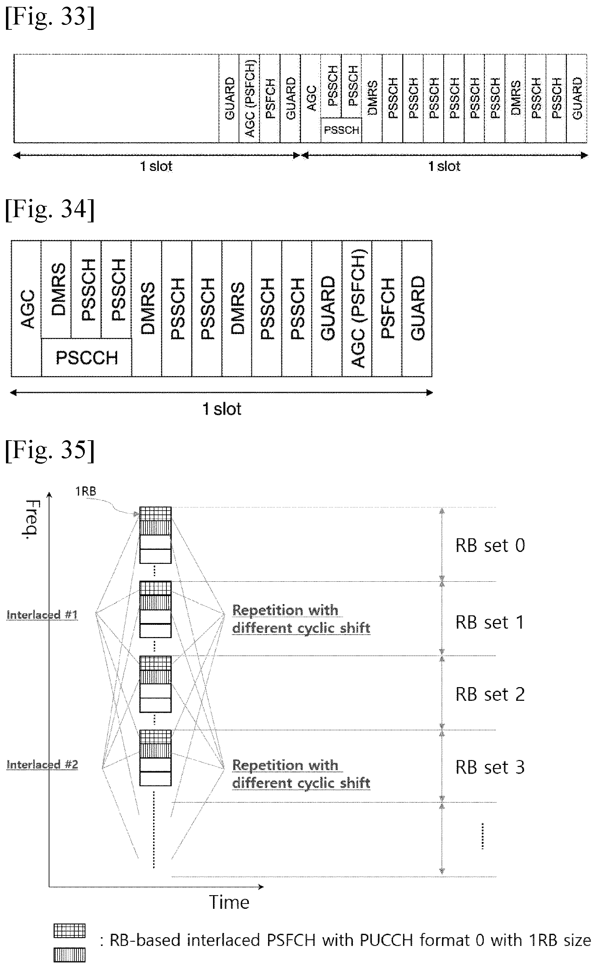

FIGS. 33 and 34 illustrate configuration in a slot according to an embodiment of the present disclosure.
FIGS. 24 to 28 illustrate a channel access method according to the present disclosure.
FIG. 34 illustrates a configuration in a slot of a PSCCH/PSSCH/PSFCH.

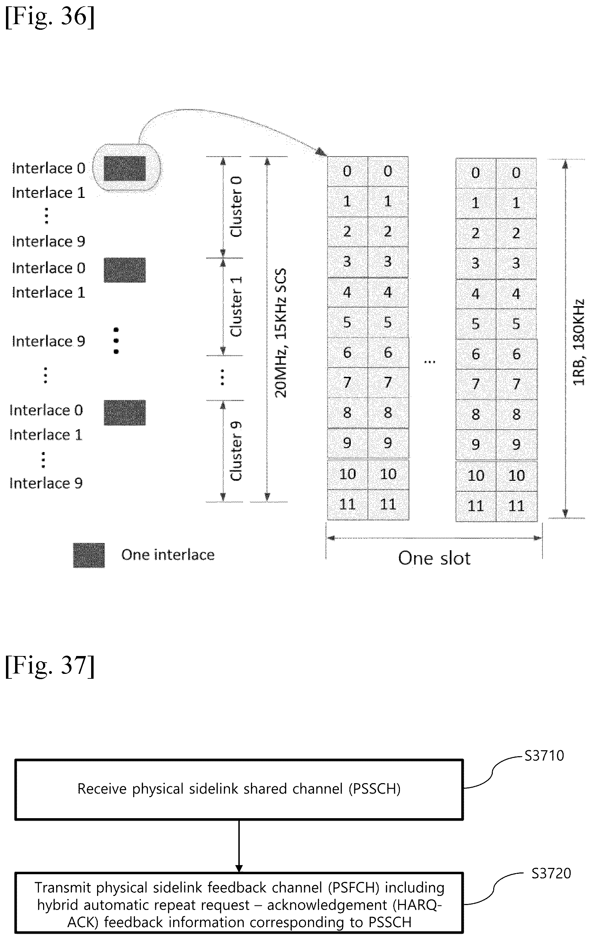

FIGS. 35 and 36 illustrate interlace structures according to an embodiment of the present disclosure.
FIG. 37 is a flowchart illustrating a method for transmitting a PSFCH according to an embodiment of the present disclosure.

**Mode for Carrying out the Invention**

Terms used in the specification adopt general terms which are currently widely used as possible by considering functions in the present disclosure, but the terms may be changed depending on an intention of those skilled in the art, customs, and emergence of new technology. Further, in a specific case, there is a term arbitrarily selected by an applicant and in this case, a meaning thereof will be described in a corresponding description part of the disclosure. Accordingly, it intends to be revealed that a term used in the specification should be analyzed based on not just a name of the term but a substantial meaning of the term and contents throughout the specification.
Throughout this specification and the claims that follow, when it is described that an element is "connected" to another element, the element may be "directly connected" to the other element or "electrically connected" to the other element through a third element. Further, unless explicitly described to the contrary, the word "comprise" will be understood to imply the inclusion of stated elements but not the exclusion of any other elements unless otherwise stated. Moreover, limitations such as "more than or equal to" or "less than or equal to" based on a specific threshold may be appropriately substituted with "more than" or "less than", respectively, in some exemplary embodiments.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), and the like. The CDMA may be implemented by a wireless technology such as universal terrestrial radio access (UTRA) or CDMA2000. The TDMA may be implemented by a wireless technology such as global system for mobile communications (GSM)/general packet radio service (GPRS)/enhanced data rates for GSM evolution (EDGE). The OFDMA may be implemented by a wireless technology such as IEEE 802.11(Wi-Fi), IEEE 802.16(WiMAX), IEEE 802-20, evolved UTRA (E-UTRA), and the like. The UTRA is a part of a universal mobile telecommunication system (UMTS). 3rd generation partnership project (3GPP) long term evolution (LTE) is a part of an evolved UMTS (E-UMTS) using evolved-UMTS terrestrial radio access (E-UTRA) and LTE-advanced (A) is an evolved version of the 3GPP LTE. 3GPP new radio (NR) is a system designed separately from LTE/LTE-A, and is a system for supporting enhanced mobile broadband (eMBB), ultra-reliable and low latency communication (URLLC), and massive machine type communication (mMTC) services, which are requirements of IMT-2020. For the clear description, 3GPP NR is mainly described, but the technical idea of the present disclosure is not limited thereto.

In various embodiments of the present specification, "/" and "," should be interpreted as indicating "and/or". For example, "A/B" can mean "A and/or B". Furthermore, "A, B" can mean "A and/or B". Furthermore, "A/B/C" can mean "at least one of A, B, and/or C". Furthermore, "A, B, C" can mean "at least one of A, B, and/or C".

Furthermore, in various embodiments of the present specification, "or" should be interpreted as meaning "and/or." For example, "A or B" can include "only A," "only B," and/or "both A and B." In other words, in various embodiments of the present specification, "or" should be interpreted as meaning "additionally or alternatively."

Unless otherwise specified herein, the base station may include a next generation node B (gNB) defined in 3GPP NR. Furthermore, unless otherwise specified, a terminal may include a user equipment (UE). Hereinafter, in order to help the understanding of the description, each content is described separately by the embodiments, but each embodiment may be used in combination with each other. In the present specification, the configuration of the UE may indicate a configuration by the base station. In more detail, the base station may configure a value of a parameter used in an operation of the UE or a wireless communication system by transmitting a channel or a signal to the UE.

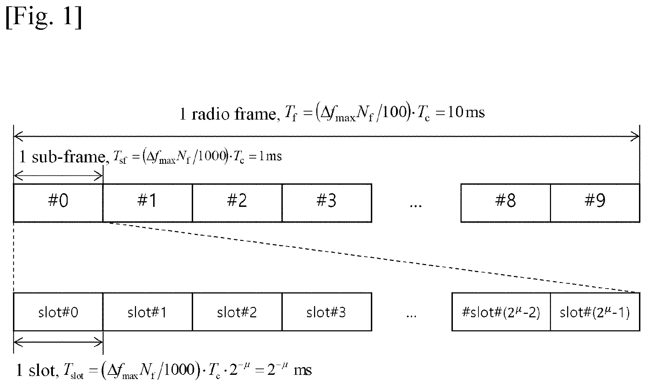

FIG. 1 illustrates an example of a wireless frame structure used in a wireless communication system.

Referring to FIG. 1, the wireless frame (or radio frame) used in the 3GPP NR system may have a length of 10 ms ($\Delta f_{max}N_f$ / 100) * $T_c$). In addition, the wireless frame includes 10 subframes (SFs) having equal sizes. Herein, $\Delta f_{max}=480*10^3$ Hz, $N_f=4096$, $T_c=1/(\Delta f_{ref}*N_{f,ref})$, $\Delta f_{ref}=15*10^3$ Hz, and $N_{f,ref}=2048$. Numbers from 0 to 9 may be respectively allocated to 10 subframes within one wireless frame. Each subframe has a length of 1 ms and may include one or more slots according to a subcarrier spacing. More specifically, in the 3GPP NR system, the subcarrier spacing that may be used is $15*2^\mu$ kHz, and $\mu$ can have a value of $\mu = 0, 1, 2, 3, 4$ as subcarrier spacing configuration. That is, 15 kHz, 30 kHz, 60 kHz, 120 kHz and 240 kHz may be used for subcarrier spacing. One subframe having a length of 1 ms may include $2^\mu$ slots. In this case, the length of each slot is $2^{-\mu}$ ms. Numbers from 0 to $2^\mu-1$ may be respectively allocated to $2^\mu$ slots within one wireless frame. In addition, numbers from 0 to $10*2^\mu-1$ may be respectively allocated to slots within one subframe. The time resource may be distinguished by at least one of a wireless frame number (also referred to as a wireless frame index), a subframe number (also referred to as a subframe index), and a slot number (or a slot index).

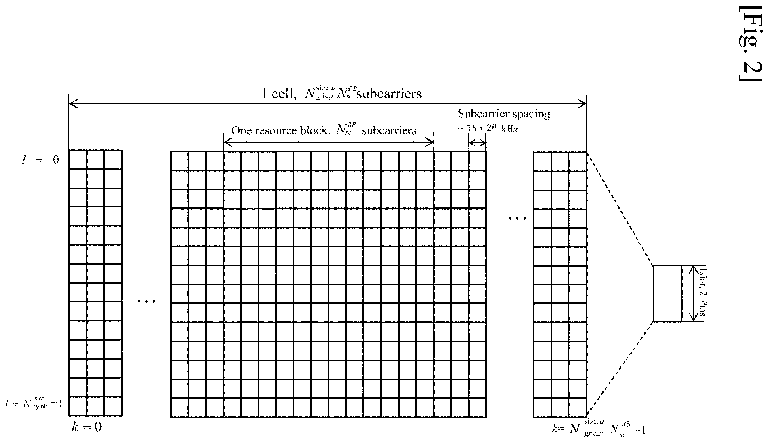

FIG. 2 illustrates an example of a downlink (DL)/uplink (UL) slot structure in a wireless communication system. In particular, FIG. 2 shows the structure of the resource grid of the 3GPP NR system.

There is one resource grid per antenna port. Referring to FIG. 2, a slot includes a plurality of orthogonal frequency division multiplexing (OFDM) symbols in a time domain and includes a plurality of resource blocks (RBs) in a frequency domain. An OFDM symbol also means one symbol section. Unless otherwise specified, OFDM symbols may be referred to simply as symbols. One RB includes 12 consecutive subcarriers in the frequency domain. Referring to FIG. 2, a signal transmitted from each slot may be represented by a resource grid including $N^{size,\mu}_{grid,x}$ * $N^{RB}_{sc}$ subcarriers, and $N^{slot}_{symb}$ OFDM symbols. Here, x = DL when the signal is a DL signal, and x = UL when the signal is an UL signal. $N^{size,\mu}_{grid,x}$ represents the number of resource blocks (RBs) according to the subcarrier spacing constituent $\mu$ (x is DL or UL), and $N^{slot}_{symb}$ represents the number of OFDM symbols in a slot. $N^{RB}_{sc}$ is the number of subcarriers constituting one RB and $N^{RB}_{sc}= 12$. An OFDM symbol may be referred to as a cyclic shift OFDM (CP-OFDM) symbol or a discrete Fourier transform spread OFDM (DFT-s-OFDM) symbol according to a multiple access scheme.

The number of OFDM symbols included in one slot may vary according to the length of a cyclic prefix (CP). For example, in the case of a normal CP, one slot includes 14 OFDM symbols, but in the case of an extended CP, one slot may include 12 OFDM symbols. In a specific embodiment, the extended CP can only be used at 60 kHz subcarrier spacing. In FIG. 2, for convenience of description, one slot is configured with 14 OFDM symbols by way of example, but embodiments of the present disclosure may be applied in a similar manner to a slot having a different number of OFDM symbols. Referring to FIG. 2, each OFDM symbol includes $N^{size,\mu}_{grid,x}$ * $N^{RB}_{sc}$ subcarriers in the frequency domain. The type of subcarrier may be divided into a data subcarrier for data transmission, a reference signal subcarrier for transmission of a reference signal, and a guard band. The carrier frequency is also referred to as the center frequency (fc).

One RB may be defined by $N^{RB}_{sc}$ (e. g., 12) consecutive subcarriers in the frequency domain. For reference, a resource configured with one OFDM symbol and one subcarrier may be referred to as a resource element (RE) or a tone. Therefore, one RB can be configured with $N^{slot}_{symb} * N^{RB}_{sc}$ resource elements. Each resource element in the resource grid can be uniquely defined by a pair of indexes (k, l) in one slot. k may be an index assigned from 0 to $N^{size,\mu}_{grid, x} * N^{RB}_{sc} - 1$ in the frequency domain, and 1 may be an index assigned from 0 to $N^{slot}_{symb} - 1$ in the time domain.

In order for the UE to receive a signal from the base station or to transmit a signal to the base station, the time/frequency of the UE may be synchronized with the time/frequency of the base station. This is because when the base station and the UE are synchronized, the UE can determine the time and frequency parameters necessary for demodulating the DL signal and transmitting the UL signal at the correct time.

Each symbol of a radio frame used in a time division duplex (TDD) or an unpaired spectrum may be configured with at least one of a DL symbol, an UL symbol, and a flexible symbol. A radio frame used as a DL carrier in a frequency division duplex (FDD) or a paired spectrum may be configured with a DL symbol or a flexible symbol, and a radio frame used as a UL carrier may be configured with a UL symbol or a flexible symbol. In the DL symbol, DL transmission is possible, but UL transmission is impossible. In the UL symbol, UL transmission is possible, but DL transmission is impossible. The flexible symbol may be determined to be used as a DL or an UL according to a signal.

Information on the type of each symbol, i.e., information representing any one of DL symbols, UL symbols, and flexible symbols, may be configured with a cell-specific or common radio resource control (RRC) signal. In addition, information on the type of each symbol may additionally be configured with a UE-specific or dedicated RRC signal. The base station informs, by using cell-specific RRC signals, i) the period of cell-specific slot configuration, ii) the number of slots with only DL symbols from the beginning of the period of cell-specific slot configuration, iii) the number of DL symbols from the first symbol of the slot immediately following the slot with only DL symbols, iv) the number of slots with only UL symbols from the end of the period of cell specific slot configuration, and v) the number of UL symbols from the last symbol of the slot immediately before the slot with only the UL symbol. Here, symbols not configured with any one of a UL symbol and a DL symbol are flexible symbols.

When the information on the symbol type is configured with the UE-specific RRC signal, the base station may signal whether the flexible symbol is a DL symbol or an UL symbol in the cell-specific RRC signal. In this case, the UE-specific RRC signal can not change a DL symbol or a UL symbol configured with the cell-specific RRC signal into another symbol type. The UE-specific RRC signal may signal the number of DL symbols among the $N^{slot}_{symb}$ symbols of the corresponding slot for each slot, and the number of UL symbols among the $N^{slot}_{symb}$ symbols of the corresponding slot. In this case, the DL symbol of the slot may be continuously configured with the first symbol to the i-th symbol of the slot. In addition, the UL symbol of the slot may be continuously configured with the j-th symbol to the last symbol of the slot (where i <j). In the slot, symbols not configured with any one of a UL symbol and a DL symbol are flexible symbols.

The type of symbol configured with the above RRC signal may be referred to as a semi-static DL/UL configuration. In the semi-static DL/UL configuration previously configured with RRC signals, the flexible symbol may be indicated as a DL symbol, an UL symbol, or a flexible symbol through dynamic slot format information (SFI) transmitted on a physical DL control channel (PDCCH). In this case, the DL symbol or UL symbol configured with the RRC signal is not changed to another symbol type. Table 1 exemplifies the dynamic SFI that the base station can indicate to the UE.

【Table 1】

| index | Symbol number in a slot | | | | | | | | | | | | | | index | Symbol number in a slot | | | | | | | | | | | | | |
|---|---|---|---|---|---|---|---|---|---|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D | 28 | D | D | D | D | D | D | D | D | D | D | D | D | X | U |
| 1 | U | U | U | U | U | U | U | U | U | U | U | U | U | U | 29 | D | D | D | D | D | D | D | D | D | D | D | X | X | U |
| 2 | X | X | X | X | X | X | X | X | X | X | X | X | X | X | 30 | D | D | D | D | D | D | D | D | D | D | X | X | X | U |
| 3 | D | D | D | D | D | D | D | D | D | D | D | D | D | X | 31 | D | D | D | D | D | D | D | D | D | D | D | X | U | U |
| 4 | D | D | D | D | D | D | D | D | D | D | D | D | X | X | 32 | D | D | D | D | D | D | D | D | D | D | X | X | U | U |
| 5 | D | D | D | D | D | D | D | D | D | D | D | X | X | X | 33 | D | D | D | D | D | D | D | D | D | X | X | X | U | U |
| 6 | D | D | D | D | D | D | D | D | D | D | X | X | X | X | 34 | D | X | U | U | U | U | U | U | U | U | U | U | U | U |
| 7 | D | D | D | D | D | D | D | D | D | X | X | X | X | X | 35 | D | D | X | U | U | U | U | U | U | U | U | U | U | U |
| 8 | X | X | X | X | X | X | X | X | X | X | X | X | X | U | 36 | D | D | D | X | U | U | U | U | U | U | U | U | U | U |
| 9 | X | X | X | X | X | X | X | X | X | X | X | X | U | U | 37 | D | X | X | U | U | U | U | U | U | U | U | U | U | U |
| 10 | X | U | U | U | U | U | U | U | U | U | U | U | U | U | 38 | D | D | X | X | U | U | U | U | U | U | U | U | U | U |
| 11 | X | X | U | U | U | U | U | U | U | U | U | U | U | U | 39 | D | D | D | X | X | U | U | U | U | U | U | U | U | U |
| 12 | X | X | X | U | U | U | U | U | U | U | U | U | U | U | 40 | D | X | X | X | U | U | U | U | U | U | U | U | U | U |
| 13 | X | X | X | X | U | U | U | U | U | U | U | U | U | U | 41 | D | D | X | X | X | U | U | U | U | U | U | U | U | U |
| 14 | X | X | X | X | X | U | U | U | U | U | U | U | U | U | 42 | D | D | D | X | X | X | U | U | U | U | U | U | U | U |
| 15 | X | X | X | X | X | X | U | U | U | U | U | U | U | U | 43 | D | D | D | D | D | D | D | D | D | X | X | X | X | U |
| 16 | D | X | X | X | X | X | X | X | X | X | X | X | X | X | 44 | D | D | D | D | D | D | X | X | X | X | X | X | U | U |
| 17 | D | D | X | X | X | X | X | X | X | X | X | X | X | X | 45 | D | D | D | D | D | D | X | X | U | U | U | U | U | U |
| 18 | D | D | D | X | X | X | X | X | X | X | X | X | X | X | 46 | D | D | D | D | D | X | U | D | D | D | D | D | X | U |
| 19 | D | X | X | X | X | X | X | X | X | X | X | X | X | U | 47 | D | D | X | U | U | U | U | D | D | X | U | U | U | U |
| 20 | D | D | X | X | X | X | X | X | X | X | X | X | X | U | 48 | D | X | U | U | U | U | U | D | X | U | U | U | U | U |
| 21 | D | D | D | X | X | X | X | X | X | X | X | X | X | U | 49 | D | D | D | D | X | X | U | D | D | D | D | X | X | U |
| 22 | D | X | X | X | X | X | X | X | X | X | X | X | U | U | 50 | D | D | X | X | U | U | U | D | D | X | X | U | U | U |
| 23 | D | D | X | X | X | X | X | X | X | X | X | X | U | U | 51 | D | X | X | U | U | U | U | D | X | X | U | U | U | U |
| 24 | D | D | D | X | X | X | X | X | X | X | X | X | U | U | 52 | D | X | X | X | X | X | U | D | X | X | X | X | X | U |
| 25 | D | X | X | X | X | X | X | X | X | X | X | U | U | U | 53 | D | D | X | X | X | X | U | D | D | X | X | X | X | U |
| 26 | D | D | X | X | X | X | X | X | X | X | X | U | U | U | 54 | X | X | X | X | X | X | X | D | D | D | D | D | D | D |
| 27 | D | D | D | X | X | X | X | X | X | X | X | U | U | U | 55 | D | D | X | X | X | U | U | U | D | D | D | D | D | D |
| 56~ 255 | Reserved | | | | | | | | | | | | | | | | | | | | | | | | | | | | |

In Table 1, D denotes a DL symbol, U denotes a UL symbol, and X denotes a flexible symbol. As shown in Table 1, up to two DL/UL switching in one slot may be allowed.

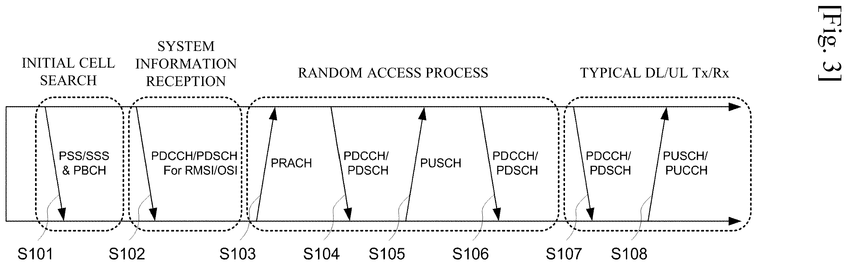

FIG. 3 is a diagram for explaining a physical channel used in a 3GPP system (e.g., NR) and a typical signal transmission method using the physical channel.

If the power of the UE is turned on or the UE camps on a new cell, the UE performs an initial cell search (S101). Specifically, the UE may synchronize with the BS in the initial cell search. For this, the UE may receive a primary synchronization signal (PSS) and a secondary synchronization signal (SSS) from the base station to synchronize with the base station, and obtain information such as a cell ID. Thereafter, the UE can receive the physical broadcast channel from the base station and obtain the broadcast information in the cell.

Upon completion of the initial cell search, the UE receives a physical downlink shared channel (PDSCH) according to the physical downlink control channel (PDCCH) and information in the PDCCH, so that the UE can obtain more specific system information than the system information obtained through the initial cell search (S102). Herein, the system information received by the UE is cell-common system information for normal operating of the UE in a physical layer in radio resource control (RRC) and is referred to remaining system information, or system information block (SIB) 1 is called.

When the UE initially accesses the base station or does not have radio resources for signal transmission (i.e. the UE at RRC_IDLE mode), the UE may perform a random access procedure on the base station (operations S103 to S106). First, the UE can transmit a preamble through a physical random access channel (PRACH) (S103) and receive a response message for the preamble from the base station through the PDCCH and the corresponding PDSCH (S104). When a valid random access response message is received by the UE, the UE transmits data including the identifier of the UE and the like to the base station through a physical uplink shared channel (PUSCH) indicated by the UL grant transmitted through the PDCCH from the base station (S105). Next, the UE waits for reception of the PDCCH as an indication of the base station for collision resolution. If the UE successfully receives the PDCCH through the identifier of the UE (S106), the random access process is terminated. The UE may obtain UE-specific system information for normal operating of the UE in the physical layer in RRC layer during a random access process. When the UE obtain the UE-specific system information, the UE enter RRC connecting mode (RRC_CONNECTED mode).

The RRC layer is used for generating or managing message for controlling connection between the UE and radio access network (RAN). In more detail, the base station and the UE, in the RRC layer, may perform broadcasting cell system information required by every UE in the cell, managing mobility and handover, measurement report of the UE, storage management including UE capability management and device management. In general, the RRC signal is not changed and maintained quite long interval since a period of an update of a signal delivered in the RRC layer is longer than a transmission time interval (TTI) in physical layer.

After the above-described procedure, the UE receives PDCCH/PDSCH (S107) and transmits a physical uplink shared channel (PUSCH)/physical uplink control channel (PUCCH) (S108) as a general UL/DL signal transmission procedure. In particular, the UE may receive downlink control information (DCI) through the PDCCH. The DCI may include control information such as resource allocation information for the UE. Also, the format of the DCI may vary depending on the intended use. The uplink control information (UCI) that the UE transmits to the base station through UL includes a DL/UL ACK/NACK signal, a channel quality indicator (CQI), a precoding matrix index (PMI), a rank indicator (RI), and the like. Here, the CQI, PMI, and RI may be included in channel state information (CSI). In the 3GPP NR system, the UE may transmit control information such as HARQ-ACK and CSI described above through the PUSCH and/or PUCCH.

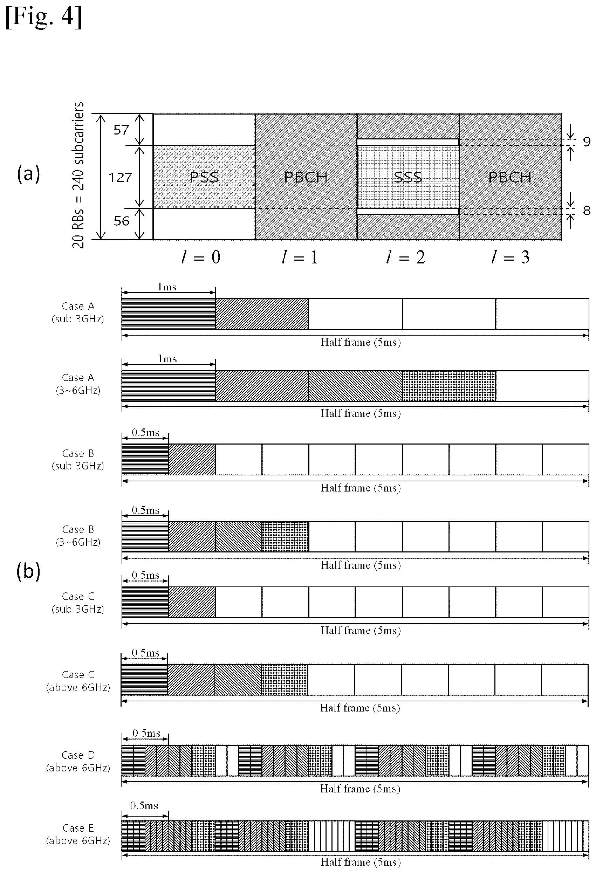

FIG. 4 illustrates an SS/PBCH block for initial cell access in a 3GPP NR system.

When the power is turned on or wanting to access a new cell, the UE may obtain time and frequency synchronization with the cell and perform an initial cell search procedure. The UE may detect a physical cell identity NcellID of the cell during a cell search procedure. For this, the UE may receive a synchronization signal, for example, a primary synchronization signal (PSS) and a secondary synchronization signal (SSS), from a base station, and synchronize with the base station. In this case, the UE can obtain information such as a cell identity (ID).

Referring to FIG. 4(a), a synchronization signal (SS) will be described in more detail. The synchronization signal can be classified into PSS and SSS. The PSS may be used to obtain time region synchronization and/or frequency region synchronization, such as OFDM symbol synchronization and slot synchronization. The SSS can be used to obtain frame synchronization and cell group ID. Referring to FIG. 4(a) and Table 2, the SS/PBCH block can be configured with consecutive 20 RBs (= 240 subcarriers) in the frequency axis, and can be configured with consecutive 4 OFDM symbols in the time axis. In this case, in the SS/PBCH block, the PSS is transmitted in the first OFDM symbol and the SSS is transmitted in the third OFDM symbol through the 56th to 182th subcarriers. Here, the lowest subcarrier index of the SS/PBCH block is numbered from 0. In the first OFDM symbol in which the PSS is transmitted, the base station does not transmit a signal through the remaining subcarriers, i.e., 0th to 55th and 183th to 239th subcarriers. In addition, in the third OFDM symbol in which the SSS is transmitted, the base station does not transmit a signal through 48th to 55th and 183th to 191th subcarriers. The base station transmits a physical broadcast channel (PBCH) through the remaining RE except for the above signal in the SS/PBCH block.

[Table 2]

| Channel or signal | OFDM symbol number / relative to the start of an SS/PBCH block | Subcarrier number $k$ relative to the start of an SS/ PBCH block |
|---|---|---|
| PSS | 0 | 56, 57, ...,182 |
| SSS | 2 | 56, 57, ...,182 |
| Set to 0 | 0 | 0, 1, ..., 55, 183, 184, ..., 239 |
| | 2 | 48, 49, ..., 55, 183, 184, ..., 191 |
| PBCH | 1,3 | 0, 1, ..., 239 |
| | 2 | 0, 1, ..., 47 192, 193, ..., 239 |
| DM-RS for PBCH | 1,3 | 0+v,4+v,8+v,...236+v |
| | 2 | 0+v,4+v,8+v,...44+v 192+v,196+v,...236+v |

The SS allows a total of 1008 unique physical layer cell IDs to be grouped into 336 physical-layer cell-identifier groups, each group including three unique identifiers, through a combination of three PSSs and SSSs, specifically, such that each physical layer cell ID is to be only a part of one physical-layer cell-identifier group. Therefore, the physical layer cell ID $N^{cell}_{ID} = 3N^{(1)}_{ID} + N^{(2)}_{ID}$ can be uniquely defined by the index $N^{(1)}_{ID}$ ranging from 0 to 335 indicating a physical-layer cell-identifier group and the index $N^{(2)}_{ID}$ ranging from 0 to 2 indicating a physical-layer identifier in the physical-layer cell-identifier group. The UE may detect the PSS and identify one of the three unique physical-layer identifiers. In addition, the UE can detect the SSS and identify one of the 336 physical layer cell IDs associated with the physical-layer identifier. In this case, the sequence $d_{PSS}(n)$ of the PSS is as follows.

$$d_{\text{PSS}}(n) = 1 - 2x(m)$$

$$m = \left(n + 43N^{(2)}_{\text{ID}}\right)\bmod 127$$

$$0 \leq n < 127$$

Here, $x(i + 7) = (x(i + 4) + x(i))\bmod 2$

$[x(6)\ x(5)\ x(4)\ x(3)\ x(2)\ x(1)\ x(0)] = [1\ 1\ 1\ 0\ 1\ 1\ 0]$ and is given as

Further, the sequence dSSS(n) of the SSS is as follows.

$$d_{\text{SSS}}(n) = \left[1 - 2x_0\left((n + m_0)\bmod 127\right)\right]\left[1 - 2x_1\left((n + m_1)\bmod 127\right)\right]$$

$$m_0 = 15\left\lfloor \frac{N^{(1)}_{\text{ID}}}{112} \right\rfloor + 5N^{(2)}_{\text{ID}}$$

$$m_1 = N^{(1)}_{\text{ID}} \bmod 112$$

$$0 \leq n < 127$$

$$x_0(i + 7) = \left(x_0(i + 4) + x_0(i)\right)\bmod 2$$

Here, $x_1(i+7) = (x_1(i + 1) + x_1(i))\bmod 2$ and is given as

$$[x_0(6)\ \ x_0(5)\ \ x_0(4)\ \ x_0(3)\ \ x_0(2)\ \ x_0(1)\ \ x_0(0)] = [0\ \ 0\ \ 0\ \ 0\ \ 0\ \ 0\ \ 1]$$

$$[x_1(6)\ \ x_1(5)\ \ x_1(4)\ \ x_1(3)\ \ x_1(2)\ \ x_1(1)\ \ x_1(0)] = [0\ \ 0\ \ 0\ \ 0\ \ 0\ \ 0\ \ 1]$$

A radio frame with a 10 ms length may be divided into two half frames with a 5 ms length. Referring to FIG. 4(b), a description will be made of a slot in which SS/PBCH blocks are transmitted in each half frame. A slot in which the SS/PBCH block is transmitted may be any one of the cases A, B, C, D, and E. In the case A, the subcarrier spacing is 15 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case B, the subcarrier spacing is 30 kHz and the starting time point of the SS/PBCH block is {4, 8, 16, 20} + 28*n. In this case, n = 0 at a carrier frequency of 3 GHz or less. In addition, it may be n = 0, 1 at carrier frequencies above 3 GHz and below 6 GHz. In the case C, the subcarrier spacing is 30 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case D, the subcarrier spacing is 120 kHz and the starting time point of the SS/PBCH block is the ({4, 8, 16, 20} + 28*n)-th symbol. In this case, at a carrier frequency of 6 GHz or more, n = 0, 1, 2, 3, 5, 6, 7, 8, 10, 11, 12, 13, 15, 16, 17, 18. In the case E, the subcarrier spacing is 240 kHz and the starting time point of the SS/PBCH block is the ({8, 12, 16, 20, 32, 36, 40, 44} + 56*n)-th symbol. In this case, at a carrier frequency of 6 GHz or more, n = 0, 1, 2, 3, 5, 6, 7, 8.

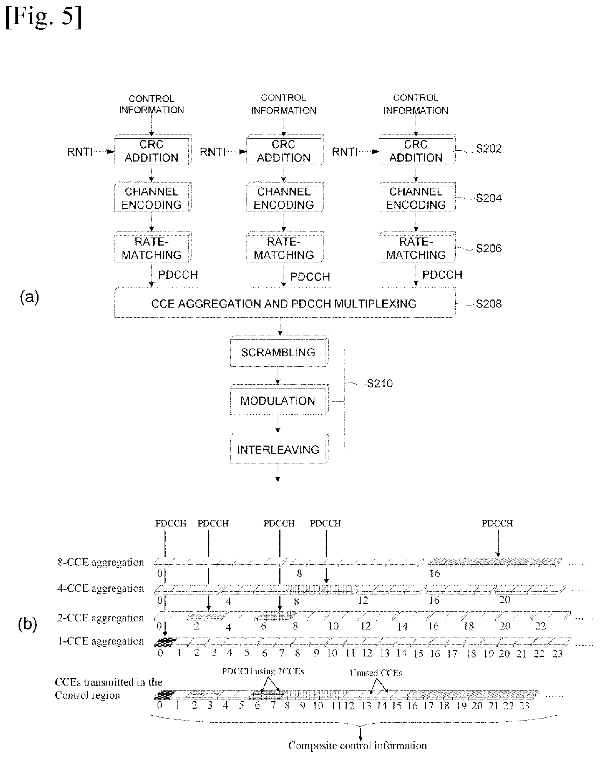

FIG. 5 illustrates a procedure for transmitting control information and a control channel in a 3GPP NR system. Referring to FIG. 5(a), the base station may add a cyclic redundancy check (CRC) masked (e.g., an XOR operation) with a radio network temporary identifier (RNTI) to control information (e.g., downlink control information (DCI)) (S202). The base station may scramble the CRC with an RNTI value determined according to the purpose/target of each control information. The common RNTI used by one or more UEs can include at least one of a system information RNTI (SI-RNTI), a paging RNTI (P-RNTI), a random access RNTI (RA-RNTI), and a transmit power control RNTI (TPC-RNTI). In addition, the UE-specific RNTI may include at least one of a cell temporary RNTI (C-RNTI), and the CS-RNTI. Thereafter, the base station may perform rate-matching (S206) according to the amount of resource(s) used for PDCCH transmission after performing channel encoding (e.g., polar coding) (S204). Thereafter, the base station may multiplex the DCI(s) based on the control channel element (CCE) based PDCCH structure (S208). In addition, the base station may apply an additional process (S210) such as scrambling, modulation (e.g., QPSK), interleaving, and the like to the multiplexed DCI(s), and then map the DCI(s) to the resource to be transmitted. The CCE is a basic resource unit for the PDCCH, and one CCE may include a plurality (e.g., six) of resource element groups (REGs). One REG may be configured with a plurality (e.g., 12) of REs. The number of CCEs used for one PDCCH may be defined as an aggregation level. In the 3GPP NR system, an aggregation level of 1, 2, 4, 8, or 16 may be used. FIG. 5B is a diagram related to a CCE aggregation level and the multiplexing of a PDCCH and illustrates the type of a CCE aggregation level used for one PDCCH and CCE(s) transmitted in the control area according thereto.

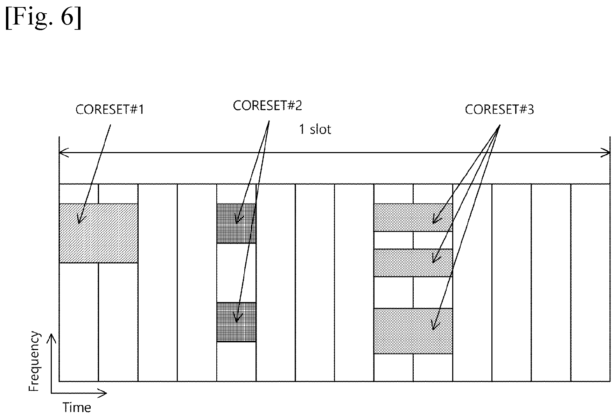

FIG. 6 illustrates a control resource set (CORESET) in which a physical downlink control channel (PDCCH) may be transmitted in a 3GPP NR system.

The CORESET is a time-frequency resource in which PDCCH, that is, a control signal for the UE, is transmitted. In addition, a search space to be described later may be mapped to one CORESET. Therefore, the UE may monitor the time-frequency region designated as CORESET instead of monitoring all frequency bands for PDCCH reception, and decode the PDCCH mapped to CORESET. The base station may configure one or more CORESETs for each cell to the UE. The CORESET may be configured with up to three consecutive symbols on the time axis. In addition, the CORESET may be configured in units of six consecutive PRBs on the frequency axis. In the embodiment of FIG. 5, CORESET#1 is configured with consecutive PRBs, and CORESET#2 and CORESET#3 are configured with discontinuous PRBs. The CORESET can be located in any symbol in the slot. For example, in the embodiment of FIG. 5, CORESET#1 starts at the first symbol of the slot, CORESET#2 starts at the fifth symbol of the slot, and CORESET#9 starts at the ninth symbol of the slot.

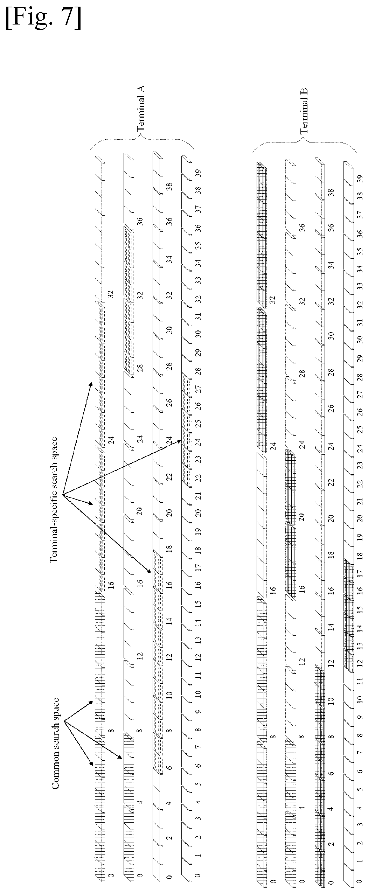

FIG. 7 illustrates a method for setting a PDCCH search space in a 3GPP NR system.

In order to transmit the PDCCH to the UE, each CORESET may have at least one search space. In the embodiment of the present disclosure, the search space is a set of all time-frequency resources (hereinafter, PDCCH candidates) through which the PDCCH of the UE is capable of being transmitted. The search space may include a common search space that the UE of the 3GPP NR is required to commonly search and a UE-specific or a UE-specific search space that a specific UE is required to search. In the common search space, UE may monitor the PDCCH that is set so that all UEs in the cell belonging to the same base station commonly search. In addition, the UE-specific search space may be set for each UE so that UEs monitor the PDCCH allocated to each UE at different search space position according to the UE. In the case of the UE-specific search space, the search space between the UEs may be partially overlapped and allocated due to the limited control area in which the PDCCH may be allocated. Monitoring the PDCCH includes blind decoding for PDCCH candidates in the search space. When the blind decoding is successful, it may be expressed that the PDCCH is (successfully) detected/received and when the blind decoding fails, it may be expressed that the PDCCH is not detected/not received, or is not successfully detected/received.

For convenience of explanation, a PDCCH scrambled with a group common (GC) RNTI previously known to one or more UEs so as to transmit DL control information to the one or more UEs is referred to as a group common (GC) PDCCH or a common PDCCH. In addition, a PDCCH scrambled with a specific-terminal RNTI that a specific UE already knows so as to transmit UL scheduling information or DL scheduling information to the specific UE is referred to as a specific-UE PDCCH. The common PDCCH may be included in a common search space, and the UE-specific PDCCH may be included in a common search space or a UE-specific PDCCH.

The base station may signal each UE or UE group through a PDCCH about information (i.e., DL Grant) related to resource allocation of a paging channel (PCH) and a downlink-shared channel (DL-SCH) that are a transmission channel or information (i.e., UL grant) related to resource allocation of a uplink-shared channel (UL-SCH) and a hybrid automatic repeat request (HARQ). The base station may transmit the PCH transport block and the DL-SCH transport block through the PDSCH. The base station may transmit data excluding specific control information or specific service data through the PDSCH. In addition, the UE may receive data excluding specific control information or specific service data through the PDSCH.

The base station may include, in the PDCCH, information on to which UE (one or a plurality of UEs) PDSCH data is transmitted and how the PDSCH data is to be received and decoded by the corresponding UE, and transmit the PDCCH. For example, it is assumed that the DCI transmitted on a specific PDCCH is CRC masked with an RNTI of "A", and the DCI indicates that PDSCH is allocated to a radio resource (e.g., frequency location) of "B" and indicates transmission format information (e.g., transport block size, modulation scheme, coding information, etc.) of "C". The UE monitors the PDCCH using the RNTI information that the UE has. In this case, if there is a UE which performs blind decoding the PDCCH using the "A" RNTI, the UE receives the PDCCH, and receives the PDSCH indicated by "B" and "C" through the received PDCCH information.

Table 3 shows an embodiment of a physical uplink control channel (PUCCH) used in a wireless communication system.

[Table 3]

| PUCCH format | Length in OFDM symbols | Number of bits |
|:---:|:---:|:---:|
| 0 | 1 - 2 | $\leq 2$ |
| 1 | 4 - 14 | $\leq 2$ |
| 2 | 1 - 2 | $> 2$ |
| 3 | 4 - 14 | $> 2$ |
| 4 | 4 - 14 | $> 2$ |

The PUCCH may be used to transmit the following UL control information (UCI).

Scheduling Request (SR): Information used for requesting a UL UL-SCH resource.

HARQ-ACK: A Response to PDCCH (indicating DL SPS release) and/or a response to DL transport block (TB) on PDSCH. HARQ-ACK indicates whether information transmitted on the PDCCH or PDSCH is received. The HARQ-ACK response includes positive ACK (simply ACK), negative ACK (hereinafter NACK), Discontinuous Transmission (DTX), or NACK/DTX. Here, the term HARQ-ACK is used mixed with HARQ-ACK/NACK and ACK/NACK. In general, ACK may be represented by bit value 1 and NACK may be represented by bit value 0.

Channel State Information (CSI): Feedback information on the DL channel. The UE generates it based on the CSI-Reference Signal (RS) transmitted by the base station. Multiple Input Multiple Output (MIMO)-related feedback information includes a Rank Indicator (RI) and a Precoding Matrix Indicator (PMI). CSI can be divided into CSI part 1 and CSI part 2 according to the information indicated by CSI.

In the 3GPP NR system, five PUCCH formats may be used to support various service scenarios, various channel environments, and frame structures.

PUCCH format 0 is a format capable of delivering 1-bit or 2-bit HARQ-ACK information or SR. PUCCH format 0 can be transmitted through one or two OFDM symbols on the time axis and one PRB on the frequency axis. When PUCCH format 0 is transmitted in two OFDM symbols, the same sequence on the two symbols may be transmitted through different RBs. In this case, the sequence may be a sequence cyclic shifted (CS) from a base sequence used in PUCCH format 0. Through this, the UE may obtain a frequency diversity gain. In more detail, the UE may determine a cyclic shift (CS) value $m_{cs}$ according to $M_{bit}$ bit UCI ($M_{bit}$ = 1 or 2). In addition, the base sequence having the length of 12 may be transmitted by mapping a cyclic shifted sequence based on a predetermined CS value $m_{cs}$ to one OFDM symbol and 12 REs of one RB. When the number of cyclic shifts available to the UE is 12 and $M_{bit}$ = 1, 1 bit UCI 0 and 1 may be mapped to two cyclic shifted sequences having a difference of 6 in the cyclic shift value, respectively. In addition, when $M_{bit}$ = 2, 2 bit UCI 00, 01, 11, and 10 may be mapped to four cyclic shifted sequences having a difference of 3 in cyclic shift values, respectively.

PUCCH format 1 may deliver 1-bit or 2-bit HARQ-ACK information or SR. PUCCH format 1 may be transmitted through consecutive OFDM symbols on the time axis and one PRB on the frequency axis. Here, the number of OFDM symbols occupied by PUCCH format 1 may be one of 4 to 14. More specifically, UCI, which is $M_{bit}$ = 1, may be BPSK-modulated. The UE may modulate UCI, which is $M_{bit}$ = 2, with quadrature phase shift keying (QPSK). A signal is obtained by multiplying a modulated complex valued symbol d(0) by a sequence of length 12. In this case, the sequence may be a base sequence used for PUCCH format 0. The UE spreads the even-numbered OFDM symbols to which PUCCH format 1 is allocated through the time axis orthogonal cover code (OCC) to transmit the obtained signal. PUCCH format 1 determines the maximum number of different UEs multiplexed in the one RB according to the length of the OCC to be used. A demodulation reference signal (DMRS) may be spread with OCC and mapped to the odd-numbered OFDM symbols of PUCCH format 1.

PUCCH format 2 may deliver UCI exceeding 2 bits. PUCCH format 2 may be transmitted through one or two OFDM symbols on the time axis and one or a plurality of RBs on the frequency axis. When PUCCH format 2 is transmitted in two OFDM symbols, the sequences which are transmitted in different RBs through the two OFDM symbols may be same each other. Here, the sequence may be a plurality of modulated complex valued symbols d(0),..., d($M_{symbol}$-1). Here, $M_{symbol}$ may be $M_{bit}$/2. Through this, the UE may obtain a frequency diversity gain. More specifically, $M_{bit}$ bit UCI ($M_{bit}$>2) is bit-level scrambled, QPSK modulated, and mapped to RB(s) of one or two OFDM symbol(s). Here, the number of RBs may be one of 1 to 16.

PUCCH format 3 or PUCCH format 4 may deliver UCI exceeding 2 bits. PUCCH format 3 or PUCCH format 4 may be transmitted through consecutive OFDM symbols on the time axis and one PRB on the frequency axis. The number of OFDM symbols occupied by PUCCH format 3 or PUCCH format 4 may be one of 4 to 14. Specifically, the UE modulates $M_{bit}$ bits UCI (Mbit> 2) with $\pi/2$-Binary Phase Shift Keying (BPSK) or QPSK to generate a complex valued symbol d(0) to d($M_{symb}$-1). Here, when using $\pi/2$-BPSK, $M_{symb} = M_{bit}$, and when using QPSK, $M_{symb} = M_{bit}/2$. The UE may not apply block-unit spreading to the PUCCH format 3. However, the UE may apply block-unit spreading to one RB (i.e., 12 subcarriers) using PreDFT-OCC of a length of 12 such that PUCCH format 4 may have two or four multiplexing capacities. The UE performs transmit precoding (or DFT-precoding) on the spread signal and maps it to each RE to transmit the spread signal.

In this case, the number of RBs occupied by PUCCH format 2, PUCCH format 3, or PUCCH format 4 may be determined according to the length and maximum code rate of the UCI transmitted by the UE. When the UE uses PUCCH format 2, the UE may transmit HARQ-ACK information and CSI information together through the PUCCH. When the number of RBs that the UE may transmit is greater than the maximum number of RBs that PUCCH format 2, or PUCCH format 3, or PUCCH format 4 may use, the UE may transmit only the remaining UCI information without transmitting some UCI information according to the priority of the UCI information.

PUCCH format 1, PUCCH format 3, or PUCCH format 4 may be configured through the RRC signal to indicate frequency hopping in a slot. When frequency hopping is configured, the index of the RB to be frequency hopped may be configured with an RRC signal. When PUCCH format 1, PUCCH format 3, or PUCCH format 4 is transmitted through N OFDM symbols on the time axis, the first hop may have floor (N/2) OFDM symbols and the second hop may have ceiling(N/2) OFDM symbols.

PUCCH format 1, PUCCH format 3, or PUCCH format 4 may be configured to be repeatedly transmitted in a plurality of slots. In this case, the number K of slots in which the PUCCH is repeatedly transmitted may be configured by the RRC signal. The repeatedly transmitted PUCCHs must start at an OFDM symbol of the constant position in each slot, and have the constant length. When one OFDM symbol among OFDM symbols of a slot in which a UE should transmit a PUCCH is indicated as a DL symbol by an RRC signal, the UE may not transmit the PUCCH in a corresponding slot and delay the transmission of the PUCCH to the next slot to transmit the PUCCH.

Meanwhile, in the 3GPP NR system, a UE may perform transmission/reception using a bandwidth equal to or less than the bandwidth of a carrier (or cell). For this, the UE may receive the Bandwidth part (BWP) configured with a continuous bandwidth of some of the carrier's bandwidth. A UE operating according to TDD or operating in an unpaired spectrum can receive up to four DL/UL BWP pairs in one carrier (or cell). In addition, the UE may activate one DL/UL BWP pair. A UE operating according to FDD or operating in paired spectrum can receive up to four DL BWPs on a DL carrier (or cell) and up to four UL BWPs on a UL carrier (or cell). The UE may activate one DL BWP and one UL BWP for each carrier (or cell). The UE may not perform reception or transmission in a time-frequency resource other than the activated BWP. The activated BWP may be referred to as an active BWP.

The base station may indicate the activated BWP among the BWPs configured by the UE through downlink control information (DCI). The BWP indicated through the DCI is activated and the other configured BWP(s) are deactivated. In a carrier (or cell) operating in TDD, the base station may include, in the DCI for scheduling PDSCH or PUSCH, a bandwidth part indicator (BPI) indicating the BWP to be activated to change the DL/UL BWP pair of the UE. The UE may receive the DCI for scheduling the PDSCH or PUSCH and may identify the DL/UL BWP pair activated based on the BPI. For a DL carrier (or cell) operating in an FDD, the base station may include a BPI indicating the BWP to be activated in the DCI for scheduling PDSCH so as to change the DL BWP of the UE. For a UL carrier (or cell) operating in an FDD, the base station may include a BPI indicating the BWP to be activated in the DCI for scheduling PUSCH so as to change the UL BWP of the UE.

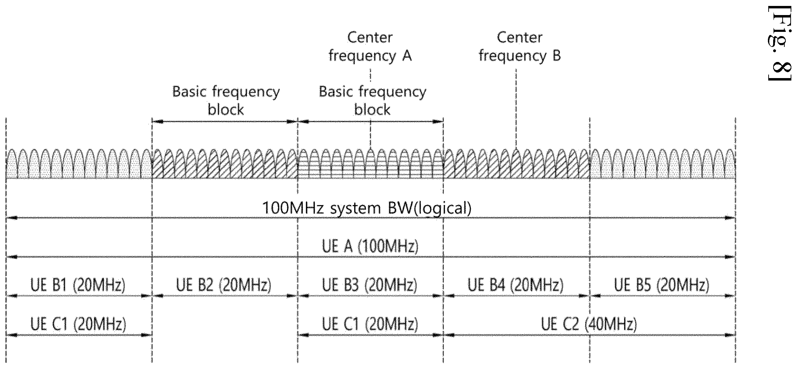

FIG. 8 is a conceptual diagram illustrating carrier aggregation.

The carrier aggregation is a method in which the UE uses a plurality of frequency blocks or cells (in the logical sense) configured with UL resources (or component carriers) and/or DL resources (or component carriers) as one large logical frequency band in order for a wireless communication system to use a wider frequency band. One component carrier may also be referred to as a term called a Primary cell (PCell) or a Secondary cell (SCell), or a Primary SCell (PScell). However, hereinafter, for convenience of description, the term "component carrier" is used.

Referring to FIG. 8, as an example of a 3GPP NR system, the entire system band may include up to 16 component carriers, and each component carrier may have a bandwidth of up to 400 MHz. The component carrier may include one or more physically consecutive subcarriers. Although it is shown in FIG. 8 that each of the component carriers has the same bandwidth, this is merely an example, and each component carrier may have a different bandwidth. Also, although each component carrier is shown as being adjacent to each other in the frequency axis, the drawings are shown in a logical concept, and each component carrier may be physically adjacent to one another, or may be spaced apart.

Different center frequencies may be used for each component carrier. Also, one common center frequency may be used in physically adjacent component carriers. Assuming that all the component carriers are physically adjacent in the embodiment of FIG. 8, center frequency A may be used in all the component carriers. Further, assuming that the respective component carriers are not physically adjacent to each other, center frequency A and the center frequency B can be used in each of the component carriers.

When the total system band is extended by carrier aggregation, the frequency band used for communication with each UE can be defined in units of a component carrier. UE A may use 100 MHz, which is the total system band, and performs communication using all five component carriers. UEs $B_1 \sim B_5$ can use only a 20 MHz bandwidth and perform communication using one component carrier. UEs $C_1$ and $C_2$ may use a 40 MHz bandwidth and perform communication using two component carriers, respectively. The two component carriers may be logically/physically adjacent or non-adjacent. UE $C_1$ represents the case of using two non-adjacent component carriers, and UE $C_2$ represents the case of using two adjacent component carriers.

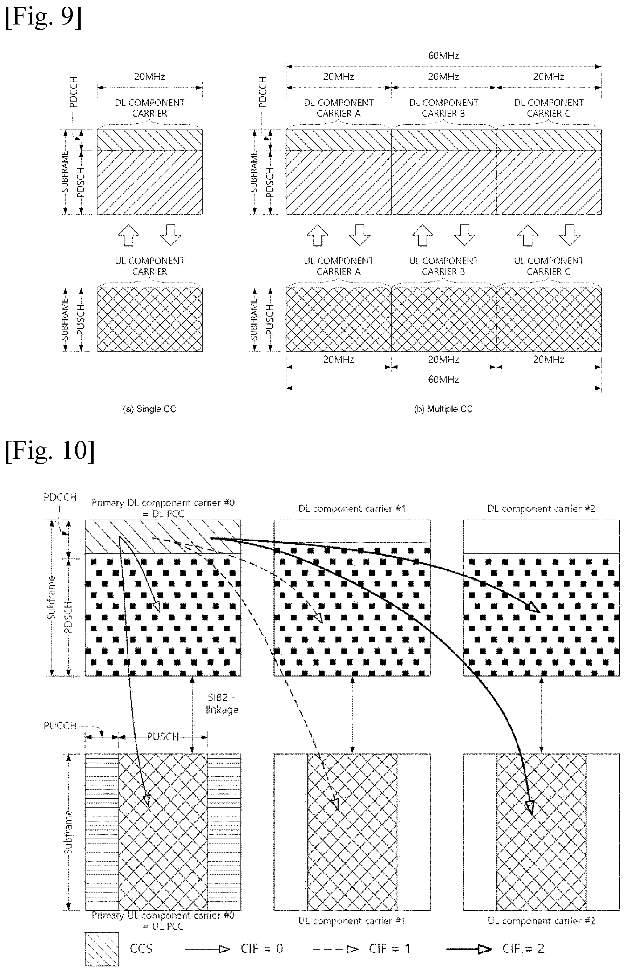

FIG. 9 is a drawing for explaining single carrier communication and multiple carrier communication. Particularly, FIG. 9(a) shows a single carrier subframe structure and FIG. 9(b) shows a multi-carrier subframe structure.

Referring to FIG. 9(a), in an FDD mode, a general wireless communication system may perform data transmission or reception through one DL band and one UL band corresponding thereto. In another specific embodiment, in a TDD mode, the wireless communication system may divide a radio frame into a UL time unit and a DL time unit in a time region, and perform data transmission or reception through a UL/DL time unit. Referring to FIG. 9(b), three 20 MHz component carriers (CCs) can be aggregated into each of UL and DL, so that a bandwidth of 60 MHz can be supported. Each CC may be adjacent or non-adjacent to one another in the frequency region. FIG. 9(b) shows a case where the bandwidth of the UL CC and the bandwidth of the DL CC are the same and symmetric, but the bandwidth of each CC can be determined independently. In addition, asymmetric carrier aggregation with different number of UL CCs and DL CCs is possible. A DL/UL CC allocated/configured to a specific UE through RRC may be called as a serving DL/UL CC of the specific UE.

The base station may perform communication with the UE by activating some or all of the serving CCs of the UE or deactivating some CCs. The base station can change the CC to be activated/deactivated, and change the number of CCs to be activated/deactivated. If the base station allocates a CC available for the UE as to be cell-specific or UE-specific, at least one of the allocated CCs can be deactivated, unless the CC allocation for the UE is completely reconfigured or the UE is handed over. One CC that is not deactivated by the UE is called as a Primary CC (PCC) or a primary cell (PCell), and a CC that the base station can freely activate/deactivate is called as a Secondary CC (SCC) or a secondary cell (SCell).

Meanwhile, 3GPP NR uses the concept of a cell to manage radio resources. A cell is defined as a combination of DL resources and UL resources, that is, a combination of DL CC and UL CC. A cell may be configured with DL resources alone, or a combination of DL resources and UL resources. When the carrier aggregation is supported, the linkage between the carrier frequency of the DL resource (or DL CC) and the carrier frequency of the UL resource (or UL CC) may be indicated by system information. The carrier frequency refers to the center frequency of each cell or CC. A cell corresponding to the PCC is referred to as a PCell, and a cell corresponding to the SCC is referred to as an SCell. The carrier corresponding to the PCell in the DL is the DL PCC, and the carrier corresponding to the PCell in the UL is the UL PCC. Similarly, the carrier corresponding to the SCell in the DL is the DL SCC and the carrier corresponding to the SCell in the UL is the UL SCC. According to UE capability, the serving cell(s) may be configured with one PCell and zero or more SCells. In the case of UEs that are in the RRC_CONNECTED state but not configured for carrier aggregation or that do not support carrier aggregation, there is only one serving cell configured only with PCell.

As mentioned above, the term "cell" used in carrier aggregation is distinguished from the term "cell" which refers to a certain geographical area in which a communication service is provided by one base station or one antenna group. That is, one component carrier may also be referred to as a scheduling cell, a scheduled cell, a primary cell (PCell), a secondary cell (SCell), or a primary SCell (PScell). However, in order to distinguish between a cell referring to a certain geographical area and a cell of carrier aggregation, in the present disclosure, a cell of a carrier aggregation is referred to as a CC, and a cell of a geographical area is referred to as a cell.

FIG. 10 is a diagram showing an example in which a cross carrier scheduling technique is applied. When cross carrier scheduling is set, the control channel transmitted through the first CC may schedule a data channel transmitted through the first CC or the second CC using a carrier indicator field (CIF). The CIF is included in the DCI. In other words, a scheduling cell is set, and the DL grant/UL grant transmitted in the PDCCH area of the scheduling cell schedules the PDSCH/PUSCH of the scheduled cell. That is, a search area for the plurality of component carriers exists in the PDCCH area of the scheduling cell. A PCell may be basically a scheduling cell, and a specific SCell may be designated as a scheduling cell by an upper layer.

In the embodiment of FIG. 10, it is assumed that three DL CCs are merged. Here, it is assumed that DL component carrier #0 is DL PCC (or PCell), and DL component carrier #1 and DL component carrier #2 are DL SCCs (or SCell). In addition, it is assumed that the DL PCC is set to the PDCCH monitoring CC. When cross-carrier scheduling is not configured by UE-specific (or UE-group-specific or cell-specific) higher layer signaling, a CIF is disabled, and each DL CC can transmit only a PDCCH for scheduling its PDSCH without the CIF according to an NR PDCCH rule (non-cross-carrier scheduling, self-carrier scheduling). Meanwhile, if cross-carrier scheduling is configured by UE-specific (or UE-group-specific or cell-specific) higher layer signaling, a CIF is enabled, and a specific CC (e.g., DL PCC) may transmit not only the PDCCH for scheduling the PDSCH of the DL CC A using the CIF but also the PDCCH for scheduling the PDSCH of another CC (cross-carrier scheduling). On the other hand, a PDCCH is not transmitted in another DL CC. Accordingly, the UE monitors the PDCCH not including the CIF to receive a self-carrier scheduled PDSCH depending on whether the cross-carrier scheduling is configured for the UE, or monitors the PDCCH including the CIF to receive the cross-carrier scheduled PDSCH.

On the other hand, FIGS. 9 and 10 illustrate the subframe structure of the 3GPP LTE-A system, and the same or similar configuration may be applied to the 3GPP NR system. However, in the 3GPP NR system, the subframes of FIGS. 9 and 10 may be replaced with slots.

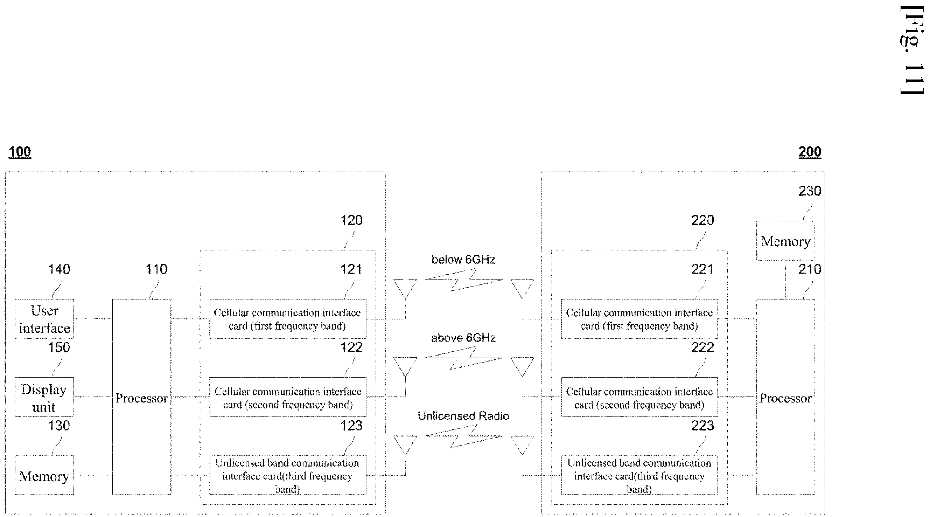

FIG. 11 is a block diagram showing the configurations of a UE and a base station according to an embodiment of the present disclosure.

In an embodiment of the present disclosure, the UE may be implemented with various types of wireless communication devices or computing devices that are guaranteed to be portable and mobile. The UE may be referred to as a User Equipment (UE), a Station (STA), a Mobile Subscriber (MS), or the like. In addition, in an embodiment of the present disclosure, the base station controls and manages a cell (e.g., a macro cell, a femto cell, a pico cell, etc.) corresponding to a service area, and performs functions of a signal transmission, a channel designation, a channel monitoring, a self diagnosis, a relay, or the like. The base station may be referred to as next Generation NodeB (gNB) or Access Point (AP).

As shown in the drawing, a UE 100 according to an embodiment of the present disclosure may include a processor 110, a communication module 120, a memory 130, a user interface 140, and a display unit 150.

First, the processor 110 may execute various instructions or programs and process data within the UE 100. In addition, the processor 110 may control the entire operation including each unit of the UE 100, and may control the transmission/reception of data between the units. Here, the processor 110 may be configured to perform an operation according to the embodiments described in the present disclosure. For example, the processor 110 may receive slot configuration information, determine a slot configuration based on the slot configuration information, and perform communication according to the determined slot configuration.

Next, the communication module 120 may be an integrated module that performs wireless communication using a wireless communication network and a wireless LAN access using a wireless LAN. For this, the communication module 120 may include a plurality of network interface cards (NICs) such as cellular communication interface cards 121 and 122 and an unlicensed band communication interface card 123 in an internal or external form. In the drawing, the communication module 120 is shown as an integral integration module, but unlike the drawing, each network interface card can be independently arranged according to a circuit configuration or usage.

The cellular communication interface card 121 may transmit or receive a radio signal with at least one of the base station 200, an external device, and a server by using a mobile communication network and provide a cellular communication service in a first frequency band based on the instructions from the processor 110. According to an embodiment, the cellular communication interface card 121 may include at least one NIC module using a frequency band of less than 6 GHz. At least one NIC module of the cellular communication interface card 121 may independently perform cellular communication with at least one of the base station 200, an external device, and a server in accordance with cellular communication standards or protocols in the frequency bands below 6 GHz supported by the corresponding NIC module.

The cellular communication interface card 122 may transmit or receive a radio signal with at least one of the base station 200, an external device, and a server by using a mobile communication network and provide a cellular communication service in a second frequency band based on the instructions from the processor 110. According to an embodiment, the cellular communication interface card 122 may include at least one NIC module using a frequency band of more than 6 GHz. At least one NIC module of the cellular communication interface card 122 may independently perform cellular communication with at least one of the base station 200, an external device, and a server in accordance with cellular communication standards or protocols in the frequency bands of 6 GHz or more supported by the corresponding NIC module.

The unlicensed band communication interface card 123 transmits or receives a radio signal with at least one of the base station 200, an external device, and a server by using a third frequency band which is an unlicensed band, and provides an unlicensed band communication service based on the instructions from the processor 110. The unlicensed band communication interface card 123 may include at least one NIC module using an unlicensed band. For example, the unlicensed band may be a band of 2.4 GHz or 5 GHz. At least one NIC module of the unlicensed band communication interface card 123 may independently or dependently perform wireless communication with at least one of the base station 200, an external device, and a server according to the unlicensed band communication standard or protocol of the frequency band supported by the corresponding NIC module.

The memory 130 stores a control program used in the UE 100 and various kinds of data therefor. Such a control program may include a prescribed program required for performing wireless communication with at least one among the base station 200, an external device, and a server.

Next, the user interface 140 includes various kinds of input/output means provided in the UE 100. In other words, the user interface 140 may receive a user input using various input means, and the processor 110 may control the UE 100 based on the received user input. In addition, the user interface 140 may perform an output based on instructions from the processor 110 using various kinds of output means.

Next, the display unit 150 outputs various images on a display screen. The display unit 150 may output various display objects such as content executed by the processor 110 or a user interface based on control instructions from the processor 110.

In addition, the base station 200 according to an embodiment of the present disclosure may include a processor 210, a communication module 220, and a memory 230.

First, the processor 210 may execute various instructions or programs, and process internal data of the base station 200. In addition, the processor 210 may control the entire operations of units in the base station 200, and control data transmission and reception between the units. Here, the processor 210 may be configured to perform operations according to embodiments described in the present disclosure. For example, the processor 210 may signal slot configuration and perform communication according to the signaled slot configuration.

Next, the communication module 220 may be an integrated module that performs wireless communication using a wireless communication network and a wireless LAN access using a wireless LAN. For this, the communication module 120 may include a plurality of network interface cards such as cellular communication interface cards 221 and 222 and an unlicensed band communication interface card 223 in an internal or external form. In the drawing, the communication module 220 is shown as an integral integration module, but unlike the drawing, each network interface card can be independently arranged according to a circuit configuration or usage.

The cellular communication interface card 221 may transmit or receive a radio signal with at least one of the UE 100, an external device, and a server by using a mobile communication network and provide a cellular communication service in the first frequency band based on the instructions from the processor 210. According to an embodiment, the cellular communication interface card 221 may include at least one NIC module using a frequency band of less than 6 GHz. The at least one NIC module of the cellular communication interface card 221 may independently perform cellular communication with at least one of the UE 100, an external device, and a server in accordance with the cellular communication standards or protocols in the frequency bands less than 6 GHz supported by the corresponding NIC module.

The cellular communication interface card 222 may transmit or receive a radio signal with at least one of the UE 100, an external device, and a server by using a mobile communication network and provide a cellular communication service in the second frequency band based on the instructions from the processor 210. According to an embodiment, the cellular communication interface card 222 may include at least one NIC module using a frequency band of 6 GHz or more. The at least one NIC module of the cellular communication interface card 222 may independently perform cellular communication with at least one of the base station 100, an external device, and a server in accordance with the cellular communication standards or protocols in the frequency bands 6 GHz or more supported by the corresponding NIC module.

The unlicensed band communication interface card 223 transmits or receives a radio signal with at least one of the base station 100, an external device, and a server by using the third frequency band which is an unlicensed band, and provides an unlicensed band communication service based on the instructions from the processor 210. The unlicensed band communication interface card 223 may include at least one NIC module using an unlicensed band. For example, the unlicensed band may be a band of 2.4 GHz or 5 GHz. At least one NIC module of the unlicensed band communication interface card 223 may independently or dependently perform wireless communication with at least one of the UE 100, an external device, and a server according to the unlicensed band communication standards or protocols of the frequency band supported by the corresponding NIC module.

FIG. 11 is a block diagram illustrating the UE 100 and the base station 200 according to an embodiment of the present disclosure, and blocks separately shown are logically divided elements of a device. Accordingly, the aforementioned elements of the device may be mounted in a single chip or a plurality of chips according to the design of the device. In addition, a part of the configuration of the UE 100, for example, a user interface 140, a display unit 150 and the like may be selectively provided in the UE 100. In addition, the user interface 140, the display unit 150 and the like may be additionally provided in the base station 200, if necessary.

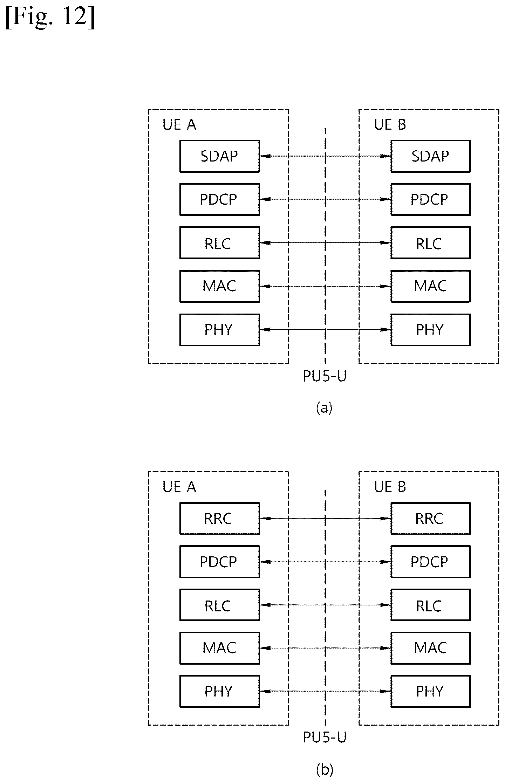

FIG. 12 illustrates radio protocol architecture for SL communication.

Referring to FIG. 12, FIG. 12(a) illustrates a user plane protocol stack of NR, and FIG. 12(b) illustrates a control plane protocol stack of NR. Hereinafter, a sidelink synchronization signal (SLSS) and synchronization information are described.

Specifically, the SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS).

A physical sidelink broadcast channel (PSBCH) may be a (broadcast) channel through which basic (system) information that needs to be known first by a UE before SL signal transmission and reception. For example, the basic information may be information related to the SLSS, a duplex mode (DM), time division duplex uplink/downlink (TDD UL/DL) configuration, information related to a resource pool, an application type related to the SLSS, a subframe offset, broadcast information, etc.

The S-PSS, the S-SSS, and the PSBCH may be included in a block format (e.g., a SL synchronization signal (SS)/PSBCH block, hereinafter referred to as a sidelink-synchronization signal block (S-SSB)) for supporting periodic transmission. The S-SSB may have the same numerology (i.e., SCS and CP length) as a physical sidelink control channel (PSCCH)/physical sidelink shared channel (PSSCH) within a carrier, and a transmission bandwidth may exist within a (pre-)configured sidelink bandwidth part (SL BWP). In addition, a frequency position of the S-SSB may be (pre-)configured. Therefore, the UE does not need to perform hypothesis detection in the frequency to discover the S-SSB in the carrier.

Each SLSS may have a physical layer sidelink synchronization identity (ID), and the value thereof may be equal to one from 0 to 335. According to one value used among the above-described values, a synchronization source may also be identified. For example, values of 0, 168, and 169 may indicate global navigation satellite systems (GNSS), values from 1 to 167 may indicate base stations, and values from 170 to 335 may indicate being out of coverage. Alternatively, among the physical layer sidelink synchronization ID values, values 0 to 167 may be values being used by a network, and values from 168 to 335 may be values used outside network coverage.

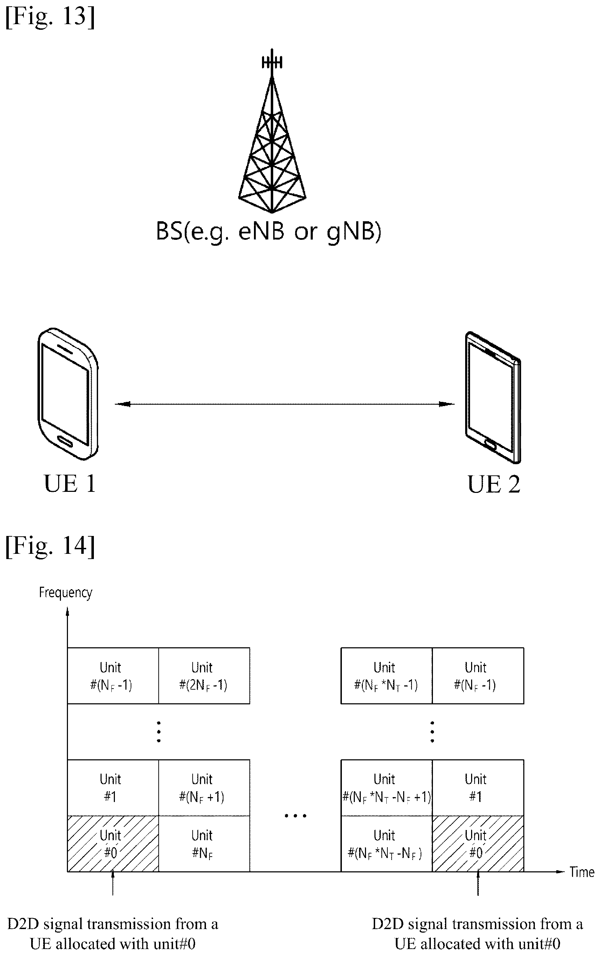

FIG. 13 illustrates an example of a UE and a base station for performing V2X or SL communication.

Referring to FIG. 13, the term "UE" in V2X/SL communication may mainly refer to an equipment of a user. However, when a network equipment such as a base station transmits or receives a signal according to a communication scheme between the network equipment and the UE, the base station may also be considered as a type of UE.

UE 1 may select a resource unit corresponding to a specific resource within a resource pool that means a set of resources, and operate to transmit an SL signal by using the corresponding resource unit. UE 2 corresponding to a reception UE may receive a configuration of a resource pool in which UE 1 can transmit a signal, and may detect a signal of UE 1 within the corresponding resource pool.

Here, when UE 1 is within a connection range of the base station, the base station may notify of a resource pool. On the other hand, when UE 1 is outside the connection range of the base station, another UE may notify of the resource pool or the resource pool may be determined as a predetermined resource.

FIG. 14 illustrates an example of a resource unit for V2X or SL communication.

Referring to FIG. 14, a resource pool may include multiple resource units, and each UE may select one or multiple resource units and use the same for SL signal transmission. A total of frequency resources of the resource pool may be divided into $N_F$ number of resource units, and a total of time resources of the resource pool may be divided into $N_T$ number of resource units. Accordingly, a total of $N_F * N_T$ number of resource units may be defined in the resource pool.

As shown in FIG. 14, one resource unit (e.g., Unit #0) may be periodically and repeatedly indicated. Alternatively, in order to achieve a diversity effect in the time or frequency dimension, an index of a physical resource unit to which a logical resource unit is mapped may be changed to a pre-determined pattern in accordance with time. In such a resource-unit structure, the resource pool may refer to a set of resource units that can be used for a transmission that is performed by the UE which is to transmit the SL signal.

The resource pool may be segmented to multiple types. For example, according to the content of an SL signal transmitted in each resource pool, the resource pool may be divided as below.

(1) Scheduling assignment (SA) may be a signal including information such as a position of a resource that a transmission UE uses to transmit an SL data channel, a modulation and coding scheme (MCS) or a multiple input multiple output (MIMO) transmission scheme needed for the modulation of other data channels, and a timing advance (TA). The SA may also be multiplexed with SL data within the same resource unit and may then be transmitted, and in this case, an SA resource pool may refer to a resource pool in which the SA is multiplexed with the SL data and then transmitted. The SA may also be referred to as a SL control channel.

(2) A physical sidelink shared channel (PSSCH) may be a resource pool that a transmission UE uses to transmit user data. If the SA is multiplexed with SL data within the same resource unit and then transmitted, only a sidelink data channel obtained by excluding SA information may be transmitted in the resource pool for sidelink data channel. In other words, resource elements (REs) used to transmit SA information on an individual resource unit within the SA resource pool may still be used to transmit SL data in the resource pool of the SL data channel.

Hereinafter, resource allocation in the SL is described.

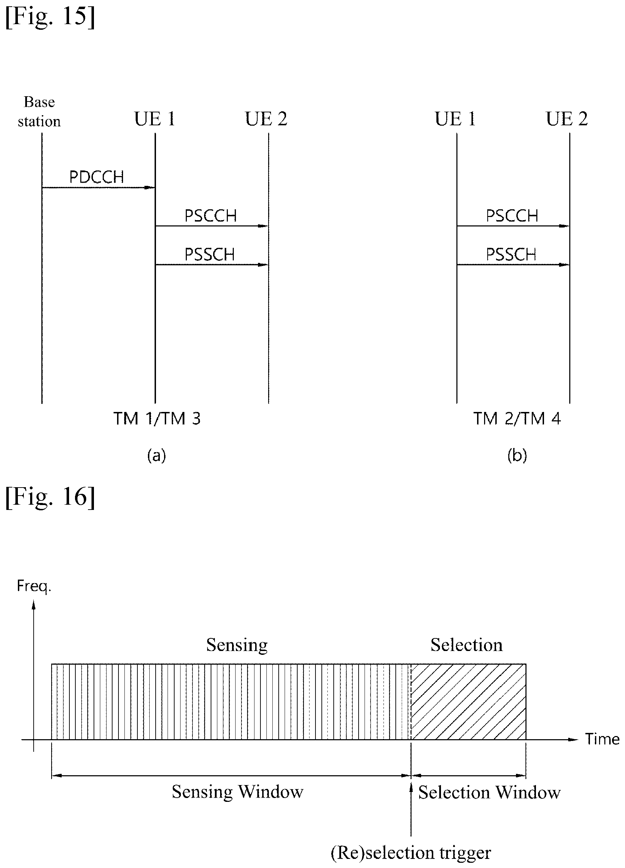

FIG. 15 illustrates an example of a procedure of performing V2X or SL communication of a UE according to a transmission mode.

Referring to FIG. 15, FIG. 15(a) illustrates a UE operation related to transmission mode 1 or transmission mode 3, and FIG. 15(b) illustrates a UE operation related to transmission mode 2 or transmission mode 4.

Referring to FIG. 15(a), in transmission mode 1 or 3, the base station performs resource scheduling for UE 1 via a PDCCH (more specifically, downlink control information (DCI)), and UE 1 performs SL/V2X communication with UE 2 according to the corresponding resource scheduling. After transmitting sidelink control information (SCI) to UE 2 via a physical sidelink control channel (PSCCH), UE 1 may transmit data based on the SCI via a physical sidelink shared channel (PSSCH). In case of an LTE SL, transmission mode 1 may be applied to general sidelink communication, and transmission mode 3 may be applied to V2X sidelink communication.

Referring to FIG. 15(b), in transmission mode 2 or 4, the UE may schedule resources on its own. More specifically, in a case of an LTE SL, transmission mode 2 may be applied to general sidelink communication, and the UE may select a resource from a configured resource pool on its own and may then perform an SL operation. Transmission mode 4 may be applied to V2X sidelink communication, and the UE may carry out a sensing/SA decoding process, etc., select a resource within a selection window on its own, and then then perform a V2X sidelink operation. After transmitting the SCI to UE 2 via a PSCCH, UE 1 may transmit SCI-based data via a PSSCH. Hereinafter, the transmission mode may be abbreviated to a "mode". Procedures related to sensing and resource (re)selection may be supported in resource allocation mode 2. The sensing procedure may be defined as decoding the SCI from another UE and/or SL measurement. The decoding of the SCI in the sensing procedure may at least provide information on an SL resource indicated by a UE transmitting the SCI. When the corresponding SCI is decoded, the sensing procedure may use L1 SL reference signal received power (RSRP) measurement, which is based on an SL demodulation reference signal (DMRS). The resource (re)selection procedure may use a result of the sensing procedure in order to determine the resource for the SL transmission.

FIG. 16 illustrates an example of a method of selecting a transmission resource for transmitting a signal by a UE.

Referring to FIG. 16, the UE may identify transmission resources reserved by another UE or resources used by another UE via sensing within a sensing window, and after excluding the identified resources from a selection window, the UE may randomly select a resource from resources having low interference among the remaining resources.

For example, within the sensing window, the UE may decode the PSCCH including information on the cycles of the reserved resources, and then measure PSSCH RSRP from resources that are periodically determined based on the PSCCH. The UE may exclude resources having the PSSCH RSRP value exceeding a threshold value from the selection window. Thereafter, the UE may randomly select an SL resource from the remaining resources within the selection window.

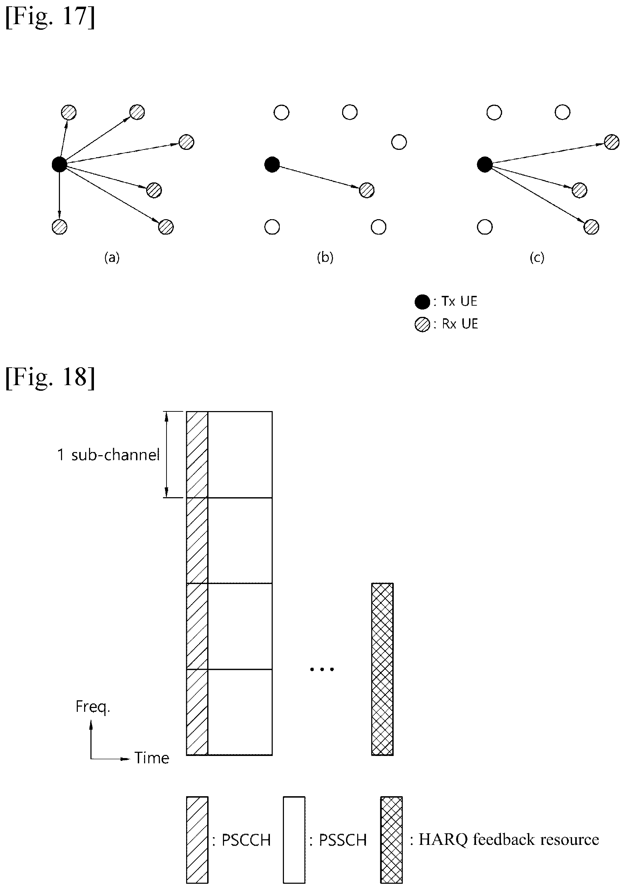

FIG. 17 illustrates an example of three cast types of an NR sidelink.

Referring to FIG. 17, an NR sidelink supports three cast types corresponding to unicast, groupcast, and broadcast. In a case of unicast-type SL communication, the UE may perform one-to-one communication with another UE. In a case of groupcast-type SL communication, the UE may perform SL communication with one or more UEs in a group to which the UE belongs. The groupcast-type SL communication may be substituted by SL multicast communication, SL one-to-many communication, etc.

Hereinafter, a hybrid automatic repeat request (HARQ) procedure in SL is described.

In the case of the SL unicast and groupcast, HARQ feedback and HARQ combining in a physical layer may be supported. For example, when a reception UE operates in resource allocation mode 1 or 2, the reception UE may receive a PSSCH from a transmission UE, and the reception UE may transmit HARQ feedback for the PSSCH to the transmission UE through a physical sidelink feedback channel (PSFCH) by using a sidelink feedback control information (SFCI) format.

For example, the SL HARQ feedback may be enabled for the groupcast. That is, in a non-CBG operation, two HARQ feedback options may be supported for the groupcast.

(1) Groupcast option 1: When a reception UE decodes a PSCCH targeted for the reception UE and then the reception UE fails to decode a transport block related to the PSCCH, the reception UE may transmit HARQ-NACK to the transmission UE through a PSFCH. On the other hand, when the reception UE decodes a PSCCH targeted for the reception UE and the reception UE successfully decodes a transport block related to the PSCCH, the reception UE may not transmit HARQ-ACK to a transmission UE.

(2) Groupcast option 2: When a reception UE decodes a PSCCH targeted for the reception UE and then the reception UE fails to decode a transport block related to the PSCCH, the reception UE may transmit HARQ-NACK to a transmission UE through a PSFCH. In addition, when a reception UE decodes a PSCCH targeted for the reception UE and the reception UE successfully decodes a transport block related to the PSCCH, the reception UE may transmit HARQ-ACK to a transmission UE through a PSFCH.

Meanwhile, for example, in a case of SL communication related to a service having requirements of high reliability or a service having requirements of relatively high reliability, an SL HARQ feedback operation and/or mechanism of the UE may be useful. For example, in a case of SL communication related to a service having requirements of high reliability, an operation in which a UE having received the service transmits SL HARQ feedback to a UE having transmitted the service may be useful in satisfying the requirements of high reliability.

An HARQ feedback resource may include an HARQ feedback transmission resource and/or an HARQ feedback reception resource. For example, the HARQ feedback transmission resource may include a resource for transmitting HARQ feedback and/or a resource related to the transmission of HARQ feedback. For example, the HARQ feedback reception resource may include a resource for receiving HARQ feedback and/or a resource related to the reception of HARQ feedback.

A PSSCH resource may include a PSSCH transmission resource and/or a PSSCH reception resource. For example, the PSSCH transmission resource may include a resource for transmitting a PSSCH and/or a resource related to the transmission of the PSSCH. For example, the PSSCH reception resource may include a resource for receiving a PSSCH and/or a resource related to the reception of the PSSCH.

A PSCCH resource may include a PSCCH transmission resource and/or a PSCCH reception resource. For example, the PSCCH transmission resource may include a resource for transmitting a PSCCH and/or a resource related to the transmission of the PSCCH. For example, the PSCCH reception resource may include a resource for receiving a PSCCH and/or a resource related to the reception of the PSCCH.

The resource may include at least one of a time domain resource, a frequency domain resource, and/or a code domain resource.

When a resource collision occurs during at least one of a PSSCH transmission, a PSCCH transmission, and/or an HARQ feedback transmission of the UE, it may be difficult for the SL HARQ feedback procedure and/or operation of the UE to be correctly executed. For example, when a resource collision occurs during at least one of a PSSCH transmission, a PSCCH transmission, and/or an HARQ feedback transmission, it may be difficult for the overall SL HARQ feedback procedure and/or operation of the UE to be accurately executed.

Although the reception UE has successfully received the PSSCH, when an error occurs in the HARQ feedback (e.g., HARQ ACK) due to the resource collision, the transmission UE may need to unnecessarily retransmit the PSSCH to the reception UE. For example, when the reception UE fails to receive the PSSCH and the HARQ feedback fails to be transmitted to the transmission UE due to the resource collision, the SL communication-related reliability or capability (or performance) may be degraded. For example, when the reception UE fails to receive the PSCCH and/or the PSSCH transmitted from the transmission UE and when an HARQ NACK corresponding to the PSCCH and/or the PSSCH fails to be correctly delivered to the transmission UE due to the resource collision, the SL communication-related reliability or performance may be degraded. Therefore, the HARQ feedback resource may need to be determined so that the collision between the plurality of UEs are prevented or minimized.

A transmission UE may transmit a PSCCH and/or a PSSCH to a reception UE. For example, the transmission UE may transmit SL information to the reception UE by using a PSCCH resource and/or a PSSCH resource. For example, the SL information may include at least one of SL control information, SL data, an SL packet, an SL transport block (TB), an SL message, and/or an SL service.

The reception UE may determine an HARQ feedback resource. Additionally, for example, the transmission UE may determine the HARQ feedback resource.

The HARQ feedback resource may be configured to have a correlation or linkage with the PSSCH. For example, the HARQ feedback resource may include at least one of a time domain resource, a frequency domain resource, and/or a code domain resource. For example, a position of the HARQ feedback resource may be configured to have a correlation or linkage with a linked PSSCH resource. For example, a position of the HARQ feedback resource may be configured to have a correlation or linkage with a linked PSSCH resource, based on a pre-defined function. For example, the HARQ feedback resource may be determined based on at least one of information on a time domain related to the PSSCH, information on a frequency domain related to the PSSCH, and/or information on a code domain related to the PSSCH.

For example, the HARQ feedback resource may be configured to have a correlation or linkage with the PSCCH. For example, a position of the HARQ feedback resource may be configured to have a correlation or linkage with a linked PSCCH resource. For example, a position of the HARQ feedback resource may be configured to have a correlation or linkage with a position of a linked PSCCH resource, based on a pre-defined function. For example, the HARQ feedback resource may be determined based on at least one of information on a time domain related to the PSCCH, information on a frequency domain related to the PSCCH, and/or information on a code domain related to the PSCCH.

The HARQ feedback resource may be configured in the form of a subset of a frequency resource used for PSSCH transmission and/or PSCCH transmission. For example, the frequency domain of the HARQ feedback resource may be configured in the form of a subset of a frequency domain of a linked PSSCH resource and/or PSCCH resource. For example, the frequency domain of the HARQ feedback resource may be included in the frequency domain of a PSSCH resource and/or a PSCCH resource.

FIG. 18 illustrates an example of a resource for transmitting HARQ feedback in an NR sidelink.

Referring to FIG. 18, a transmission UE may transmit a PSCCH and/or a PSSCH to a reception UE via four subchannels. In this case, the frequency domain of an HARQ feedback resource related to the PSCCH and/or PSSCH may correspond to a subset of the frequency resource used by the transmission UE to transmit a PSCCH and/or a PSSCH.

A time gap between an HARQ feedback resource and a PSSCH resource may be configured. For example, a time gap between an HARQ feedback resource and a PSCCH resource may be configured. For example, in consideration of the decoding capability and/or latency requirements (e.g., V2X message and/or service related latency requirements) of the UE, a time gap may be configured between a PSCCH and/or PSSCH reception point of a reception UE and an HARQ feedback transmission point of the reception UE. For example, in consideration of the decoding capability and/or latency requirements of the UE, a time gap may be configured between an HARQ feedback reception point of a transmission UE and a PSSCH and/or PSCCH (re)transmission point of the transmission UE.

The time gap may be commonly configured in a resource pool. For example, the time gap may be commonly configured between different UEs within a resource pool. For example, the time gap may be commonly configured to the transmission UE and the reception UE. Therefore, the UE may simply determine the HARQ feedback. For example, the time gap may be configured specifically for a resource pool.

Among a latency budget of services co-existing in a resource pool, the time gap may be configured or designated to have a value less than and/or equal to the smallest latency budget value. For example, when service A and service B co-exist in the resource pool and when the latency budget of service A is smaller than the latency budget of service B, the time gap may be configured or designated to have a value that is smaller than or equal to that of the latency budget of service A.

The time gap may be designated so that a maximum number of retransmissions related to a transport block (TB), which is specifically configured according to a resource pool, a service type, a service priority, a cast type, and/or QoS requirements of the service, can all be supported/performed in a latency budget for a (related) service in the resource pool. For example, the maximum number of retransmissions may be a maximum allowable number of retransmissions including an initial transmission.

Among the decoding capabilities of the UE, the time gap may be configured or designated to have a value greater than and/or equal to the greatest decoding capability value. Here, for example, the decoding capability may be a processing time of the UE, which is needed from a PSSCH reception termination/end time of the UE to a PSFCH transmission start time of the UE. For example, the decoding capability may be a processing time of the UE, which is needed from a PSCCH reception termination/end time of the UE to a PSFCH transmission start time of the UE. For example, among the decoding capabilities of the UE within a resource pool, the time gap may be configured or designated to have a value greater than and/or equal to the greatest decoding capability value. For example, when UE A, UE B, and UE C perform SL communication within the resource pool and when the decoding capability of UE A is the least favorable, the time gap may be configured or designated to have a value greater than and/or equal to the processing time that is required from a PSSCH and/or PSCCH reception termination/end time point of UE A to a PSFCH transmission start time point of UE A.

The time gap may be differently or independently configured for each service type, service priority, SL communication type, session related to the service, PPPP related to the service, PPPR related to the service, block error rate (BLER) related to the service, signal to interference plus noise ratio (SINR) related to the service, latency budget related to the service, and/or UE capability. For example, the time gap may be differently or independently configured for each service type, service priority, SL communication type, session related to the service, PPPP related to the service, PPPR related to the service, BLER related to the service, SINR related to the service, latency budget related to the service, and/or UE capability within the resource pool. For example, the SL communication type may include at least one of unicast, groupcast, and/or broadcast.

The reception UE may transmit HARQ feedback to the transmission UE. For example, the reception UE may transmit HARQ feedback corresponding to the PSCCH and/or PSSCH to the transmission UE. For example, the reception UE may transmit the HARQ feedback to the transmission UE by using an HARQ feedback resource, which is determined based on the PSCCH resource and/or the PSSCH resource. For example, the transmission UE may receive HARQ feedback from the reception UE within an HARQ feedback resource, which is determined based on the PSCCH resource and/or the PSSCH resource.

When the reception UE successfully receives the PSCCH and/or the PSSCH, the HARQ feedback may be an HARQ ACK. For example, when the reception UE fails to receive the PSCCH and/or the PSSCH, the HARQ feedback may correspond to at least one of an HARQ NACK and/or discontinuous detection (DTX).

In a case of groupcast in which multiple UEs within a group perform SL communication with one another, the HARQ feedback resource may be implemented as two different types.

(1) Option A: A common HARQ feedback resource may be configured between reception UEs. For example, when a transmission UE transmits a PSSCH and/or a PSCCH to multiple reception UEs, the HARQ feedback resource may be commonly configured for the multiple reception UEs that have received the PSSCH and/or the PSCCH.

(2) Option B: HARQ feedback resources being different or independent from one another may be configured between reception UEs. For example, HARQ feedback resources being different or independent from one another may be configured for each reception UE or sub-group including one or more reception UEs. For example, when a transmission UE transmits a PSSCH and/or a PSCCH to multiple reception UEs, HARQ feedback resources being different or independent from one another may each be configured for multiple sub-groups or multiple reception UEs that have received the PSSCH and/or the PSCCH.

Option A may be limitedly applied only to groupcast option 1. For example, in groupcast option 1, multiple reception UEs may transmit an HARQ NACK to the transmission UE by using an HARQ feedback resource, which is commonly configured for the multiple reception UEs, only when the multiple reception UEs fail to receive the PSSCH and/or PSCCH. For example, the HARQ NACK may be implemented in the form of a single frequency network (SFN). In this case, the transmission UE may not be capable of separating and receiving the HARQ NACKs transmitted by the multiple reception UEs. Therefore, the transmission UE may not be able to know a reception UE which has transmitted the HARQ NACK. However, the transmission UE may know that at least one reception UE among the multiple reception UEs has transmitted the HARQ NACK, and the transmission UE may retransmit the PSSCH and/or the PSCCH to the multiple reception UEs.

In a case of option A, a unicast-related HARQ feedback resource structure may be re-used. For example, in a case of option A, overhead related to the HARQ feedback resource may be decreased. Conversely, in a case of option A, there may be limitations that the transmission UE cannot determine/recognize a DTX. For example, when the transmission UE has transmitted the PSSCH and/or the PSCCH to the reception UE, the reception UE may fail to receive a PSCCH, which schedules the PSSCH. In this case, according to option A, the reception UE may not transmit the HARQ NACK to the transmission UE. Therefore, there may occur a problem where the transmission UE misinterprets that the reception UE has successfully received the PSSCH.

In a case of option B, within a group including multiple reception UEs, HARQ feedback resources being different or independent from one another may be allocated for each reception UE or sub-group. Here, for example, according to option B, as the number of reception UEs or the number of sub-groups included in the group becomes larger, a larger amount of HARQ feedback resources may be required. For example, in a case of a group including N number of reception UEs, (N-1) number of HARQ feedback resources may be required. For example, option B may be limitedly applied only to groupcast option 2.

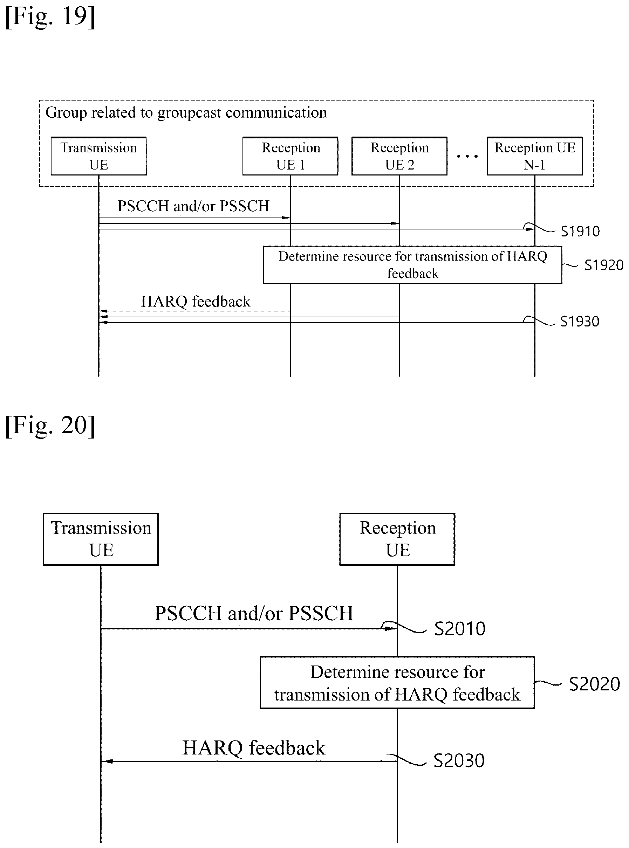

FIG. 19 illustrates an example of a procedure of transmitting or receiving HARQ feedback by a UE in groupcast SL communication.

In FIG. 19, it is assumed that N number of UEs are included in a group. For example, the group may correspond to a group related to groupcast SL communication. For example, the embodiment of FIG. 19 may be applied with respect to option B. For example, the embodiment of FIG. 19 may be applied with respect to groupcast option 2.

Referring to FIG. 19, a transmission UE may transmit a PSCCH and/or a PSSCH to multiple reception UEs in a group (S1910). For example, the transmission UE may transmit SL information to the multiple reception UEs in the group by using a PSCCH resource and/or a PSSCH resource. For example, the SL information may include at least one of SL control information, SL data, an SL packet, an SL transport block (TB), an SL message, and/or an SL service.

The multiple reception UEs having received the PSCCH and/or the PSSCH may determine an HARQ feedback resource (S1920). Additionally, for example, the transmission UE may determine the HARQ feedback resource.

When the group is generated, an identifier (hereinafter, GUE_ID) used within the group may be allocated for each UE. For example, when the group is generated, a GUE_ID may be allocated for each sub-group. For example, the GUE_ID may be generated by a specific UE and may then be delivered to the UEs within the group. For example, the specific UE may be a group owner (GO). For example, the GUE_ID may be configured by the network or base station, or may be configured in advance. For example, the GUE_ID may be differently allocated for the multiple UEs within the group. For example, the GUE_ID may be differently allocated for the multiple sub-groups within the group.

The multiple reception UEs may each determine an HARQ feedback resource, based on its GUE_ID. For example, reception UE 1 may determine the HARQ feedback resource by using the GUE_ID that is allocated to reception UE 1, reception UE 2 may determine the HARQ feedback resource by using the GUE_ID that is allocated to reception UE 2, and reception UE (N-1) may determine the HARQ feedback resource by using the GUE_ID that is allocated to reception UE (N-1). Therefore, the HARQ feedback resource may be differently determined for each of the multiple reception UEs within the group.

UEs (e.g., reception UEs) remaining after excluding the transmission UE may sequentially use the multiple HARQ feedback resources (e.g., (N-1) number of HARQ feedback resources, where N indicates the number of UEs in the group) in accordance with an ascending order of the GUE_ID. For example, UEs (e.g., reception UEs) remaining after excluding the transmission UE may sequentially use the multiple HARQ feedback resources (e.g., (N-1) number of HARQ feedback resources) in accordance with a descending order of the GUE_ID. For example, UEs (e.g., reception UEs) remaining after excluding the transmission UE may sequentially use the multiple HARQ feedback resources (e.g., (N-1) number of HARQ feedback resources) in accordance with an order of the GUE_ID that is derived based on a pre-configured function/rule. For example, the multiple HARQ feedback resources may be configured in advance. For example, the transmission UE may correspond to a UE that has transmitted the PSSCH and/or the PSCCH to the multiple reception UEs.

Sub-groups remaining after excluding the transmission UE may sequentially use the multiple HARQ feedback resources in accordance with an ascending order of the GUE_ID. For example, sub-groups remaining after excluding the transmission UE may sequentially use the multiple HARQ feedback resources in accordance with a descending order of the GUE_ID. For example, sub-groups remaining after excluding the transmission UE may sequentially use the multiple HARQ feedback resources in accordance with an order of the GUE_ID that is derived based on a pre-configured function/rule. For example, the multiple HARQ feedback resources may be configured in advance. For example, the transmission UE may correspond to a UE that has transmitted the PSSCH and/or the PSCCH to the multiple reception UEs.

Thereafter, each of the multiple UEs may transmit HARQ feedback to the transmission UE by using the determined HARQ feedback resource (S1930).

FIG. 20 illustrates an example of a procedure of transmitting or receiving HARQ feedback for a PSCCH and/or a PSSCH.

Referring to FIG. 20, multiple reception UEs may each transmit HARQ feedback to a transmission UE. For example, the multiple reception UEs may each transmit HARQ feedback corresponding to the PSCCH and/or the PSSCH to the transmission UE. The multiple reception UEs may each transmit the HARQ feedback to the transmission UE by using an HARQ feedback resource, which is determined based on the PSCCH resource and/or the PSSCH resource.

When the reception UE successfully receives the PSCCH and/or the PSSCH, the HARQ feedback may be an HARQ ACK. For example, when the reception UE fails to receive the PSCCH and/or the PSSCH, the HARQ feedback may be at least one of an HARQ NACK and/or discontinuous detection (DTX).

The UE may determine HARQ feedback transmission power based on at least one of an SL pathloss value derived/acquired based on a reference signal on an SL channel, an SL RSRP value derived/acquired based on a reference signal on the SL channel, an SL RSRQ value derived/acquired based on a reference signal on the SL channel, an open-loop power control parameter, and/or a closed-loop power control parameter. For example, when the transmission UE transmits a reference signal to the reception UE via an SL channel, the reception UE may determine HARQ feedback transmission power based on at least one of an SL pathloss value derived/acquired based on a reference signal on an SL channel, an SL RSRP value derived/acquired based on a reference signal on the SL channel, an SL RSRQ value derived/acquired based on a reference signal on the SL channel, an open-loop power control parameter, and/or a closed-loop power control parameter.

The reference signal on the SL channel may be defined in advance. The reference signal on the SL channel may be a DMRS transmitted on the PSSCH (i.e., PSSCH DMRS) or a DMRS transmitted on the PSCCH (i.e., PSCCH DMRS). The reference signal on the SL channel may be a CSI-RS transmitted on a PSSCH. The reference signal on the SL channel may be a reference signal used for quality estimation (e.g., CQI, PMI, or RI) of the SL channel. For example, the reference signal on the SL channel may be a reference signal used for the measurement of at least one of an SL pathloss value, an SL RSRP value, and/or an SL RSRQ value.

The SL pathloss may be a pathloss corresponding to a link between a transmission UE and a reception UE. For example, the open-loop power control parameter and/or the closed-loop power control parameter may be configured in advance. For example, the open-loop power control parameter may include a Po and/or an alpha value.

Po may be a power control parameter for averagely satisfying a target error rate (e.g., block error rate (BLER) or frame error rate (FER)) related to packet/message transmission. For example, Po may be a power control parameter related to an average reception SINR between a transmission UE and a reception UE. For example, Po may be a power control parameter that is specified to a UE, a resource pool, a service type, a service priority level, QoS requirements related to a service, a (frequency) resource size being used for SL transmission, an MCS value being used for SL transmission, a congestion level (e.g., CBR) related to the resource pool, and/or a cast type. For example, when the HARQ feedback transmission power is calculated/derived based on an SL RSRP and/or SL RSRQ value/range, different Po values/ranges may be mapped/configured for each (pre-configured) SL RSRP and/or SL RSRQ value/range.

When the HARQ feedback transmission power is calculated/derived based on an SL pathloss, an alpha value may be a weighted value applied to (measured) pathloss compensation. When the HARQ feedback transmission power is calculated/derived based on an SL RSRP and/or SL RSRQ value/range, an alpha value may be a weighted value applied to a (measured) SL RSRP and/or SL RSRQ value/range. When the HARQ feedback transmission power is calculated/derived based on an SL RSRP and/or SL RSRQ value/range, an alpha value may be a weighted value applied to HARQ feedback transmission power mapped/configured for each (measured) SL RSRP and/or SL RSRQ value/range. Here, an alpha value/range may be specifically configured for a UE, a resource pool, a service type, a service priority level, QoS requirements related to a service, a (frequency) resource size being used for SL transmission, an MCS value being used for SL transmission, a congestion level (e.g., CBR) related to the resource pool, and/or a cast type. When the HARQ feedback transmission power is calculated/derived based on an SL RSRP and/or SL RSRQ value/range, different alpha values/ranges may be mapped/configured for each (pre-configured) SL RSRP and/or SL RSRQ value/range.

When the HARQ feedback transmission power is calculated/derived based on an SL RSRP and/or SL RSRQ value/range, different offset values/ranges may be mapped/configured for each (pre-configured) SL RSRP and/or SL RSRQ value/range. A UE that has measured the SL RSRP and/or SL RSRQ may apply the offset related to the SL RSRP value and/or SL RSRQ value to (pre-configured normalized or nominal) (maximum) SL (HARQ feedback) transmission power, so as to determine final HARQ feedback transmission power. Here, for example, the offset value/range may be specifically configured for a UE, a resource pool, a service type, a service priority, QoS requirements related to a service, a (frequency) resource size used for SL transmission, an MCS value used for SL transmission, a congestion level (e.g.,

CBR) related to the resource pool, and/or a cast type.

Different (normalized or nominal) (maximum) SL HARQ feedback transmission power values/ranges may be mapped/configured for each (pre-configured) SL RSRP and/or SL RSRQ value/range. For example, a (normalized or nominal) (maximum) SL HARQ feedback transmission power value/range may be specifically configured for a UE, a resource pool, a service type, a service priority, QoS requirements related to a service, a (frequency) resource size used for SL transmission, an MCS value used for SL transmission, a congestion level (e.g., CBR) related to the resource pool, and/or a cast type.

The reference signal and/or the transmission power value related to an SL channel including the reference signal may be signaled to a UE via a pre-defined channel. The transmission UE may transmit the reference signal and/or the transmission power value related to an SL channel including the reference signal to the reception UE via a pre-defined channel. The pre-defined channel may correspond to a PSCCH. The reception UE may correspond to a UE measuring at least one of an SL pathloss, SL RSRP, and/or an SL RSRQ based on the reference signal.

The open-loop power control parameter (and/or (maximum or minimum) HARQ feedback transmission power value mapped/configured for each SL RSRP (and/or SL RSRQ) value/range) may be differently or independently configured for each service type, service priority, SL communication type (e.g., unicast, groupcast, or broadcast), (resource pool related) congestion level (e.g., Channel Busy Ratio (CBR)), session related to the service, PPPP related to the service, PPPR related to the service, block error rate (BLER) related to the service, target signal to interference plus noise ratio (SINR) related to the service, (minimum or maximum) target communication distance related to the service, and/or latency budget related to the service. For example, a closed-loop transmission power control operation/parameter may be differently or independently operated/configured for each service type, service priority, SL communication type (e.g., unicast, groupcast, or broadcast), (resource pool related) congestion level (e.g., CBR), session related to the service, PPPP related to the service, PPPR related to the service, block error rate (BLER) related to the service, target signal to interference plus noise ratio (SINR) related to the service, (minimum or maximum) target communication distance related to the service, and/or latency budget related to the service.

An open-loop transmission power control parameter related to the HARQ feedback may be differently or independently configured from the open-loop transmission power control parameter related to the PSSCH and/or the PSCCH. A closed-loop transmission power control operation/parameter related to the HARQ feedback may be differently or independently operated/configured from the closed-loop transmission power control operation/parameter related to the PSSCH and/or the PSCCH.

FDM of an HARQ resource may be allowed or configured only for reception UEs having a distance from the transmission UE receiving the HARQ feedback within a pre-determined threshold value. FDM of an HARQ resource may be allowed or configured only for reception UEs having an SL pathloss difference for a link between the transmission UE and the reception UE within a predetermined threshold value. FDM of an HARQ resource may be allowed or configured only for reception UEs having an SL RSRP difference for a link between the transmission UE and the reception UE within a predetermined threshold value. FDM of an HARQ resource may be allowed or configured only for reception UEs having an SL RSRQ difference for a link between the transmission UE and the reception UE within a predetermined threshold value.

If a distance between each of the multiple reception UEs and the transmission UE is within a pre-configured threshold value, the multiple reception UEs may transmit HARQ feedback via a resource multiplexed using FDM on the frequency axis. If a pathloss difference between each of the multiple reception UEs and the transmission UE is within a pre-configured threshold value, the multiple reception UEs may transmit HARQ feedback via a resource multiplexed using FDM on the frequency axis. If a (measured) RSRP value difference between each of the multiple reception UEs and the transmission UE is within a pre-configured threshold value, the multiple reception UEs may transmit HARQ feedback via a resource multiplexed using FDM on the frequency axis. If a (measured) RSRQ value difference between each of the multiple reception UEs and the transmission UE is within a pre-configured threshold value, the multiple reception UEs may transmit HARQ feedback via a resource multiplexed using FDM on the frequency axis.

It may not be preferable to multiplex an HARQ feedback resource by using FDM among UEs or sub-groups within a group. When power control related to HARQ feedback transmission is not applied, it may not be preferable to multiplex an HARQ feedback resource by using FDM among different UEs or different sub-groups within a group. When an HARQ feedback reception power difference among different UEs or different sub-groups within a group is greater than a pre-configured threshold value, it may not be preferable to multiplex an HARQ feedback resource by using FDM among different UEs or different sub-groups within the group. When an SL pathloss difference among different UEs or different sub-groups within a group is greater than a pre-configured threshold value, it may not be preferable to multiplex an HARQ feedback resource by using FDM among different UEs or different sub-groups within the group. When an SL RSRP difference among different UEs or different sub-groups within a group is greater than a pre-configured threshold value, it may not be preferable to multiplex an HARQ feedback resource by using FDM among different UEs or different sub-groups within the group. When an SL RSRQ difference among different UEs or different sub-groups within a group is greater than a pre-determined threshold value, it may not be preferable to multiplex an HARQ feedback resource by using FDM among different UEs or different sub-groups within the group.

As in the above-described example, when it is not preferable to multiplex the HARQ feedback resource by using FDM, the HARQ feedback resource may be pseudo-randomly multiplexed using TDM based on at least one of a GUE_ID, an identifier related to a reception UE, an SL HARQ process ID, and/or an identifier related to a transmission UE. The HARQ feedback resource may be pseudo-randomly determined based on at least one of a GUE_ID, an identifier related to a reception UE, an SL HARQ process ID, and/or an identifier related to a transmission UE. For example, the HARQ feedback resource may be multiplexed using TDM or determined by a function having at least one of a GUE_ID, an identifier related to a reception UE, an SL HARQ process ID, and/or an identifier related to a transmission UE as an input parameter. The HARQ feedback resource may be an HARQ feedback resource for each of the reception UEs within the group. The HARQ feedback resource may be an HARQ feedback resource for each sub-group within the group. For example, the identifier related to the reception UE may correspond to a destination ID. The identifier related to the transmission UE may be a source ID. The function may be defined in advance.

A transmission UE may transmit a PSCCH and/or a PSSCH to a reception UE. The transmission UE may transmit SL information to the reception UE by using a PSCCH resource and/or a PSSCH resource. The SL information may include at least one of SL control information, SL data, an SL packet, an SL transport block (TB), an SL message, and/or an SL service.

The reception UE may determine an HARQ feedback resource. Additionally, the transmission UE may determine the HARQ feedback resource. For example, the reception UE may be one of multiple reception UEs performing groupcast communication within a group.

The HARQ feedback resource may be determined based on at least one of the PSCCH resource, the PSSCH resource, and/or the GUE_ID. When the multiple reception UEs within a group feeds back an HARQ ACK or HARQ NACK to the transmission UE by using different PSFCH resources, the multiple reception UEs within the group may determine the HARQ feedback resource by using the GUE_ID. The resource may include at least one of a time domain resource, a frequency domain resource, and/or a code domain resource. The GUE_ID may correspond to information for identifying a UE within the group.

The reception UE may transmit HARQ feedback to the transmission UE. The reception UE may transmit HARQ feedback corresponding to the PSCCH and/or the PSSCH to the transmission UE. For example, the reception UE may transmit the HARQ feedback to the transmission UE by using an HARQ feedback resource, which is determined based on at least one of the PSCCH resource, the PSSCH resource, and/or the GUE_ID.

When the reception UE successfully receives the PSCCH and/or the PSSCH, the HARQ feedback may be an HARQ ACK. When the reception UE fails to receive the PSCCH and/or the PSSCH, the HARQ feedback may be at least one of an HARQ NACK and/or discontinuous detection (DTX).

When a transmission UE selects a PSSCH and/or PSCCH transmission resource through a sensing operation, a problem of a collision between HARQ feedback transmission-related resources may not occur. When multiple transmission UEs select different PSSCH and/or PSCCH transmission resources through a sensing operation, the HARQ feedback resource may be determined based on a PSSCH resource and/or PSCCH resource. Therefore, among the UEs each having selected different PSSCH and/or PSCCH transmission resources based on the sensing operation, a collision between the HARQ feedback resources may be automatically avoided.

When the transmission UE transmits the same PSSCH and/or PSCCH to multiple reception UEs within the group, the multiple reception UEs may determine an HARQ feedback resource by using different GUE_IDs. Therefore, even though the multiple reception UEs within the group have received the same PSSCH and/or PSCCH, a collision between the HARQ feedback resources may be prevented.

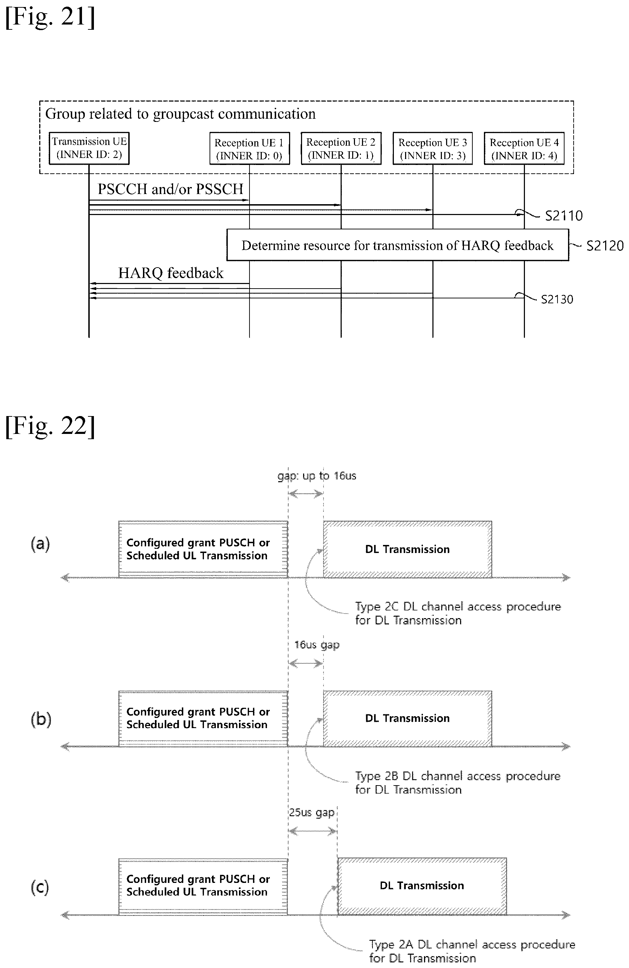

FIG. 21 illustrates an example of a procedure of transmitting or receiving HARQ feedback for a PSCCH and/or a PSSCH in groupcast SL communication.

Referring to FIG. 21, an ID for identifying a UE within a group may be allocated/designated to multiple UEs within the group. The ID may be referred to as an inner ID. The inner ID may have the same purpose as or may be the same parameter as the GUE_ID. For example, for specific groupcast traffic, an application layer may transfer information on the inner ID of the UE and information on the number of UEs within a group to a V2X layer. The UE may be a UE transmitting the specific groupcast traffic. For specific groupcast traffic, the application layer may not transfer information on an inner ID of another UE within the group to the V2X layer. For example, the groupcast traffic may include at least one of a groupcast service, groupcast data, a groupcast packet, and/or a groupcast message.

When a transmission UE intends to transmit first traffic related to groupcast to multiple reception UEs within a group, an application layer of the transmission UE may transfer information on an inner ID of the transmission UE and information on the number of UEs within the group to a V2X layer of the transmission UE. An application layer of reception UE 1 may transfer information on an inner ID of reception UE 1 and information on the number of UEs within the group to a V2X layer of reception UE 1. An application layer of reception UE 2 may transfer information on an inner ID of reception UE 2 and information on the number of UEs within the group to a V2X layer of reception UE 2. An application layer of reception UE 3 may transfer information on an inner ID of reception UE 3 and information on the number of UEs within the group to a V2X layer of reception UE 3. An application layer of reception UE 4 may transfer information on an inner ID of reception UE 4 and information on the number of UEs within the group to a V2X layer of reception UE 4.

In addition, the V2X layer of the UE may transfer information on an inner ID of the UE and information on the number of UEs within the group to an AS layer of the UE. Additionally, for example, the V2X layer of the UE may transfer an L2 ID (e.g., a source L2 ID or a destination L2 ID), QoS information, and/or the like together to the AS layer of the UE.

A transmission UE may transmit specific groupcast traffic to multiple reception UEs (S2110). The specific groupcast traffic may be transmitted via a PSSCH and/or a PSCCH.

The multiple reception UEs may determine an HARQ feedback resource (S2120). Each of the multiple reception UEs (e.g., an AS layer of each of the multiple reception UEs) may determine the HARQ feedback resource for the specific groupcast traffic, based on information on its inner ID and information on the number of UEs within the group according to a pre-defined rule.

The transmission UE may determine the HARQ feedback resource (that needs to be received by the transmission UE). The transmission UE may derive or determine HARQ feedback resources of the multiple reception UEs related to the specific groupcast traffic, based on information on its inner ID and information on the number of UEs within the group.

When an application layer provides information on the inner ID of the UE and information on the number of UEs within the group to a V2X layer of the UE, the UE may determine or consider one of groupcast option 1 and groupcast option 2 as a (selectable) HARQ feedback option for the specific groupcast traffic. The V2X layer of the UE may determine or consider one of groupcast option 1 and groupcast option 2 as a (selectable) HARQ feedback option for the specific groupcast traffic. Additionally, according to whether a pre-configured condition is satisfied, the UE may finally determine or consider one of groupcast option 1 and groupcast option 2 as an HARQ feedback option for the specific groupcast traffic. When the respective HARQ feedback resources for multiple reception UEs participating in the groupcast are all supported in the resource pool, the UE may finally determine or consider groupcast option 2 as the HARQ feedback option for the specific groupcast traffic. When the respective HARQ feedback resources for multiple UEs participating in the groupcast are not all supported in the resource pool, the UE may finally determine or consider groupcast option 1 as the HARQ feedback option for the specific groupcast traffic. The determination may be performed in the AS layer of the UE.

When the application layer does not provide the information on the number of UEs within the group to the V2X layer of the UE, the UE may determine or consider groupcast option 1 as the HARQ feedback option for the specific groupcast traffic. When the application layer does not provide the information on the inner ID of the UE and/or information on the number of UEs within the group to the V2X layer of the UE, the UE may determine or consider groupcast option 1 as the HARQ feedback option for the specific groupcast traffic. For example, the V2X layer of the UE may determine or consider groupcast option 1 as the HARQ feedback option for the specific groupcast traffic.

When the application layer and/or the V2X layer provides information on the inner ID of the UE and information on the number of UEs within the group to the AS layer of the UE, the UE may determine or consider one of groupcast option 1 and groupcast option 2 as a (selectable) HARQ feedback option for the specific groupcast traffic. The AS layer of the UE may determine or consider one of groupcast option 1 and groupcast option 2 as a (selectable) HARQ feedback option for the specific groupcast traffic. Additionally, according to whether a pre-configured condition is satisfied, the UE may finally determine or consider one of groupcast option 1 and groupcast option 2 as an HARQ feedback option for the specific groupcast traffic. When the respective HARQ feedback resources for multiple UEs participating in the groupcast are all supported in the resource pool, the UE may finally determine or consider groupcast option 2 as the HARQ feedback option for the specific groupcast traffic. When the respective HARQ feedback resources for multiple UEs participating in the groupcast are not all supported in the resource pool, the UE may finally determine or consider groupcast option 1 as the HARQ feedback option for the specific groupcast traffic. The determination may be performed in the AS layer of the UE.

When the application layer and/or the V2X layer does not provide the information on the number of UEs within the group to the AS layer of the UE, the UE may determine or consider groupcast option 1 as the HARQ feedback option for the specific groupcast traffic. When the application layer and/or the V2X layer does not provide the information on the inner ID of the UE and/or information on the number of UEs within the group to the AS layer of the UE, the UE may determine or consider groupcast option 1 as the HARQ feedback option for the specific groupcast traffic. For example, the AS layer of the UE may determine or consider groupcast option 1 as the HARQ feedback option for the specific groupcast traffic.

Whether at least one of groupcast option 1 and/or groupcast option 2 is supported may be signaled to the UE, specifically for a resource pool. Whether at least one of groupcast option 1 and/or groupcast option 2 is supported may be signaled, specifically for a resource pool, to the UE for each service type, cast type, or QoS requirement. Whether a PSFCH resource related to groupcast option 1 is configured may be signaled, specifically for a resource pool, to the UE for each service type, cast type, or QoS requirement. Whether a PSFCH resource related to groupcast option 2 is configured may be signaled, specifically for a resource pool, to the UE for each service type, cast type, or QoS requirement.

The transmission UE may receive HARQ feedback from the multiple reception UEs. The transmission UE may receive groupcast option 1-based HARQ feedback from the multiple reception UEs. For example, the transmission UE may receive groupcast option 2-based HARQ feedback from the multiple reception UEs.

A specific groupcast option-based HARQ feedback operation may be required for specific groupcast traffic. When the reliability requirement related to the service is high and the transmission UE transmits the corresponding service to the reception UE, the reception UE is required to perform a groupcast option 2-based HARQ feedback operation. When the reception UE performs a groupcast option 1-based HARQ feedback operation for the service, a DTX problem may occur, and therefore, the reception UE is required to perform a groupcast option 2-based HARQ feedback operation for a service having a high reliability requirement. The DTX problem may be a problem where the transmission UE misinterprets that the reception UE has successfully received the PSCCH and the PSSCH, while the reception UE has actually failed to receive the PSCCH and does not transmit a NACK to the transmission UE. Due to the DTX problem, it may be difficult to satisfy the reliability requirement of the service. Therefore, when a specific groupcast option is not supported in the resource pool and a specific groupcast option is not supported for the corresponding traffic and/or service, the transmission UE may perform a blind re-transmission operation. When a PSFCH resource related to a specific groupcast option is not configured, the transmission UE may perform a blind re-transmission operation. The transmission UE may perform re-transmission without receiving the HARQ feedback from the reception UE.

FIG. 22 illustrates a downlink channel access procedure according to an embodiment of the present disclosure.

FIG. 22 illustrates a downlink channel access procedure used during UE initiated channel occupancy time (COT) sharing. FIG. 22(a) illustrates an example of the downlink channel access procedure when a gap is less than 16 $\mu$s, FIG. 22(b) illustrates an example of the downlink channel access procedure when the gap is 16 $\mu$s, and FIG. 22(c) illustrates an example of the downlink channel access procedure when the gap is 25 $\mu$s.

In order to perform uplink (e.g., PUSCH) transmission on a scheduled resource or configured resource, the UE may obtain channel occupancy initiated by the UE by using a category 4 channel access procedure. Furthermore, the UE may share channel occupancy with the base station for base station transmission.

## When information on energy detection (ED) threshold is configured

The UE may receive, from the base station, the energy detection threshold applied when obtaining channel occupancy. For example, the base station may configure the threshold of ED by transmitting "ULtoDL-CO-SharingED-Threshold-r16" as an RRC parameter for the threshold of ED to the UE. When the UE shares channel occupancy with the base station, the base station may transmit a specific channel or a specific signal. Here, uplink transmission may be configured grant (CG)-PUSCH or scheduled uplink (e.g., scheduled grant PUSCH) transmission. After uplink transmission of the UE, downlink transmission of the base station may be performed. In the present disclosure, CG uplink transmission (e.g., CG-PUSCH) may be uplink transmission (e.g., CG-PUSCH) for which the base station semi-statically configures a resource for uplink transmission in advance for the UE, and which is performed by the UE on the resource configured in advance.

When uplink transmission performed by the UE is CG-PUSCH, the UE may receive a table for sharing channel occupancy from the base station. Specifically, the UE may receive, from the base station, a configuration of a table for sharing channel occupancy-related information (e.g., channel occupancy time (COT)) between the base station and the UE by RRC parameter "COT-SharingList-r16". In addition, the UE may receive, from the base station, channel occupancy information corresponding to each row of the table. For example, the channel occupancy information corresponding to each row of the table may be provided through an RRC parameter "cg-COT-Sharing-r16". Here, one of the rows of the table may be configured to indicate that channel occupancy is not shared. When the UE shares, with the base station, channel occupancy initiated by the UE to perform CG-PUSCH, the UE may indicate an index (row index) corresponding to one row of the table, configured from the base station, through COT sharing information included in CG-uplink control information (UCI) of CG-PUSCH. That is, when the UE indicates an index corresponding to one row providing channel occupancy information, the base station may perform downlink transmission by assuming one or more values corresponding to channel occupancy information indicated by the row of the table indicated by the index. Specifically, the channel occupancy information may include duration, offset, CAPC, etc. The duration may represent the number of slots that are available (assumable) in downlink transmission within a time of channel occupancy initiated by the UE. The offset represents a time interval (difference) from an end of a slot in which the base station has detected CG-UCI to a slot in which downlink transmission performed by the base station is started. The CAPC represents a CAPC assumed when the UE shares channel occupancy initiated by the UE with the base station.

## When information on energy detection (ED) threshold is not configured

There may occur a case where the base station does not configure the threshold of ED for the UE. In other words, there may occur a case where the UE is unable to receive the threshold of ED from the base station. That is, the base station may not configure "ULtoDL-CO-SharingED-Threshold-r16" as an RRC parameter for the threshold of ED, and may not configure the threshold of ED for the UE. In this case, when uplink transmission performed by the UE is CG-PUSCH, CG-UCI of CG-PUSCH may include "COT sharing information" indicating whether channel occupancy is shared. When the UE indicates that channel occupancy is shared through CG-UCI (e.g., when a value of COT sharing information is 1), the UE may allow X number of symbols configured from the base station for downlink transmission performed by the base station.

Specifically, the UE may receive, from the base station, RRC parameter "cg-COT-SharingOffset-r16" indicating X number of symbol for downlink transmission, and the base station may allow X number of symbols for UE-initiated shared channel occupancy for downlink transmission. In this case, X number of symbols represent X number of symbols from an end of slot n (slot #n) in which the base station has detected CG-UCI.

In this case, downlink transmission of the base station may be performed after uplink transmission of the UE, and in this case, a length of the downlink transmission may be limited to up to 2 symbols, 4 symbols, or 8 symbols according to a subcarrier spacing. The downlink transmission may be limited to up to 2 symbols when the subcarrier spacing is 15 kHz, up to 4 symbols when the subcarrier spacing is 30 kHz, and up to 8 symbols when the subcarrier spacing is 60 kHz.

Hereinafter, downlink transmission performed by the base station after uplink transmission of the UE will be described. In this case, the downlink transmission performed by the base station may correspond to both a case where the base station has transmitted (configured) an RRC parameter for the threshold of ED to (for) the UE and a case where the base station has not transmitted (configured) the same.

i) When the base station has configured the threshold of ED by configuring, for the UE, "LTLtoDL-CO-SharingED-Threshold-r16" as an RRC parameter for the threshold of ED, the base station may perform downlink transmission including only a DRS after the UE performs uplink (e.g., PUSCH) transmission on a scheduled or configured resource. In the present disclosure, a DRS may include at least one SSB including a primary synchronization signal (PSS), a secondary synchronization signal (SSS), a physical broadcast channel (PBCH), and a DR-RS for the PBCH. In addition, a DRS may include a CORESET for PDSCH that carries system information block 1 (SIB1) and PDCCH for scheduling the same. Furthermore, a DRS may include non-zero power CSI reference signals.

Meanwhile, when the threshold of ED has not been configured since the base station has not configured, for the UE, "ULtoDL-CO-SharingED-Threshold-r16" as an RRC parameter for the threshold of ED, the downlink transmission including only a DRS may be performed only when the subcarrier spacing is 30 kHz or higher. This is because the number of symbols occupied by the SSB included in the DRS is at least 4.

ii) The base station may perform downlink transmission including the DRS after the UE performs uplink (e.g., PUSCH) transmission on a scheduled or configured resource. In this case, in the downlink transmission of the base station, non-unicast transmission for any UE may be multiplexed.

iii) The base station may perform downlink transmission after the UE performs uplink (e.g., PUSCH) transmission on a scheduled or configured resource. In this case, the downlink transmission performed by the base station may include a reference signal (e.g., CSI-RS, tracking RS, etc.) for the UE that has initiated channel occupancy and non-unicast transmission for any UE.

iv) The base station may perform downlink transmission after the UE performs uplink (e.g., PUSCH) transmission on a scheduled or configured resource. In this case, the downlink transmission performed by the base station may not include user plane data for the UE that has initiated channel occupancy, but may include unicast transmission including control plane data (e.g., data for RRC configuration) and non-unicast for any UE.

When channel occupancy initiated by the UE is shared with the base station, the base station may perform, after uplink transmission performed by the UE, channel access based on a specific gap or a gap smaller than the specific gap, and perform the downlink transmission of above-described i) to iv). Hereinafter, a channel access procedure of the base station will be described.

When the gap is less than 16 $\mu$s, the base station may perform downlink transmission after performing a type 2C downlink channel access procedure. The type 2C downlink channel access procedure indicates that the base station performs downlink transmission without performing channel sensing before performing downlink transmission. The duration for downlink transmission may be limited to up to 584 $\mu$s (see 3GPP TS37.213).

| 4.1.2.3 Type 2C DL channel access procedures |
| --- |
| When a <u>gNB</u> follows the procedures in this subclause for transmission of a DL transmission, the <u>gNB</u> does not sense the channel before transmission of the DL transmission. The duration of the corresponding DL transmission is at most 584*us*. |

When the gap is 16 $\mu$s, the base station may perform downlink transmission after performing a type 2B downlink channel access procedure. The type 2B downlink channel access procedure indicates that the base station performs downlink transmission immediately after sensing whether a channel within the duration of 16 $\mu$s (T_f) is idle before performing downlink transmission. 16 $\mu$s (T_f) may include one sensing slot within last 9 $\mu$s of 16 $\mu$s. When a channel is sensed as being idle during an entire interval (e.g., at least 5 $\mu$s) including an interval (e.g., at least 4 $\mu$s) in which sensing is performed in a sensing slot, the channel may be considered to be idle (see 3GPP TS37.213).

---

4.1.2.2          Type 2B DL channel access procedures

A gNB may transmit a DL transmission immediately after sensing the channel to be idle within a duration of $T_f$ = 16$us$. $T_f$ includes a sensing slot that occurs within the last 9$us$ of $T_f$. The channel is considered to be idle within the duration $T_f$ if the channel is sensed to be idle for a total of at least 5$us$ with at least 4$us$ of sensing occurring in the sensing slot.

---

When the gap is 25 $\mu$s, the base station may perform downlink transmission after performing a type 2A downlink channel access procedure. The type 2A downlink channel access procedure indicates that the base station performs downlink transmission immediately after sensing whether a channel is idle during a sensing interval of 25 $\mu$s (T_short_dl) before performing downlink transmission. The sensing interval of (T_short_dl) may be configured with a 16 $\mu$s (T_f) interval and one sensing slot (9 $\mu$s) immediately after the 16 $\mu$s (T_f) interval. The 16 $\mu$s (T_f) interval may include one sensing slot (9 $\mu$s). When a sensing interval of 25 $\mu$s (T_short_dl) (i.e., entire sensing slot) is sensed as being idle, the channel may be considered to be idle during the interval of 25 $\mu$s (T_short_dl) (see 3GPP TS37.213).

---

4.1.2.1          Type 2A DL channel access procedures

An eNB/gNB may transmit a DL transmission immediately after sensing the channel to be idle for at least a sensing interval $T_{short\_dl}$ = 25$us$. $T_{short\_dl}$ consists of a duration $T_r$ = 16$us$ immediately followed by one sensing slot and $T_f$ includes a sensing slot at start of $T_r$. The channel is considered to be idle for $T_{short\_dl}$ if both sensing slots of $T_{short\_dl}$ are sensed to be idle.

---

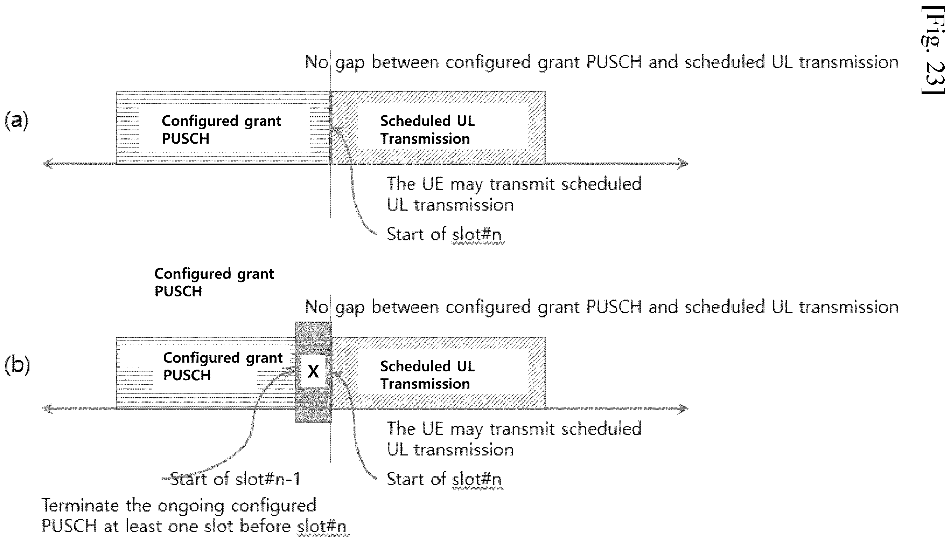

FIG. 23 illustrates scheduling uplink transmission according to an embodiment of the present disclosure.

Specifically, FIG. 23 illustrates that when the UE is scheduled from the base station so as to perform uplink transmission continuously without a gap after a resource configured for autonomous transmission or CG-PUSCH, the UE performs scheduled uplink (scheduled UL) transmission.

When the UE is configured to perform the scheduled uplink transmission, the UE may perform the scheduled uplink transmission without performing channel access when the following conditions are satisfied. Uplink transmission on a resource configured for autonomous transmission or CG-PUSCH may be dropped at a last symbol of a slot (e.g., (n-1)-th slot) prior to a starting time of a slot (e.g., n-th slot) for scheduled uplink transmission.

Hereinafter, conditions for the UE to perform scheduled uplink transmission without performing channel access will be described.

a) The UE needs to perform category 4 channel access (e.g., type 1 uplink channel access) for uplink transmission on a resource configured for autonomous transmission or CG-PUSCH. Furthermore, the UE needs to perform uplink transmission on a resource configured for autonomous transmission or CG-PUSCH prior to a starting time of scheduled uplink transmission.

b) For a resource of a frequency domain for scheduled uplink transmission, all resource blocks (RBs) of an LBT bandwidth (e.g., 20 MHz) that may be occupied by a slot scheduled first among time domain resources configured for scheduled uplink transmission need to be scheduled. Alternatively, all RBs of an uplink bandwidth part (BWP) configured for the UE need to be scheduled. In this case, a starting symbol index of the slot scheduled first among the time domain resources configured for CG-PUSCH may be 0. Alternatively, multiple LBT bandwidths may be present within one BWP. In this case, a resource for autonomous transmission or a resource configured for CG-PUSCH is allocated to at least one LBT bandwidth within one BWP, a resource of a frequency domain for scheduled uplink transmission may occupy all RBs of a subset of one of the at least one LBT bandwidth or occupy all RBs of all LBT bandwidths in which the resource for autonomous transmission or the resource configured for CG-PUSCH is included.

c) The CAPC used by the UE when performing category 4 channel access (e.g., type 1 uplink channel access) for uplink transmission on a resource configured for autonomous transmission or CG-PUSCH needs to be greater than or equal to the CAPC indicated by the base station for scheduled uplink transmission.

d) A sum of a length of uplink transmission on a resource configured for autonomous transmission or CG-PUSCH and a length of scheduled uplink transmission should not exceed a maximum channel occupancy time (MCOT). In this case, the MCOT is an MCOT configured when the UE performs category 4 channel access (e.g., type 1 uplink channel access) for uplink transmission on a resource configured for autonomous transmission or CG-PUSCH.

None of the above-described conditions of a) to d) is satisfied, the UE may drop uplink transmission on a resource configured for autonomous transmission or CG-PUSCH at a last symbol of a slot (e.g., (n-1)-th slot) prior to a starting time of a slot (e.g., n-th slot) for scheduled uplink transmission. Alternatively, the UE may drop uplink transmission on a resource configured for autonomous transmission or CG-PUSCH at least one slot (e.g., (n-1)-th slot) before a starting time of a slot (e.g., n-th slot) for scheduled uplink transmission. Meanwhile, when a time (cancellation guaranteed time) during which uplink transmission is allowed to be dropped has not elapsed, the UE may drop uplink transmission on a resource configured for autonomous transmission or CG-PUSCH at least one slot (e.g., (n-1)-th slot) before a starting time of a slot (e.g., n-th slot) for scheduled uplink transmission. However, the time during which uplink transmission is allowed to be dropped has elapsed, the UE may perform scheduled uplink transmission at a next slot (e.g., (n+1)-th slot) after a starting time of a slot (e.g., n-th slot) for scheduled uplink transmission. In this case, in a channel access procedure for performing scheduled uplink transmission at the next slot (e.g., (n+1)-th slot), category 4 channel access (e.g., type 1 uplink channel access) may be used. Alternatively, when a resource for scheduled uplink transmission is included within an MCOT configured when the UE performs the category 4 channel access (e.g., type 1 uplink channel access) for uplink transmission on a resource configured for autonomous transmission or CG-PUSCH, the UE may perform scheduled uplink transmission based on category 2 channel access (e.g., type 2A uplink channel access).

When the UE has been scheduled from the base station to perform uplink transmission continuously without a gap after a resource configured for autonomous transmission or CG-PUSCH, the UE may perform scheduled uplink transmission without channel access according to the type of scheduled uplink transmission. The type of scheduled uplink transmission may include a PUSCH including uplink-shared channel (UL-SCH), a PUSCH not including UL-SCH, a PUCCH for transmitting uplink control information, uplink transmission (e.g., PRACH preamble, Msg3) related to a random access procedure, a sounding reference signal (SRS), etc. In this case, the PUCCH may include HARQ-ACK, scheduling request (SR), beam-failure recovery request (BFR), or channel state information (CSI).

When the above conditions of a) to d) are satisfied, the UE may perform scheduled uplink transmission without performing channel access (e.g., LBT) regardless of the type of scheduled uplink transmission.

When scheduled uplink transmission is uplink transmission excluding the PUSCH and the above conditions of a), c), and d) are satisfied, the UE may perform scheduled uplink transmission without performing channel access.

When scheduled uplink transmission is uplink transmission excluding the PUSCH including UL-SCH and the above conditions of a), c), and d) are satisfied, the UE may perform scheduled uplink transmission without performing channel access.

Scheduled uplink transmission may be PUCCH including at least one of HARQ-ACK, SR, or BFR. In this case, when interlaced-PUCCH transmission for PUCCH transmission is configured by means of RRC and PUCCH transmission is spread to an LBT bandwidth and scheduled, the UE may perform scheduled PUCCH transmission without performing channel access if the above conditions of a), c), and d) are satisfied. This is for guaranteeing transmission on a scheduled resource as much as possible since latency due to a link failure may significantly increase or a data transfer rate of uplink/downlink transmission may decrease due to a failure in a channel access procedure in the case of PUCCH including at least one of HARQ-ACK, SR, or BFR. Furthermore, the CAPC used for PUCCH transmission may be generally set to 1. Therefore, the CAPC used for PUCCH transmission may be always smaller than or equal to the CAPC used by the UE when performing category 4 channel access (e.g., type 1 uplink channel access) for uplink transmission on a resource configured for autonomous transmission or CG-PUSCH, and thus the above condition of c) may be satisfied.

When scheduled uplink transmission is SRS not including PUSCH, PUCCH, PUSCH not including UL-SCH, and transmission related to a random access procedure (e.g., PRACH preamble, Msg3), the UE may perform scheduled uplink transmission without performing a channel access procedure if the above conditions of a), c, and d) are satisfied. In this case, for the SRS not including PUSCH, PUCCH, PUSCH not including UL-SCH, and transmission related to a random access procedure (e.g., PRACH preamble, Msg3), a category 4 channel access (e.g., type 1 uplink channel access) procedure may be performed, and in this case, the CAPC may be set to 1.

A frame based equipment (FBE)-based LBT operation in an unlicensed band, that is, a channel access method and procedure for semi-static channel occupancy when a semi-static channel access mode is used, will be described. Specifically, the base station and the UE may use the UE initiated channel occupancy to perform the FBE operation. A method for transmitting or receiving a channel between a base station and a UE by using the UE-initiated channel occupancy will be described.

Most devices operating in the unlicensed band operate based on listen-before-talk (LBT), and thus clear channel assessment (CCA) for sensing a channel is performed before data transmission. A communication device (e.g., AP or STA) checks whether a channel is busy by performing carrier sensing before transmitting data. When a radio signal of a predetermined strength or higher is detected in a channel for data transmission, the channel is determined as busy, and the communication device delays access to the channel. This process is called clear channel assessment, and a signal level of determining whether or not a signal is detected is called a CCA threshold. Meanwhile, when no radio signal is detected in the corresponding channel or when a radio signal having a strength smaller than the CCA threshold is detected, the channel is determined to be in an idle state. If the channel is determined to be idle, a UE having data to transmit performs a backoff procedure after a defer period (e.g., arbitration interframe space (AIFS), PCF IFS (PIFS), etc.). The defer period denotes the minimum time that the UE needs to wait after the channel is in an idle state. The backoff procedure causes the UE to wait longer for a random time interval after the defer period. For example, the UE waits while decreasing as much slot time as a random number assigned to the UE within a contention window (CW) while the channel is in an idle state, and the UE that has exhausted all the slot time may attempt to access the corresponding channel.

FIG. 24 illustrates an LBT operation process based on FBE according to an embodiment of the present disclosure.

LBT may be divided into FBE-scheme LBT and load based equipment (LBE)-scheme LBT according to the operating state of the UE (see ETSI). In a case of the FBE scheme, the base station and the UE cannot transmit data during a fixed frame period (FFP) if the channel is occupied by another communication device. The fixed frame period may include a channel occupancy time (COT) and an idle period. In this case, the channel occupancy time may denote a time during which data transmission can be continued when the communication node succeeds in channel access, and may correspond to a duration of 1 ms to 10 ms. The idle duration may be a duration corresponding to at least 5% of the channel occupancy time. A CCA process of observing the channel may be performed during the CCA slot (at least 20 $\mu$s) located at the end of the idle period. The communication node may perform CCA in units of fixed frames. For example, when the channel is unoccupied, a communication node may perform data transmission during the channel occupancy time, and when the channel is occupied, the communication node may hold the data transmission and wait transmission until the CCA slot of the next cycle. A communication node described in the present disclosure is a communication device and may refer to a base station or a UE.

FIG. 25 illustrates an FBE operation according to an embodiment of the present disclosure.

Referring to FIG. 25, a communication node may perform a CCA process during a CCA slot before performing data transmission on a single carrier channel. If the channel is in an idle state as a result of performing CCA, the communication node may perform data transmission. As a result of performing CCA, if the channel is in a busy state, the communication node may perform the CCA process again after waiting for a time obtained by subtracting the CCA slot from the fixed frame period. The communication node performs data transmission during the channel occupancy time, and when the data transmission is terminated, the communication node may wait for a time obtained by subtracting the CCA slot from the idle duration and then perform the CCA process again. Meanwhile, when the channel is in an idle state but the communication node has no data to transmit, the communication node may perform the CCA process again after waiting for a time obtained by subtracting the CCA slot from the fixed frame period.

In a scenario in which an LBE node is absent for a long time at a level determined by a regulation level and base stations (eNB or gNB) capable of performing FBE are synchronized, the FBE scheme may use frequency reuse factor 1. Accordingly, random backoff does not need to be performed, and complexity for channel access can be reduced. The operations of the LBE mode and the FBE mode may be different in terms of channel access. In a scheme of the FBE mode, the communication node may obtain the channel occupancy time through channel access of LBT category 2 just before the fixed frame period. If a gap is 16 us or less within the channel occupancy time initiated and obtained by the base station, the base station and the UE may use the channel access scheme of category 1. When the gap within the channel occupancy time acquired by the base station exceeds 16 us, the base station and the UE may use a channel access scheme of category 2. A channel access operation may be configured such that the relevant constraint conditions are matched to correspond to the operation for the FBE.

FIG. 26 illustrates an LBE operation according to an embodiment of the present disclosure.

Referring to FIG. 26(a), a communication node may perform CCA for each CCA slot for a predetermined duration in order to perform an LBE operation.

Referring to FIG. 26(b), the communication node may perform a CCA process in a CCA slot. If a channel is in an unoccupied state in a first CCA slot, the communication node may transmit data by securing the corresponding length of time with reference to the maximum channel occupancy time. However, if the channel is in an occupied state in the first CCA slot, the communication node may randomly select a value of N and store the selected value as an initial value of the counter value. N may have one of values of 1, 2, ..., and q. The communication node may decrease the configured counter value by 1 if the channel is in an unoccupied state in a specific CCA slot while sensing the channel state in units of CCA slots. When the counter value becomes 0, the communication node may transmit data for the length of time equal to the maximum channel occupancy time.

In the frame based equipment (FBE)-based LBT operation in an unlicensed band, that is, when a channel access mode of semi-static is used, the UE is allowed to transmit data within one channel occupancy duration initiated by the base station, and a channel access procedure for this is defined in the 3GPP standard, and is shown in Table 4.

[Table 4]

---

### 4.3 Channel access procedures for semi-static channel occupancy

If the absence of any other technology sharing a channel can be guaranteed on a long-term basis (e.g. by level of regulation) and if a gNB provides UE(s) with higher layer parameters *ChannelAccessMode-r 16* =*'semistatic'* by SIB1 or dedicated configuration, a periodic channel occupancy can be initiated every $T_x$ within every two consecutive radio frames, starting from the even indexed radio frame at $x \cdot T_x$ wit h a maximum channel occupancy time $T_y$ = $0.95T_x$, where $T_x$ = *Period* in *ms*, is a higher layer p arameter provided in *semiStaticChannelAccessConfig-r16* and $x \in \left\{ 0, 1, \ldots, \frac{20}{T_x} - 1 \right\}$ .

In the following procedures in this clause, when a gNB or UE performs sensing for evaluating a chann el availability, the sensing is performed at least during a sensing slot duration $T_{sl}$ = 9*us*. The correspo nding $X_{Thresh}$ adjustment for performing sensing by a gNB or a UE is described in clauses 4.1.5 and 4.2.3, respectively.

A channel occupancy initiated by a gNB and shared with UE(s) shall satisfy the following:

- The gNB shall transmit a DL transmission burst(s) starting at the beginning of the channel occup ancy time immediately after sensing the channel to be idle for at least a sensing slot duration $T_{sl}$ = 9*us.* If the channel is sensed to be busy, the gNB shall not perform any transmission dur ing the current channel occupancy time.

- The gNB may transmit a DL transmission burst(s) within the channel occupancy time immediately after sensing the channel to be idle for at least a sensing slot duration $T_{sl}$ = 9*us* if the gap b etween the DL transmission burst(s) and any previous transmission burst is more than 16*us*.

- The gNB may transmit DL transmission burst(s) after UL transmission burst(s) within the channel occupancy time without sensing the channel if the gap between the DL and UL transmission burs ts is at most 16*us*.

- A UE may transmit UL transmission burst(s) after detection of a DL transmission burst(s) within the channel occupancy time as follows:

> - If the gap between the UL and DL transmission bursts is at most 16*us,* the UE may transm it UL transmission burst(s) after a DL transmission burst(s) within the channel occupancy time without sensing the channel.
>
> - If the gap between the UL and DL transmission bursts is more than 16*us,* the UE may tran smit UL transmission burst(s) after a DL transmission burst(s) within the channel occupancy ti me after sensing the channel to be idle for at least a sensing slot duration $T_{sl}$ = 9*us* within a 25*us* interval ending immediately before transmission.

- The gNB and UEs shall not transmit any transmissions in a set of consecutive symbols for a dur ation of at least $T_z$ = max($0.05T_x$ , 100*us*) before the start of the next channel occupancy ti me.

If a UE fails to access the channel(s) prior to an intended UL transmission to a gNB, Layer 1 notifies higher layers about the channel access failure.

---

The base station may indicate to the UE that the channel access mode is semi-static through a higher layer parameter. For example, the base station may indicate that the channel access mode is semi-static by using a higher layer parameter called "channelaccessmode-r16" through SIB1 or dedicated RRC configuration. In this case, a periodic channel occupancy may be initiated every T_x within every two consecutive radio frames, starting from the even-indexed radio frame at x*T_x while having a maximum channel occupancy time (T_y). In this case, T_y=0.95*T_x, T_x is a channel occupancy period in units of ms, and x is a value indicated by the base station through a higher layer parameter (semiStaticChannel AccessConfig-r16) and may have a value of 0, 1, ..., 20/T_x-1. A sensing slot duration (T_sl) described in the present disclosure may be 9 us. The dedicated RRC described in the present disclosure may be a dedicated RRC for a specific UE, and the dedicated RRC configuration may be configuration information configured by a base station in a UE through the dedicated RRC for the specific UE.

A single channel occupancy initiated by a base station and shared with UEs needs to satisfy the following conditions:

i) The base station may transmit a downlink transmission burst starting at the beginning of the channel occupancy time immediately after detecting that the channel is in an idle state for at least sensing slot duration (T_sl). If the channel is detected to be busy, the base station may not perform any transmission during the current channel occupancy time.

ii) The base station may transmit a downlink transmission burst within the channel occupancy time immediately after detecting that the channel is in an idle state for at least T_sl if there is a gap exceeding 16 us between the downlink transmission burst and a previous transmission burst.

iii) The base station may transmit a downlink transmission burst after uplink transmission burst within the channel occupancy time without detecting the channel if a gap between the downlink and uplink transmission bursts is at most 16 us.

iv) The UE may transmit an uplink transmission burst after detecting a downlink transmission burst within the channel occupancy time as following cases of iv-1 and iv-2.

iv-1) If a gap between the uplink and downlink transmission bursts is at most 16 us, the UE may transmit an uplink transmission burst after a downlink transmission burst within the channel occupancy time without detecting the channel.

iv-2) If a gap between the uplink and downlink transmission bursts exceeds 16 us, the UE may transmit an uplink transmission burst after a downlink transmission burst within the channel occupancy time after detecting that the channel is in an idle state for at least one sensing slot duration (T_sl) within 25 us spacing ending immediately before transmission.

v) The base station and UE cannot transmit any transmission in a set of consecutive symbols for at least T_z duration before the next channel occupancy time starts. In this case, T_z is max(0.05 T_x, 100 us), and max(a, b) is a function that returns a larger value between a and b.

Conventionally, in the unlicensed band, when the channel access mode is semi-static, a channel occupancy is initiated by the UE, or the base station and the UE share a channel occupancy time within the channel occupancy initiated by the UE, and thus the UE and the base station cannot perform data transmission. Hereinafter, a method in which a channel occupancy is initiated by a UE, or a base station and the UE share a channel occupancy time within the channel occupancy initiated by the UE, to perform data transmission will be described.

When the UE operates as a channel occupancy initiating device, a signaling method for performing the FBE operation is as follows.

Similar to a case where the base station operates as a channel occupancy initiating device, the base station may instruct the UE to operate as a channel occupancy initiating device on the current network through higher layer signaling such as SIB 1 or dedicated RRC configuration. The base station may identify that the current network situation is in a controlled environment or in a single network environment mentioned in the regulation, or may identify that the communication node operating as an LBE does not exist for a long time at the level determined by regulation. In addition, the base station may identify that multiple base stations capable of performing FBE are synchronized. In other words, the base station recognizes a scenario by which the UE may perform the FBE operation, and thus the base station may instruct the UE to operate as a channel occupancy initiating device and transmit an uplink burst as the FBE operation through RRC configuration or MAC CE.

Alternatively, when the base station instructs the UE to transmit an uplink channel or signal through scheduling, the base station may instruct, through dynamic L1 signaling, the UE to initiate a channel occupancy time (COT) as a channel occupancy initiating device to perform transmission, and share the corresponding COT with the base station to be used for transmission of the UE and the base station. Specifically, the instruction by the base station to the UE through dynamic L1 signaling may be performed through an uplink (UL) grant or a downlink (DL) grant including scheduling information for transmitting an uplink channel or signal. Alternatively, the base station may provide an instruction to grouped UEs existing in a network through group common signaling.

The base station may instruct, when the UE transmits an uplink channel or a signal, whether to perform transmission based on the UE-initiated COT as a channel occupancy initiating device or perform transmission based on a channel occupancy time shared after being initiated by the base station (shared gNB-initiated COT), through dynamic L1 signaling. In addition, at the time of receiving a downlink channel or signal scheduled by the base station, the UE may determine, through dynamic L1 signaling, whether to receive the channel or signal based on the COT shared after being initiated by the UE or receive the channel or signal based on the COT shared after being initiated by the base station. The instruction by the base station to the UE through dynamic L1 signaling may be performed through a UL grant or a DL grant including scheduling information for transmission of an uplink channel or signal. Alternatively, the base station may provide an instruction to grouped UEs existing in a network through group common signaling.

Meanwhile, there may be a case where the UE does not transmit/receive an uplink/downlink channel or a signal according to a UL grant or a DL grant through scheduling using dynamic L1 signaling from the base station, that is, a case where the UE performs uplink transmission through a configured UL grant. In this case, through dynamic L1 signaling, the base station may be configured not to allow the UE to determine whether to perform transmission according to the UE-initiated COT as an occupancy initiating device or perform transmission according to the COT initiated by the base station.

When the UE may receive downlink transmission through downlink detection and recognize a COT shared after being initiated by the base station and FFP-g, the UE may perform, under an assumption of the COT shared after being initiated by the base station, uplink transmission according to the configured UL grant in a duration rather than an idle duration within the FFP-g. In this case, FFP-g may be a fixed frame period configured in the base station.

There may be a case where the UE fails to receive downlink transmission through downlink detection and thus the UE cannot assume the FFP-g and the COT shared after being initiated by the base station, or the UE configures the UE-initiated COT in an FFP-u duration. In this case, if the resource for uplink transmission by an uplink grant configured within the UE-initiated COT is configured, the UE may assume that the uplink transmission by the configured UL grant is performed within the UE-initiated COT. Accordingly, the UE may perform uplink transmission according to the UL grant configured in a UE-initiated channel occupancy duration within a duration rather than an idle duration in the FFP-u. In this case, FFP-u may correspond to a fixed frame period configured in the UE.

There may be a case where the base station may schedule, for the UE, an uplink channel or a signal through an uplink grant or a downlink grant. In this case, the base station may configure, for the UE through RRC signaling, information on a channel access-related field included in the uplink grant or downlink grant. When the UE is configured with information on the channel access-related field through RRC signaling, the UE may provide an instruction, through the channel access-related field included in the uplink grant or downlink grant, to determine whether to perform transmission according to the COT shared after being initiated by the base station or perform transmission according to the UE-initiated COT. However, there may be a case where the UE does not receive configuration of information on a channel access-related field included in the uplink grant or downlink grant from the base station through RRC signaling, or a case where information on a channel access-related field is configured to be 0 bits through RRC signaling, that is, the information on the channel access-related field is 0 bits. That is, the base station cannot instruct the UE whether to perform transmission according to the UE-initiated COT or perform transmission according to the COT shared after being initiated by the base station. In this case, the UE may perform uplink transmission in the same manner as performing uplink transmission by the configured uplink grant. That is, the UE may receive the downlink channel through downlink detection and recognize FFP-g and a COT shared after being initiated by the base station, and the UE may perform uplink transmission in a duration rather than an idle duration within the FFP-g duration. However, when the UE cannot assume the FFP-g and the COT shared after being initiated by the base station due to non-reception of the downlink channel through downlink detection, the UE may perform uplink transmission in a duration rather than an idle duration within the FFP-u duration configured in the UE by assuming the UE-initiated COT in the FFP-u duration.

When uplink channel transmission is scheduled for the UE and uplink bursts to be transmitted by the UE exist, the UE may transmit the uplink bursts at the UE-initiated COT. In addition, the UE may share the channel occupancy with the base station within the UE-initiated COT, and the uplink burst transmission of the UE and the downlink burst transmission of the base station may be performed within the channel occupancy shared after being initiated by the UE. In this case, the channel occupancy shared with the base station within the COT shared after being initiated by the UE needs to satisfy the following conditions.

i) The UE may transmit an uplink transmission burst starting at the position at which the channel occupancy time starts immediately after detecting that the channel is in an idle state for at least sensing slot duration (T_sl). If the channel is detected to be busy, the UE may not perform any transmission during the current channel occupancy time. However, after the base station performs downlink transmission within the channel occupancy time initiated by the base station and the UE detects the DL transmission burst during the channel occupancy time, the UE may perform data transmission according to following methods i-1) and i-2).

i-1) The UE may transmit an uplink transmission burst after a downlink transmission burst within the channel occupancy time without detecting the channel if a gap between the uplink and downlink transmission bursts is at most 16 us.

i-2) If a gap between the uplink and downlink transmission bursts exceeds 16 us, the UE may transmit an uplink transmission burst after a downlink transmission burst within the channel occupancy time after detecting that the channel is in an idle state for at least one sensing slot duration (T_sl) within a 25 us interval ending immediately before transmission.

ii) If there is a gap exceeding 16 us between an uplink transmission burst and a previous transmission, the base station may transmit an uplink transmission burst within the channel occupancy time immediately after detecting that the channel is in an idle state for at least T_sl.

iii) The UE may transmit an uplink transmission burst after DL transmission burst within the channel occupancy time without detecting the channel if a gap between the uplink and downlink transmission bursts is at most 16 us.

iv) The base station may transmit a downlink transmission burst after detecting an uplink transmission burst within the channel occupancy time as following cases of iv-1 and iv-2.

iv-1) If a gap between the uplink and downlink transmission bursts is at most 16 us, the base station may transmit a downlink transmission burst after an uplink transmission burst within the channel occupancy time without detecting the channel.

iv-2) If a gap between the uplink and downlink transmission bursts exceeds 16 us, the base station may transmit a downlink transmission burst after an uplink transmission burst within the channel occupancy time after detecting that the channel is in an idle state for at least one sensing slot duration (T_sl) within a 25 us interval ending immediately before transmission.

v) The base station and UE may not transmit any transmission in a set of consecutive symbols for at least T_z duration before the next channel occupancy time starts. In this case, T_z is max(0.05 T_x, 100 us).

When the base station operates as a channel occupancy initiating device, one base station can manage and schedule uplink transmission for different UEs, and thus multiplexing between different UEs within one channel occupancy can be flexibly performed. However, when the UE operates as a channel occupancy initiating device, a collision on transmission between UEs may occur due to channel occupancy times initiated at different time points or different lengths (number of symbols). Specifically, when the base station performs downlink transmission by sharing the UE-initiated COT with the base station, there may exist channel occupancy times initiated by a plurality of UEs at different times or at different lengths. In this case, ambiguity about channel access for downlink transmission by the base station may occur depending on whether the base station has detected uplink transmission performed by different UEs. Therefore, in the present disclosure, a method for solving a collision problem caused by channel occupancy times initiated by different UEs at different time points or different lengths is proposed. In addition, a method for resolving ambiguity about channel access for downlink transmission when a base station performs the downlink transmission by sharing a channel occupancy time between the UE and the base station is proposed.

When the channel access mode operates in an LBE mode rather than a semi-static mode, there may be a case where the UE performs autonomous transmission or configured grant PUSCH transmission in an existing unlicensed band. In this case, the PUSCH transmitted by the UE may include UCI. The UCI may include HARQ-ID, new data indication (NDI), RV, CAPC, and channel occupancy time sharing (COT sharing) information. The base station may identify a channel occupancy time, which is shared with the base station within the UE-initiated COT, based on the CAPC and COT sharing information included in the UCI transmitted by the UE. In addition, the base station may perform downlink transmission within the UE-initiated COT.

When the channel access mode is in a semi-static mode, the UE may transmit a configured grant PUSCH by sharing the UE-initiated COT with the base station. In this case, the UCI included in the PUSCH may include channel occupancy time sharing information. The base station may identify the UE-initiated COT based on the COT sharing information included in the UCI transmitted by the UE. In addition, the base station may transmit a downlink burst by performing channel access within the UE-initiated COT. In this case, channel access may be performed according to a gap length. For example,

i) When transmission of a downlink burst needs to be started and ended within the UE-initiated COT, the base station may perform channel access according to each gap length and transmit the downlink burst. As another example, when the transmission of the downlink burst starts within the UE-initiated COT, but the end time of the downlink burst is not included within the UE-initiated COT, the base station may stop downlink burst transmission outside the UE-initiated COT in units of slots or symbols. This is to ensure that the downlink burst is transmitted only within the UE-initiated COT.

ii) When the transmission of the downlink burst starts within the UE-initiated COT, but the end time of the downlink burst is not included within the UE-initiated COT, the base station may perform channel sensing again in order to transmit a downlink burst that is not included within the UE-initiated COT. Specifically, for transmission of a downlink burst not included within the UE-initiated COT, the base station may perform channel sensing within a radio frame of duration $x*T\_x$ after the UE-initiated COT and configure the channel occupancy, so as to transmit a downlink burst.

iii) There may be a case where the transmission of the downlink burst starts within the UE-initiated COT, but the end time of the downlink burst is not included within the UE-initiated COT. In this case, if the length of the downlink burst not included within the UE-initiated COT is included in duration $x*T\_x$ of the FBE operation in which the UE-initiated channel occupancy time exists, the base station may sense a channel for one sensing slot duration ($T\_sl$) and may transmit a downlink burst when the sensed channel is in an idle state.

Unlike the configured grant PUSCH, a UE, which transmits a channel and a signal configured through scheduling from a base station and a channel used for a random access procedure, may operate as a channel occupancy initiating device, and in this case, the UE-initiated COT may be shared with the base station. With regard to a channel and a signal configured through scheduling and a channel used for a random access procedure, there is no mechanism for the UE to provide the COT sharing information to the base station through the PUSCH. Accordingly, the base station cannot identify information related to channel occupancy shared after being initiated by the UE which operates as a device for initiating channel occupancy. In this case, ambiguity may occur in a channel access method performed by the base station to transmit the downlink burst. Hereinafter, a method for resolving the ambiguity of the channel access method will be described.

A channel and a signal configured through scheduling from the base station and a channel used for a random access procedure may be transmitted on a resource scheduled based on resource allocation information on time and frequency resources transmitted by the base station. Specifically, when the base station transmits downlink control information through a PDCCH and the UE successfully receives the PDCCH, the base station may transmit resource allocation information to the UE, and the UE may perform uplink transmission based on the resource allocation information. In this case, the channel used for the random access procedure may be a PRACH for a contention-free random access and a PRACH for a 2-step random access procedure, except for the PRACH of the contention-based random access procedure. Accordingly, the UE may transmit a channel and a signal scheduled from the base station to the base station, and the base station may detect the channel and signal transmitted from the UE. In this case, the base station may determine the length of the COT shared after being initiated by the UE based on the resource allocation information configured for the UE. In this case, the resource allocation information may be time domain resource allocation (TDRA) information.

When the UE and the base station are synchronized in the FBE mode, the base station may transmit downlink bursts within duration T_y by considering the length of the COT shared after being initiated by the UE and duration T_x. T_y may be a duration excluding a duration during which the base station performs channel sensing within the duration T_x, and may correspond to 0.95*T_x [ms]. In this case, if there is a gap exceeding 16 us, the base station may transmit a downlink burst if the channel is in an idle state after sensing the channel for one sensing slot duration (T_sl).

In order to perform LBT during operation in an LBE mode, a channel access priority class may be configured in a channel and a signal through scheduling and a channel used in a random access procedure. The base station and the UE may determine the length of the UE-initiated COT with reference to the maximum channel occupancy time corresponding to the channel access priority class used by each channel and signal. The length of the channel occupancy time assumed by the base station and the UE for the channel and signal through scheduling and the channel used in the random access procedure is as follows.

i) When only PUSCH is transmitted without PUCCH or UL-SCH, the LBT priority class or channel access priority may be 1. In this case, the length of the channel occupancy time that can be used may be configured to be 2 ms, which is the MCOT value, as shown in Table 5.

ii) The priority class or channel access priority class of the PUSCH related to the random access procedure without PRACH and user plane data may correspond to 1. In this case, the length of the UE-initiated COT may be configured to be 2 ms, which is the MCOT value, as shown in Table 5.

iii) SRS not including PUSCH may have an LBT priority class or a channel access priority class of 1. In this case, the length of the UE-initiated COT may be configured to be 2 ms, which is the MCOT value, as shown in Table 5.

iv) For PUSCHs except for i) to iii), the length of the channel occupancy time may be configured with reference to traffic transmitted by the UE or with reference to the channel access priority class indicated by the base station to the UE. Specifically, the MCOT value shown in Table 5 may be configured to be the length of the channel occupancy time.

v) When various types of uplink channels and signals are mixed to configure one uplink burst, the length of the channel occupancy time may be configured as the longest MCOT length among MCOT lengths that can be configured for each channel and signal. Alternatively, the length of the channel occupancy time may be configured as the MCOT having the longest length in time with reference to a resource configured to transmit the mixed uplink burst.

Table 5 shows the values of parameters used for channel access for each channel access priority class for uplink transmission used in the LTE LAA system.

[Table 5]

| LBT priority class | n | CWmin | CWmax | MCOT | Set of CW sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms (see note 1) or 10 ms (see note 2) | {15,51,63,127,255,511,1023} |
| 4 | 7 | 15 | 1023 | 6ms (see note 1) or 10 ms (see note 2) | {15,31,63,127,255,511,1028} |

NOTE 1: The MCOT of 6 ms may be increased to 8 ms by inserting one or more gaps. The minimum duration of a pause shall be 100 $\mu$s. The maximum duration (Channel Occupancy) before including any such gap shall be 6 ms. The gap duration is not included in the channel occupancy time.

NOTE 2: If the absence of any other technology sharing the carrier can be guaranteed on a long term basis (e.g. by level of regulation), the maximum channel occupancy time ( MCOT) for LBT priority classes 3 and 4 is for 10 ms, otherwise, the MCOT for LBT prio rity classes 3 and 4 is 6ms as in note 1.

Referring to Table 5, the value of MCOT of 6 ms may be increased to 8 ms when one or more gaps are included in transmission. The gap refers to a time interval from interruption of transmission in a carrier to the resumption of transmission. In this case, the minimum value of the duration of the gap may be 100 us. In addition, the maximum value of the duration of the transmission performed before the gap is included may be 6 ms. The duration of the gap may not be included in the channel occupancy time.

When the value of the channel access priority class is 3 or 4 and it is guaranteed that no other radio access technology is used in a carrier in which the channel access is performed, the value of the MCOT may be 10 ms. In this case, other wireless access technologies may include Wi-Fi. In other cases, the MCOT value may be determined as in NOTE 1 of Table 5.

MCOT represents a time interval in which an initiating node can continuously occupy the channel of one carrier on the unlicensed band as much as possible. A gap that is a duration during which transmission is not performed may be included between a plurality of transmissions, and when the gap is included, the value of MCOT may be applied differently.

Hereinafter, in the present disclosure, when a base station and a UE operate as FBE, that is, when the channel access mode is semi-static, a method in which the base station and the UE perform transmission within the COT initiated by the base station, the COT being shared between the base station and the UE, will be described.

First, a signaling method for performing an FBE operation when a UE operates as a channel occupancy initiating device will be described. A base station may indicate to a UE that the UE can operate as a channel occupancy initiating device, through higher layer signaling such as SIB1 or dedicated RRC configuration. In addition, the base station may provide information about the FFP to the UE through higher layer signaling such as SIB 1 or dedicated RRC configuration, and the UE having received the information may configure the FFP.

However, there may be a case where the base station does not receive configuration of signaling notifying of information about a semi-static channel access mode or information about an FFP through SIB1 that the UE can receive before performing RRC connection and the base station receives configuration of signaling notifying of information about a semi-static channel access mode or information about an FFP through SIB1 that the UE can receive after RRC connection. In this case, the UE needs to assume a PRACH preamble, which is transmitted during a random access procedure in which the UE needs to perform transmission before RRC connection, and an FFP configured in the UE for Msg3 transmission. This is because the PRACH preamble and Msg3 need to be transmitted before RRC connection. That is, during operating in the FBE mode, transmission is not allowed within an idle duration, transmission is allowed in a duration remaining after excluding the idle duration within the FFP duration, and thus when the UE fails to receive information on the channel access mode or information on the FFP from the base station, the UE may perform uplink transmission by assuming that the FFP configured in the base station as the FFP of the UE. In this case, the UE may perform uplink transmission in a duration remaining after excluding an idle duration of the FFP duration configured in the base station. The base station may perform downlink transmission in a duration remaining after excluding the idle duration in the FFP configured in the base station. If the FFP assumed by the UE is different from the FFP configured in the base station, downlink transmission may not be performed in a duration remaining after excluding the idle duration in the FFP configured in the base station, but the FFP assumed by the UE is the same as the FFP configured in the base station, and thus the base station may perform downlink transmission in a duration remaining after excluding the idle duration in the FFP configured in the base station. In other words, if the base station and the UE have different FFPs, a duration during which the base station performs downlink transmission may correspond to a duration remaining after excluding the idle duration in the FFP configured in the base station, but may correspond to the idle duration in the FFP configured in the UE.

Even before RRC connection, the UE may receive a PRACH occasion for transmitting the PRACH from the base station. The base station may configure the PRACH occasion in the UE within a duration remaining after excluding the idle duration in the FFP configured in the base station. When the UE fails to receive information on the channel access mode or information on the FFP from the base station, the UE may perform uplink transmission by assuming the FFP configured in the base station as the FFP of the UE. In this case, when the UE performs uplink transmission, whether to perform transmission without channel sensing or perform transmission after channel sensing needs to be defined.

The base station may configure a PRACH occasion in the UE regardless of the idle duration in the FFP configured in the base station. In other words, a part/all of the PRACH occasions may be included in the idle duration in the FFP configured in the base station. In this case, the UE may transmit the PRACH on a PRACH occasion configured in a duration remaining after excluding the idle duration in the FFP configured in the base station. The UE may fail to receive downlink transmission from the base station, and perform uplink transmission in a duration excluding the idle duration in the FFP. A method for performing uplink transmission by a UE is as follows. An uplink/downlink burst in the disclosure may include an uplink/downlink channel and signal.

i) The UE may transmit an uplink burst starting at the position at which the channel occupancy time starts immediately after detecting that the channel is in an idle state for at least sensing slot duration (T_sl) and including channels or signals transmitted via uplink before RRC connection. As a result of channel sensing, if the channel is detected to be busy, the UE may not perform any transmission during the current channel occupancy time. However, when the UE detects a downlink burst transmitted within the channel occupancy initiated by the base station, the UE may transmit the uplink burst according to the i-1 and i-2 methods within the channel occupation time initiated by the base station.

i-1) The UE may transmit an uplink burst after an uplink burst without sensing the channel if a gap between the downlink and uplink bursts is at most 16 us before RRC connection.

i-2) If a gap between downlink and uplink bursts before RRC connection exceeds 16 us, the UE may transmit an uplink burst after a downlink burst within the channel occupancy time after detecting that the channel is in an idle state for at least one sensing slot duration (T_sl) within a 25 us interval ending immediately before uplink burst transmission.

ii) If there is a gap exceeding 16 us between the UL and previous transmission, the UE may transmit an uplink burst within the channel occupancy time after detecting that the channel is in an idle state for at least one sensing slot duration (T_sl).

iii) The UE may transmit an uplink burst after the downlink burst within the channel occupancy time without sensing the channel if a gap between the downlink and uplink bursts is at most 16 us.

iv) The base station may transmit a downlink burst after detecting an uplink burst transmitted within the channel occupancy time before RRC connection.

iv-1) If a gap between the uplink and downlink bursts is at most 16 us, the base station may transmit a downlink burst after an uplink burst transmitted within the channel occupancy time before RRC connection without sensing the channel.

iv-2) If a gap between uplink and downlink bursts exceeds 16 us, the base station may detect the channel in an idle state for at least one sensing slot duration (T_sl) within a 25 us interval ending immediately before downlink burst transmission. Thereafter, the base station may transmit the downlink burst after the uplink burst transmitted within the channel occupancy time before RRC connection.

v) The base station and UE cannot transmit any transmission in a set of consecutive symbols for at least duration T_z before the next channel occupancy time starts. T_z may be max (0.05 T_x, 100 us).

There may be a case where different FFPs are configured between the UE and the base station to perform uplink transmission and downlink transmission. Hereinafter, a method in which a UE performs uplink transmission and a method in which a base station performs downlink transmission will be described.

FIGS. 27 to 30 illustrate a method for performing uplink transmission and downlink transmission when different FFPs are configured for a base station and a UE according to an embodiment of the present disclosure. FFP-u of FIGS. 27 to 30 is an FFP configured for the UE, and FFP-g is an FFP configured for the base station. Idle-u is an idle period configured for the UE, and idle-g is an idle period configured for the base station.

Referring to FIG. 27, different FFPs may be configured for the base station and the UE. In this case, the base station may not perform downlink transmission in an idle period of the FFP configured for the base station, and may perform downlink transmission in an idle period of the FFP configured for the UE. In other words, the UE may receive downlink transmission performed by the base station in the idle period of the FFP configured for the UE. Similarly, the UE may not perform uplink transmission in the idle period of the FFP configured for the UE, and perform uplink transmission in the idle period of the FFP configured for the base station. In other words, the base station may receive uplink transmission performed by the UE in the idle period of the FFP configured for the base station.

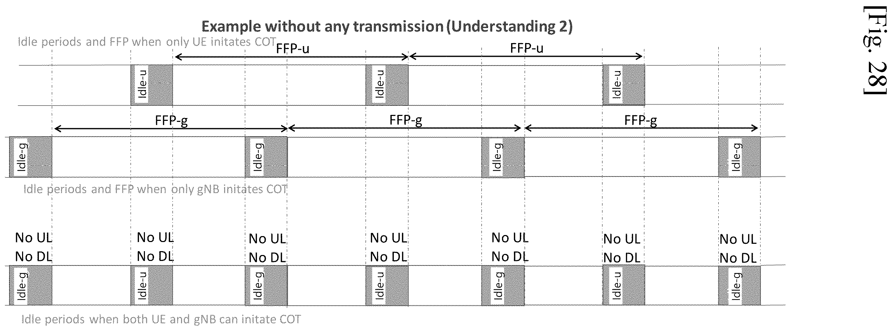

Referring to FIG. 28, different FFPs may be configured for the base station and the UE. In this case, the base station and the UE may assume that uplink transmission and downlink transmission are performed in none of the idle periods. In other words, the base station and the UE may assume that uplink transmission and downlink transmission are not performed in the idle period of the FFP configured for the base station and the idle duration of the FFP configured for the UE. That is, it may be assumed that, in the idle period of the FFP configured for the base station, no downlink transmission is performed by the base station and no uplink transmission is performed by the UE. Similarly, it may be assumed that, in the idle period of the FFP configured in the UE, no downlink transmission is performed by the UE and no uplink transmission is performed by the base station.

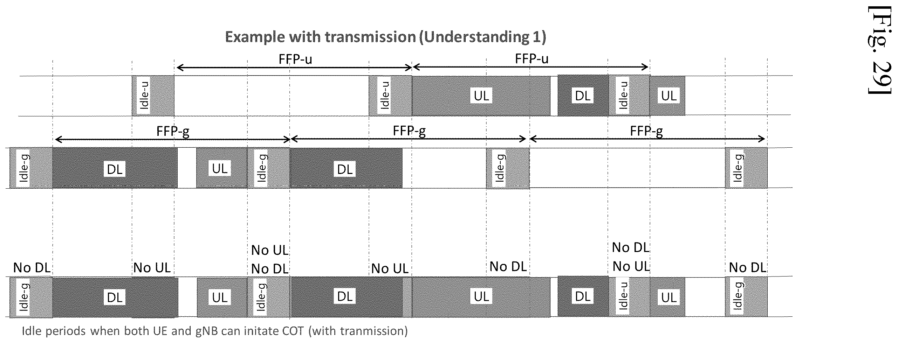

Referring to FIG. 29, different FFPs may be configured for the base station and the UE. In this case, the base station may not perform downlink transmission only in an idle period of an FFP configured for the base station, and may perform downlink transmission in an idle period of an FFP configured for the UE. In other words, the UE may receive the downlink transmission performed by the base station in the idle period of the FFP configured for the UE. The UE may perform uplink transmission in the idle period of the FFP configured for the base station without performing uplink transmission in the idle period of the FFP configured for the UE. In other words, the base station may receive the uplink transmission performed by the UE in the idle period of the FFP configured for the base station.

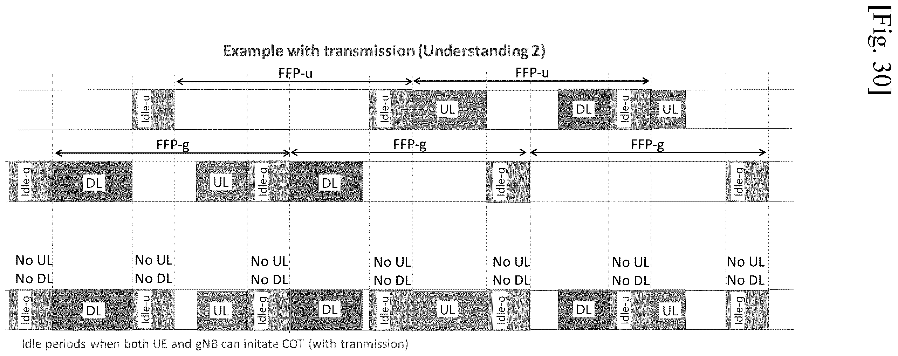

Referring to FIG. 30, different FFPs may be configured for the base station and the UE. In this case, the base station and the UE may assume that uplink transmission and downlink transmission are performed in none of the idle durations. In other words, the base station and the UE may assume that uplink transmission and downlink transmission are not performed in the idle period of the FFP configured for the base station and the idle period of the FFP configured for the UE. That is, it may be assumed that, in the idle period of the FFP configured for the base station, no downlink transmission is performed by the base station and no uplink transmission is performed by the UE. Similarly, it may be assumed that, in the idle period of the FFP configured for the UE, no downlink transmission is performed by the UE and no uplink transmission is performed by the base station. The uplink transmission performed by the UE to the base station may be scheduled from the base station. In addition, a period for performing downlink transmission or uplink transmission may be configured in a period remaining after excluding the idle periods within the FFP configured for the base station and the FFP configured for the UE. Accordingly, in a period remaining after excluding the idle period within the FFP configured for the base station, a period for downlink transmission and a period for uplink transmission may be configured. The base station may perform downlink transmission in a period, in which downlink transmission is configured, within a duration remaining after excluding the idle duration in the FFP configured for the base station, and may receive uplink transmission performed by the UE in a period in which uplink transmission is configured. Similarly, the UE may perform uplink transmission when uplink transmission is configured in a period remaining after excluding the idle duration within the FFP configured in the UE, and may receive downlink transmission performed by the base station when downlink transmission is configured.

The method described with reference to FIGS. 27 to 30 may be applied when the base station and the UE recognize the FFPs configured for the base station and the UE, respectively. However, the base station may notify the UE of the FFP configured for the base station through SIB1 or dedicated signaling. Therefore, ambiguity about the FFP configured for the base station does not occur between the base station and the UE. However, if UE-initiated COT is shared with the base station in the FFP configured for the UE, the base station may not be able to identify the UE-initiated COT. If the base station detects uplink transmission performed by the UE in the FFP configured for the UE, the base station may determine channel occupancy time in the FFP configured for the UE. In addition, the base station may perform downlink transmission before an idle period within the determined channel occupancy time. In this case, a condition in which the base station performs downlink transmission and a channel sensing method will be described.

If there is a gap exceeding 16 us between the downlink transmission burst and the previous transmission, the base station may detect a channel which is in an idle state for one sensing slot duration (T_sl), and may transmit the DL burst within the channel occupancy time immediately after detection. If a gap between the downlink burst and the uplink burst is at most 16 us, the base station may transmit the downlink transmission burst after the uplink transmission burst within the channel occupancy time without sensing the channel.

However, if the base station fails to detect uplink transmission in the FFP configured for the UE, the base station may not recognize the UE-initiated COT. Accordingly, the base station may perform downlink transmission only in a period remaining excluding the idle period of the FFP configured for the base station. The base station may perform channel sensing for at least one sensing slot duration (T_sl) to detect that the channel is in an idle state, and may transmit a downlink burst starting at the position at which the channel occupancy time starts immediately after detection. If the channel is detected to be busy as a result of the channel sensing, the base station may not perform any transmission during the FFP period configured for the base station. If there is a gap exceeding 16 us between the downlink burst and the previous transmission, the base station may perform channel sensing for at least one sensing slot period to detect a channel which is in an idle state, and may transmit a downlink burst in the FFP configured for the base station immediately after detection.

A method in which different FFPs are configured for a plurality of UEs and the UE performs uplink transmission will be described.

When the base station configures different FFPs for multiple different UEs through UE specific dedicated signaling, one UE cannot identify whether different UEs are configured with the same FFP or different FFPs. In this case, one UE may perform uplink transmission in a period remaining after excluding the idle period of the configured FFP without performing uplink transmission within the idle duration. In addition, when the UE shares the COT initiated by the base station within the FFP configured for the base station, the UE may not perform uplink transmission in an idle period within the shared channel occupancy time.

Communication in the conventional unlicensed band mostly operates based on listen-before-talk (LBT), and thus LBT is performed also for channel access in the NR-U system for coexistence with existing devices. Specifically, the channel access method in the unlicensed band in the NR may be classified into the following four categories according to the presence/absence of LBT/application method.

- Category 1: No LBT

    - The TX entity does not perform the LBT procedure for transmission.

- Category 2: LBT without random backoff

    - The Tx entity senses whether a channel is idle in a first interval without random backoff to perform transmission. That is, the Tx entity may perform transmission through the channel immediately after the channel is sensed to be idle in the first interval. The first interval is an interval having a predetermined length immediately before the Tx entity performs the transmission. According to an embodiment, the first interval may be an interval having the length of 25 $\mu$s, but the present disclosure is not limited thereto.

- Category 3: LBT in which random backoff is performed using contention window (CW) having fixed size

- The Tx entity obtains a random value within the CW having the fixed size, configures the same as an initial value of a backoff counter (or backoff timer) N, and performs backoff by using the configured backoff counter N. That is, in the backoff procedure, the Tx entity decreases the backoff counter by 1 whenever the channel is sensed to be idle for a predetermined slot period. Here, the predetermined slot period may be 9 $\mu$s, but the present disclosure is not limited thereto. The backoff counter N is decreased by 1 from the initial value, and when the value of the backoff counter N reaches 0, the Tx entity may perform the transmission. Meanwhile, in order to perform backoff, the Tx entity first senses whether the channel is idle in a second interval (that is, a defer duration Td). According to an embodiment of the present disclosure, the Tx entity may sense (determine) whether the channel is idle in the second interval according to whether the channel is idle for at least a part of period (e.g., one slot period) within the second interval. The second interval may be configured based on the channel access priority class of the Tx entity, and includes a period of 16 $\mu$s and m consecutive slot periods. Here, m is a value configured according to the channel access priority class. The Tx entity performs channel sensing to decrease the backoff counter when the channel is sensed to be idle in the second interval. Meanwhile, when the channel is sensed to be busy during the backoff procedure, the backoff procedure is stopped. After stopping the backoff procedure, the Tx entity may resume backoff when the channel is sensed to be idle for an additional second interval. Accordingly, the Tx entity may perform the transmission when the channel is idle in the slot period of the backoff counter N, in addition to the second interval. In this case, the initial value of the backoff counter N is obtained within the CW having the fixed size.

- Category 4: LBT in which backoff is performed using CW having variable size

  - The Tx entity obtains a random value within the CW of a variable size, configures the same as an initial value of a backoff counter (or backoff timer) N, and performs backoff by using the set backoff counter N. More specifically, the Tx entity may adjust the size of the CW based on HARQ-ACK information for the previous transmission, and the initial value of the backoff counter N is obtained within the CW having the adjusted size. A specific process of performing backoff by the Tx entity is as described in Category 3. The Tx entity may perform the transmission when the channel is idle in the slot period of the backoff counter N, in addition to the second interval. In this case, the initial value of the backoff counter N is obtained within the CW having the variable size.

In the above Category 1 to Category 4, the Tx entity may be a base station or a UE. According to an embodiment of the present disclosure, a first type channel access may refer to category 4 channel access, and a second type channel access may refer to category 2 channel access.

<Wideband operation method when having BWP for each carrier in multiple carriers>

In the LTE-LAA system, two types of multi-carrier transmission schemes may be used. Hereinafter, multi-carrier transmission schemes in the LTE-LAA system are described.

Multi-carrier transmission type A: is a scheme in which channel access is performed independently for each carrier via which transmission is to be performed and transmission is performed for each carrier when channel access for each carrier is successfully performed. Accordingly, a counter value for performing backoff may exist for each carrier, and the counter value may be maintained and managed according to whether a channel is busy or idle in an individual carrier. In addition, a contention window may be independently maintained and managed for each carrier.

Multi-carrier transmission type A may be divided into two types (type A1 and type A2). Type A1 may be a scheme in which the backoff counter is to be independently managed and determined for each carrier. In addition, this is a scheme in which when idle slots are detected for a specific interval (e.g., four sensing slot intervals or after reinitializing the backoff counter) if one node (base station, UE, AP or STA) suspends transmission in a specific carrier, the one node resumes reducing the backoff counter that is independently managed and determined by the one node. Type A2 may be a scheme of configuring a common backoff counter applied to all carriers via which one node is to perform transmission. The common backoff counter may be configured as a backoff counter of a carrier having the largest CWp with reference to a current value (CWp) of a contention window managed by an individual carrier. However, the common backoff counter may be individually reduced according to a channel situation of the individual carrier. That is, the common backoff counter may be independently managed and determined for each carrier. When one node suspends transmission in each specific carrier, the one node may reinitialize the backoff counter in all carriers.

Multi-carrier transmission type B: is a scheme in which one node randomly selects one carrier before transmission in a set of carriers via which transmission is to be performed and a specific carrier is not to be selected for more than one second. A scheme in which category 4 LBT may be performed in the selected carrier, channel sensing is performed for at least sensing period of 25 us immediately before transmission in the remaining carriers when channel access is successfully performed, and transmission is performed together with transmission in the pre-selected carrier when the channel is idle after the sensing may be multi-carrier transmission type B.

Multi-carrier transmission type B may be divided into two schemes (type B1 and type B2). A type B1 scheme may be a scheme in which only one CWp value is maintained and managed in a set of carriers via which transmission is to be performed. One CWp may be managed through increase or initialization of the size of the CW with reference to HARQ-ACK corresponding to feedback on transmission in all carriers. Type B2 may be a scheme in which each CWp value is maintained and managed for each carrier in a set of carriers via which transmission is to be performed. A scheme in which an initial value of a backoff counter for performing category 4 LBT is selected in a carrier selected based on CWp in a carrier having the largest CWp among CWp values managed for each carrier may be type B2.

FIG. 31 illustrates a method for configuring a BWP in a carrier according to an embodiment of the present disclosure.

Referring to FIG. 31, unlike LTE-LAA in which one carrier has 20 MHz, one carrier may be greater than 20 MHz in NR-U. In addition, one BWP in the corresponding carrier may include multiple BWP configurations, each including multiple 20 MHz blocks, and thus a multi-carrier transmission scheme for an NR-U operation is required.

Referring to FIG. 31, when one or more BWPs are configured for each carrier, each BWP #1 including one or more LBT units may be activated on carrier #1 and carrier 2. Downlink transmission may be performed through two carriers of activated BWP #1.

Operation methods of a base station and a UE for downlink and uplink channel access for allowing a BWP-based operation to be performed in two or more carriers for NR-U are described.

One or more BWPs are configured for each carrier, and downlink transmission may be performed through two or more carriers.

<NR-U multi-carrier/BWP type A scheme>

LBT unit-specific category 4 LBT of 20 MHz may be performed regardless of a carrier to which an LBT unit belongs and the number of carriers via which transmission is to be performed during NR-U operation with reference to a 20MHz unit (or LBT subband or LBT unit). That is, this may be a scheme in which a type A scheme in LTE-LAA is applied to multiple carriers and an LBT unit in the 20 MHz unit within an active BWP belonging to each carrier.

<NR-U multi-carrier /BWP type A1 scheme>

The CW for each LBT unit may be individually maintained and managed regardless of the number of carriers and the carrier to which the LBT unit belongs. As in LTE-LAA type A1, a backoff counter may be independently maintained and managed for each LBT unit. However, in an operation in which the base station reduces the backoff counter, the base station may perform self-deferral which causes the operation of reducing the counter not to be performed when the counter is equal to or greater than 1 in a specific LTB unit. There may be two types of self-deferral.

The first type is a self-deferral scheme enabling the base station to reduce the counter when the counter is equal to or greater than 1 in a specific LBT unit regardless of a carrier to which the LBT unit belongs. This may be a method enabling the self-deferral operation in the base station in consideration of all adjacent carriers when it is considered that channel sensing is affected by RF leakage in several adjacent carries in the self-deferral operation. Self-deferral is performed in consideration of simultaneous transmission in all LBT units, and thus transmission of multiple LBT subbands can be easy to be performed, but when the base station considers simultaneous transmission in all LBT units, this type may be disadvantageous in that a large transmission delay may occur due to the self-deferral operation.

The second type may be a self-deferral scheme enabling the base station to reduce the counter when the counter is equal to or greater than 1 in a specific LBT unit only for each carrier. This may be a method enabling a self-deferral operation in the base station only for each carrier when it is considered that generally, channel sensing is affected only by RF leakage within a specific frequency band or one carrier or a BWP having multiple LBT units transmitted within one carrier. It can be easy to perform transmission of multiple LBT subbands in one carrier since this type of self-deferral is performed in consideration of simultaneous transmission in LBT units only within one carrier. In addition, when self-deferral in LBT subbands in different carriers via which the base station performs transmission is all considered, simultaneous transmission may be performed in all LBT units. When the base station considers only simultaneous transmission of multiple LBT subbands only in one carrier, a transmission delay may not occur due to the self-deferral operation in one carrier.

<NR-U multi-carrier/BWP type A2 scheme>

A CW may be individually maintained and managed for each LBT unit regardless of the number of carriers and a carrier to which an LBT unit belongs. As in LTE-LAA type A2, a common backoff counter may be maintained and managed. There may be two types of schemes of selecting a common backoff counter by the base station.

The first type may be a scheme of selecting one common backoff counter with reference to the largest CWp among all CWps managed for each individual LBT unit regardless of the number of carriers and a carrier to which the LBT unit belongs and performing category 4 LBT according to the common backoff counter for each LBT unit regardless of the number of carriers. When it is considered that channel sensing can be affected by RF leakage in several adjacent carriers in the self-deferral operation, this type may be a method enabling a self-deferral operation by the base station in consideration of all adjacent carriers. This type can facilitate transmission of multiple LBT subbands since a common counter is selected from the largest CWp and self-deferral is performed in consideration of simultaneous transmission in all LBT units. There may be disadvantage in that as much transmission delay as the maximum length of the largest CWp may occur at each transmission since the largest CWp is selected from all LBT units.

The second type may be a scheme of selecting one common backoff counter for each carrier with reference to the largest CWp among all CWps managed for each LBT unit belonging to each carrier, and enabling category 4 LBT to be performed according to the one common backoff counter for LTB units belonging to each carrier. This may be a method enabling a self-deferral operation for each carrier with reference to the common backoff counter when it is considered that generally, channel sensing can be affected by RF leakage within a specific frequency band or one carrier or a BWP having multiple LBT units transmitted within one carrier. In this scheme, self-deferral is performed by allowing the common counter for each carrier to be selected from the largest CWp in consideration of simultaneous transmission in LBT units only within one carrier, and thus transmission of multiple LBT subbands can be facilitated within one carrier. When self-deferral of LBT subbands in different carriers via which the base station is to perform transmission is all considered, simultaneous transmission in all LBT units may be performed. When the base station only considers simultaneous transmission of multiple LBT subbands in only one carrier, the self-deferral operation in one carrier may not cause the transmission delay.

Hereinafter, a method for applying NR-U multi-carrier/BWP type B schemes to a UE and a base station is described.

<NR-U multi-carrier/BWP type B scheme>

There may be a scheme of configuring one LBT subband for performing category 4 LBT among 20 MHz LBT units regardless of a carrier to which an LBT unit belongs and the number of carriers via which transmission is to be performed during NR-U operation with reference to a 20MHz unit (or LBT subband or LBT unit), and a scheme of configuring one LBT subband for performing category 4 LBT among 20 MHz LBT units for each carrier. NR-U multi-carrier/BWP type B scheme may be a scheme of, in case where channel access is successfully performed in one LBT subband for performing category 4 LBT, performing transmission together with transmission in the pre-selected one LBT subband for performing category 4 LBT if the channel is idle after channel sensing for at least 25 us sensing period immediately before the remaining LBT subbands. NR-U multi-carrier/BWP type B scheme may be a scheme in which the type B scheme in LTE-LAA is applied to a 20Mhz LBT unit within multiple carriers or an active BWP belonging to each carrier.

<NR-U multi-carrier/BPWP type B1 scheme>

As a first scheme in which one LBT subband for performing category 4 LBT is configured among 20 MHz LBT units regardless of the number of carriers and a carrier to which an LBT unit belongs, one CW for performing category 4 LBT may be maintained and managed regardless of the number of carriers. Accordingly, CWp may be managed through increase and reset of the CW size according to a ratio of NACK to HARQ-ACK received as feedback on transmission in all carriers, regardless of the number of carriers and a carrier to which the LBT unit belongs.

<NR-U multi-carrier/BWP type B2 scheme>

As a second scheme in which one LBT subband for performing category 4 LBT is configured among 20 MHz LBT units for each carrier, one CW is maintained and managed for each carrier. The CWp may be managed through increase and reset of the CW size according to a ratio of NACK to HARQ-ACK corresponding to feedback on transmission in 20 MHz LBT units for each carrier.

As a third scheme, the CW may be independently maintained and managed for each LBT subband within a BWP belonging to each carrier. However, one backoff counter may be configured for each carrier. In this case, in the scheme of configuring one backoff counter, a backoff counter initial value may be configured with reference to the largest CWp among current CWps independently managed for each LBT subband within the BWP belonging to each carrier. In the scheme of maintaining and managing the CW, the CWp may be managed through increase and reset of the CW size according to a ratio of NACK to HARQ-ACK corresponding to feedback on transmission in the respective 20 MHz LBT units for each carrier.

As a fourth scheme, when an independent one CW is maintained and managed in different carriers, an independent backoff counter may be configured for each carrier with reference to the largest CWp among CWs managed in different carriers to enable simultaneous transmission between carriers. This is the maximum self-deferral length for simultaneous transmission in different carriers, and the largest CWp among different carriers may be configured.

Next, in NR-U multi-carrier/BWP type B scheme, when one LBT subband is selected before transmission of a channel/signal from LBT subbands or a set of carriers via which one node is to perform transmission, the LBT subband may be randomly selected. Unlike the case in LTE-LAA in which one carrier is considered as an LBT unit and is configured to be 20 MHz, LBT subbands included in the BWP of each carrier may be different among different carriers in NR-U, and thus when a carrier is randomly selected among carriers like the scheme in LTE-LAA, the LBT subbands for performing category-4 LBT may not be equally and randomly selected. Accordingly, in the scheme in which one LBT subband for performing category 4 LBT is configured among 20 MHz LBT units, regardless of the number of carriers and a carrier to which an LBT unit belongs, one LBT subband for performing category-4 LBT may be equally and randomly selected based on all LBT units belonging to the BWP in all carriers via which the transmission is to be performed. Next, in the scheme in which one LBT subband for performing category 4 LBT is configured among 20 MHz LBT units for each carrier, one LBT subband for performing category-4 LBT in each carrier may be equally and randomly selected.

<Embodiment: channel access for sidelink (SL) transmission>

First, the terms used in the present disclosure are described.

- Type 1 channel access procedure (CAP): is a channel access procedure including random backoff (see FIG. 13). Channel sensing may be performed based on a random value selected within a CW. When a channel is determined to be idle as a result of channel access, SL transmission may be performed.
- Type 2 CAP: is a channel access procedure not including random backoff. Channel sensing may be performed for a sensing duration having a fixed length for channel transmission. Type 2 CAP may be classified into Type 2A/2B/2C according to the sensing duration having the fixed length.
- Type 2A CAP: For SL transmission, sensing is performed to identify whether a channel is idle for a duration of 25 $\mu$s as at least a sensing area before transmission, and then immediately SL transmission may be performed. 25 $\mu$s includes 16 $\mu$s (Tf) and one sensing slot (9 $\mu$s) following immediately thereafter, and the 16 $\mu$s (Tf) period includes one sensing slot (9 $\mu$s). When all sensing slots of 25 $\mu$s are sensed as being idle, the corresponding channel is determined to be idle for a duration of 25 $\mu$s.
- Type 2B CAP: For SL transmission, sensing is performed to identify whether a channel is idle for a duration of 16 $\mu$s (Tf) before transmission, and then immediately SL transmission may be performed. 16 $\mu$s (Tf) includes one sensing slot within the last 9 $\mu$s of 16 $\mu$s. When the channel is sensed to be idle for a total duration of at least 5 $\mu$s having at least 4 $\mu$s in which sensing is performed within the sensing slot, the channel is determined to be idle.
- Type 2C CAP: indicates that transmission is performed without performing channel sensing before transmission for SL transmission (i.e., No LBT). A maximum duration for SL transmission may be limited to at most 584$\mu$s.
- CO (or COT): CO indicates that a wireless communication device (e.g., UE) initiates transmission in a channel and occupies the channel. COT indicates a channel occupancy time.
- COT sharing: indicates that a COT initiated by a wireless communication device (e.g., UE) is shared with the same or a different wireless communication device (e.g., see FIG. 15).
- SL transmission: SL transmission includes transmission of an SL channel. An SL channel includes a physical sidelink control channel (PSCCH), a physical sidelink shared channel (PSSCH), a physical sidelink feedback channel (PSFCH), etc.
- PSCCH/PSSCH: indicates a PSSCH and/or a PSSCH.
- Sidelink control information (SCI): SCI may be divided into 1st SCI (or SCI format 1) and 2nd SCI (or SCI format 2). The 1st SCI is transmitted through a PSCCH. The 1st SCI is used to schedule the 2nd SCI on (i) PSSCH and (ii) PSSCH. For example, the 1st SCI includes time/frequency resource information for PSSCH reception, a priority indicator, 2nd SCI format information, etc. The priority indicator indicates a traffic priority of the PSSCH. The 1st SCI may be decoded by all UEs in a cell for channel sensing. On the other hand, the 2nd SCI is decoded by each reception UE, and includes remaining information required for PSSCH decoding. The 2nd SCI may be transmitted using a PSSCH resource. For example, the 2nd SCI includes a HARQ process number, a cast type indicator, a source ID, a destination ID, etc.
- Adjustment of contention window size (CSW) according to transmission type during sidelink channel access

When sidelink communication using an unlicensed spectrum is performed using type 1 channel access, a CWS may be adjusted before the type 1 channel access (or category 4 LBT or random backoff having a variable contention window) is performed. In this case, the CWS may be adjusted according to a transmission type (e.g., unicast transmission having HARQ-ACK, groupcast transmission having NACK only, groupcast transmission having no HARQ-ACK, broadcast transmission, etc.).

When a PSSCH is transmitted in a unicast or groupcast transmission scheme having HARQ-ACK in the unlicensed spectrum, the type 1 channel access may be performed. The CWS may be adjusted to determine a time window for random backoff before the type 1 channel access is performed.

When a physical sidelink shared channel (PSSCH) is transmitted using a PC-5 link as a sidelink, a scheme of sidelink resource allocation mode 1 in which the base station notifies the UE of time and frequency resources for transmission of the PSSCH may be performed, and a scheme of resource allocation mode 2 in which a resource is selected by sensing configured resource pools and actually transmittable resources are allocated may be performed.

Case 1) In a case where one resource pool is configured, when a first UE which configures a resource period of a physical sidelink feedback channel (PSFCH) and a minimum time gap in which reception of the PSFCH is enabled after the PSSFCH indicates "enable" (e.g., a value of an indicator is 1) of HARQ-ACK through a HARQ-ACK enable/disable indicator included in the 2nd SCI, a second UE having received the indicator may receive the PSSCH and then transmit the PSFCH in an available slot after the configured resource period of the PSFCH and the minimum time gap. The first UE may receive HARQ-ACK information by receiving the PSFCH transmitted by the second UE.

When the first UE indicates, to the second UE, the resource for the PSFCH configured in one resource pool and "enable" of HARQ-ACK through the HARQ-ACK enable/disable indicator included in the 2nd SCI, the first UE may expect that HARQ-ACK feedback on the PSSCH is to be transmitted from the second UE. In a case where the HARQ-ACK transmitted by the second UE is available, if there is at least one HARQ-ACK, the first UE may reset, to a minimum value for each priority class, a current CWp for all priority classes, and if not (if HARQ-ACK does not exist),the first UE may increase a value indicating a priority class by increasing the current CWp to the next higher value for each priority class for all priority classes. When performing transmission of the PSSCH by using the configured CWp value, the first UE may perform type 1 channel access.

Case 2) When one resource pool is configured, there may be a case where there is no resource for a PSFCH since a resource period of the PSFCH and a minimum time gap in which reception of the PSFCH is enabled after the PSSCH are not configured. When the first UE for transmitting the PSSCH indicates "disable" (e.g., a value of an indicator is 0) of HARQ-ACK through the HARQ-ACK enable/disable indicator of the 2nd SCI, the second UE having received the indicator cannot transmit HARQ-ACK information (including NACK only feedback) since there is no resource for the PSFCH configured after receiving the PSSCH. In this case, the first UE cannot expect explicit HARQ-ACK, and thus ambiguity of configuration of a CWp value to be used for the next PSSCH transmission may occur. The first UE cannot expect explicit HARQ-ACK and cannot perform CWp adjustment according to HARQ-ACK information, and thus may perform type 1 channel access by using the most recently used CWp value when a channel access priority class of the PSSCH to be currently transmitted has been used before.

When the first UE for transmitting the PSSCH indicates "disable" of HARQ-ACK through the HARQ-ACK enable/disable indicator of the 2nd CI, the first UE may not expect explicit HARQ-ACK. Accordingly, the first UE may use, for type 1 channel access performed during current PSSCH transmission, a CWp value used for the recent PSSCH transmission.

In order for the PSSCH to be transmitted in the unlicensed spectrum as groupcast transmission having NACK only feedback as groupcast, type 1 channel access may be performed. In this case, the CWS may be adjusted to determine a window for performing random backoff before performing type 1 channel access.

When the UE having transmitted one or more PSSCH through groupcast transmission configured with NACK only feedback fails to receive HARQ-ACK feedback from groups of UEs having received one or more PSSCH, the UE having transmitted the PSSCH may not perform retransmission of the groupcast transmission by assuming that the HARQ-ACK feedback as ACK. Accordingly, when the UE having transmitted the PSSCH through the groupcast transmission fails to receive HARQ-ACK feedback from groups of the UEs on the expected PSFCH occasion, the UE may reset, to a minimum value for all priority classes, the CWp for type 1 channel access performed during the next PSSCH transmission. The UE having transmitted the PSSCH through groupcast transmission cannot identify whether groups of UEs fail to transmit NACK feedback on the PSFCH occasion because channel access fails or whether groups of UEs have transmitted no NACK feedback because the PSSCH has been successfully received. Accordingly, the UE having transmitted the PSSCH may reset the current CWp to a minimum value for each priority class for all priority classes, and may perform type 1 channel access for the next transmitted PSSCH.

When a UE having transmitted one or more PSSCHs through groupcast transmission configured with NACK only feedback receives HARQ-ACK feedback from groups of UEs having received the one or more PSSCHs and receives HARQ-ACK feedback having at least one NACK, the UE having transmitted the PSSCH may perform retransmission for the groupcast transmission. In this case, ambiguity of a configuration of a CWp for type 1 channel access performed during retransmission of the PSSCH through the groupcast transmission may occur, and a method for resolving the ambiguity is described below.

In consideration of the retransmission of the PSSCH through the groupcast transmission by the UE, when all UEs of the groups of the UEs transmit NACK as HARQ-ACK feedback and the UE having transmitted the PSSCH receives the same, and when the UE having transmitted the PSSCH receives HARQ-ACK feedback having at least one NACK, the UE having transmitted the PSSCH may increase a value indicating a priority class to the next higher value as the CW adjustment is performed when receiving the NACK. Alternatively, when transmission of one or more PSSCHs is performed and multiple pieces of feedback for the PSSCHs having different groupcasts within the same UE group or multiple pieces of feedback from multiple UE groups having different groupcasts is expected, the UE having performed the groupcast transmission may count the number of NACKs of the multiple pieces of feedback to identify whether the number of NACKs is equal to or higher than a predetermined ratio (e.g., Z%, where Z is an integer greater than 0 and equal or smaller than 100) to total feedback. When the number of NACK is equal to or higher than the predetermined ratio as a result of the identification, the UE having performed the groupcast transmission may increase a value indicating a priority class to the next higher value as CW adjustment is performed when receiving the NACK. When the number of NACKs is lower than the predetermined ratio as a result of the identification, the UE having performed the groupcast transmission may reset the current CWp to a minimum value for each priority class for all priority classes. For example, Z may be 80 as in the LTE-LAA system. Alternatively, in the NR-U system, when at least one ACK is received and is available, Z may be configured to be 100 so that an operation such as resetting the CWp to the minimum value for each priority class is performed. In other words, when all the multiple pieces of feedback are NACK (i.e., not a single implicit ACK is assumed), the UE having performed the groupcast transmission may increase the value indicating the priority class to the next higher value as CW adjustment is performed when receiving the NACK. When at least one implicit ACK is assumed among the multiple pieces of feedback, the UE having performed the groupcast transmission may reset the current CWp to the minimum value for each priority class for all priority classes.

In a case (situation a) in which HARQ-ACK feedback having at least one NACK is received except for a case where all UEs in the groups of UEs transmit NACK as HARQ-ACK feedback or a case where at least one UE in group transmits NACK as HARQ-ACK feedback for each group, the UE having transmitted the PSSCH may determine that at least one UE has been successfully received the PSSCH for groups of UE. Accordingly, as a CW adjustment scheme performed when the UE having transmitted the PSSCH received ACK feedback, the current CWp is reset to the minimum value for each priority class for all priority classes, and the UE may perform type 1 channel access performed when transmitting the next PSSCH. This is because the UE having transmitted the PSSCH can determine that there is no channel congestion in the channel access perspective. In a case other than situation a, the UE having transmitted the PSSCH may increase the current CWp by increasing the value indicating the priority class to the next higher value for each priority class for all priority classes.

- Definition of sidelink reference duration

When the UE for transmitting the PSSCH/PSCCH performs CWS adjustment before performing type 1 channel access and there is HARQ-ACK feedback transmitted by the UEs having received the PSSCH/PSCCH, a time-axis duration for CWS adjustment before the UE for transmitting the PSSCH/PSCCH performs type 1 channel access needs to be defined. The time-axis duration may be called a sidelink reference duration. When there is HARQ-ACK feedback, CWS adjustment for PSSCH/PSCCH transmission within the sidelink reference duration may be needed. In this case, the CWS adjustment may be performed based on the HARQ-ACK feedback. A method for configuring a sidelink reference duration is described below.

A sidelink reference duration may correspond to the most recent COT acquired when the UE for transmitting the PSSCH/PSCCH performs type 1 channel access to initiate the COT. When the PSSCH is transmitted on all resources allocated for transmission of the PSSCH including unicast-data transmission or the PSSCH is transmitted on all resources allocated for transmission of the PSSCH configured to enable HARQ-ACK feedback, the sidelink reference duration may be a duration from a starting time point of the most recent COT to the last of the first slot. The sidelink reference duration may be a duration in units of slots. For example, when a resource allocated for transmission of the PSSCH within one slot includes one or more RB sets (a unit for performing 20 MHz LBT), a duration from a starting point of the most recent Cot to the last of one slot may be a sidelink reference duration.

A sidelink reference duration may correspond to the most recent COT acquired when the UE for transmitting the PSSCH/PSCCH performs type 1 channel access to initiate the COT. a) The sidelink reference duration may be a duration from a starting time point of the most recent COT to the last of the first burst within the most recent COT. In this case, the most recent COT may be a duration during which the PSSCH is transmitted on all resources allocated for transmission of the PSSCH including unicast-data transmission, or a duration during which the PSSCH is transmitted on all resources allocated for transmission of the PSSCH configured to enable HARQ-ACK feedback. For example, there may be a case where the UE for transmitting the PSSCH/PSCCH performs only a part of the transmission of the PSSCH configured within the most recent COT. There may be a case where the UE for transmitting the PSSCH/PSCCH has allocated, for transmission of the PSSCH, two RB sets to the first slot within the channel occupancy corresponding to the most recent COT, but channel access fails in one channel and the PSSCH is transmitted in one RB set. In this case, the sidelink reference duration is not a duration from a starting time point of the most recent COT to the last of the first slot, but may be configured to be a duration from a starting time point of the most recent COT to the first transmission burst (i.e., a burst for transmission of consecutive PSSCHs including the first slot) performed by the UE for transmitting the PSSCH/PSCCH.

Even though the PSSCH including unicast transmission or the PSSCH configured to enable HARQ-ACK feedback is not transmitted in the first slot, the sidelink reference duration may be configured to be a duration from a starting time point of the most recent COT to the first transmission burst (i.e., a burst for transmission of consecutive PSSCHs including the first slot) performed by the UE for transmitting the PSSCH/PSCCH when one transmission between the PSSCH including the unicast transmission and/or the PSSCH configured to enable the HARQ-ACK feedback exists in the first transmission burst including the first slot.

- CWS adjustment according to S-SSB and PSFCH transmission during sidelink channel access

Hereinafter, a channel access scheme when sidelink transmission is performed using the unlicensed spectrum is described. Specifically, hereinafter, a scheme of adjusting a CWS before performing type 1 channel access (or category 4 LBT or random backoff having a variable contention window) when type 1 channel access is performed to perform S-SSB and PSFCH transmission is proposed.

FIG. 32 illustrates an S-SSB block according to an embodiment of the present disclosure.

UE x1 having received a PSSCH and performed transmission of a PSFCH through type 1 channel access does not separately receive feedback on transmission of the PSFCH from UE 2 having received the PSFCH. Accordingly, when UE x1 transmits a sidelink channel and/or signal after transmission of the PSFCH, adjustment of a CWS for the sidelink channel and/or signal may be needed. In the NR sidelink communication system, UE x3 may transmit an S-SSB or a sidelink SS/PSBCH block to UE x4 as shown in FIG. 32. UE x4 may perform initial access by using the S-SSB or the sidelink SS/PBCH block received from UE x3. After transmitting the S-SSB to UE x4, UE x3 may not receive feedback on transmission of the S-SSB from UE x4. Accordingly, UE x3 having transmitted the S-SSB through type 1 channel access transmits the sidelink channel and/or signal after transmission of the S-SSB, adjustment for the sidelink channel and/or signal may be needed.

UE x3 cannot expect explicit HARQ-ACK corresponding to the transmission of the S-SSB, and thus when UE x3 transmits the sidelink channel and/or signal after the transmission of the S-SSB, a CWP value to be configured may be ambiguous. In addition, UE x1 also cannot expect explicit HARQ-ACK corresponding to the transmission of the PSFCH, and thus when UE x1 transmits the sidelink channel and/or signal after the transmission of the PSFCH, a CWp value to be configured may be ambiguous. That is, explicit HARQ-ACK does not exist, and thus UE x1 and x3 cannot perform CWp adjustment according to HARQ-ACK information. Accordingly, when a channel access priority class for the sidelink channel and/or signal has been used before, UE x1 and x3 may perform type 1 channel access by using the most recently used CWp value.

When transmitting the PSFCH to UE x2, UE x1 may perform type 1 channel access. When UE x1 performs transmission of the sidelink and/or the signal after the transmission of the PSFCH, a CWS adjustment scheme may be as follows. When UE x1 receives retransmission of the PSSCH, UE x1 may consider that retransmission of the PSSCH has been performed as an implicit response to the transmitted PSFCH. UE x1 may increase the CWS within allowed values. In addition, when PSCCH or PSSCH corresponding to new transmission rather than retransmission is received, UE x1 may reset the CWS to the minimum value.

COT sharing among SL channels transmitted by UE - intra-UE COT sharing among different SL channels

The present disclosure proposes a channel access scheme and a channel access priority class (CAPC) configuration scheme for each SL channel when the UE transmits one SL channel or different SL channels in one slot or consecutive slots.

When a UE supporting sidelink operates in an unlicensed band, channel access is required before transmitting an SL channel. To perform channel access, a channel access type and a channel access priority class (CAPC) may be configured. The present disclosure proposes a channel access scheme to be performed by a UE when (i) only PSFCH is transmitted and (ii) PSFCH and PSSCH/PSCCH are consecutively transmitted in (1) one slot requiring PSFCH transmission or (2) a slot requiring PSFCH transmission and a slot consecutive thereto.

First, when only PSFCH is transmitted in a slot for transmitting the PSFCH, the UE may perform channel access before transmitting the PSFCH, and may perform PSFCH transmission when channel access is successfully performed.

For example, to transmit only PSFCH, the UE may perform type 1 channel access, i.e., channel access having random backoff. In this case, a method for selecting the CAPC used for type 1 channel access based on a traffic priority of the previously received PSSCH corresponding to the transmission of the PSFCH, i.e., a priority indicator, may be considered. The UE for transmitting the PSFCH may determine, according to a priority corresponding to traffic of the previously received PSSCH, whether PSFCH transmission is performed when there is overlapping between different SL channels. The UE for transmitting the PSFCH may identify a traffic type included in the PSSCH through PSCCH (SCI) during transmission of the PSCCH/PSSCH, and may thus perform type 1 channel access based on the traffic type.

As another example, in order to transmit only PSFCH, the UE may perform type 1 channel access, i.e., channel access having random backoff. In this case, the CAPC used for type 1 channel access for the PSFCH may be selected/determined based on the previously received PSSCH corresponding to the transmission of the PSFCH. For example, the CAPC of the PSFCH may be selected/determined based on the CAPC value which has been used when type 1 channel access is performed (by another UE) during transmission of the PSSCH previously received from another UE. However, the UE for transmitting (the previously received) PSSCH does not identify a traffic type included in the PSSCH through PSCCH (SCI) during transmission of the PSCCH/PSSCH, but may identify a traffic type used for transmission of the PSCCH/PSSCH. The UE having received the PSCCH/PSSCH may select/determine, based on the traffic type indicated through the SCI, i.e., the CAPC value used when the UE having transmitted the PSCCH/PSSCH performs type 1 channel access, the CAPC to be used for type 1 channel access for transmission of the PSFCH.

As another example, in order to transmit only PSFCH, the UE may perform type 1 channel access, i.e., channel access having random backoff. In this case, the CAPC used for type 1 channel access for PSFCH may have a fixed value, regardless of the previously received PSSCH corresponding to the transmission of the PSFCH. For example, the CAPC of the PSFCH may have a fixed value, regardless of the CAPC value used when type 1 channel access is performed (by another UE) during transmission of the PSSCH previously received from another UE. For example, in order to guarantee a maximum PSFCH transmission occasion, a method for configuring a CAPC based on the highest priority p=1 value to perform type 1 channel access may be considered.

Next, a channel access scheme and a CAPC configuration scheme performed for each SL channel by a UE when the UE transmits different SL channels in one slot are proposed.

First, for PSSCH and PSFCH transmitted in one slot, the PSSCH has a traffic type having a low priority, and for traffic type of the PSFCH, a traffic type of the PSCCH/PSSCH corresponding to the PSFCH and previously received from another UE has a priority equal to or higher than that of the PSSCH in a slot in which the UE is to currently perform transmission. In this case, when the UE succeeds in channel acquisition by performing type 1 channel access of the PSSCH transmitted in the same slot, multiplexing with a PSSCH in units of OFDM symbols on the PSFCH occasion is performed in the manner of TDM, and a method in which the PSFCH transmitted after the PSSCH is transmitted using a type 2C (i.e., no LBT) scheme or transmitted using a type 2A or type 2B scheme may be considered. In this case, as a method for filling a gap between the PSSCH and the PSFCH, a method for filling the gap by using CP extension of the PSFCH may be considered. In the perspective of one UE, the UE may identify a traffic type of a PSSCH transmitted by the UE itself, and may also identify a traffic type of a PSSCH corresponding to a PSFCH, and thus a gap between the PSSCH and the PSFCH may be configured to be less than 16 $\mu$s (including no gap) so as to allow transmission through no LBT during transmission of the PSFCH following after the PSSCH (type 2c scheme), or the gap between the PSSCH and the PSFCH may be configured as 16 $\mu$s so as to allow transmission through the type 2B scheme during transmission of the PSFCH following after the PSSCH. Alternatively, the gap between the PSSCH and the PSFCH may be configured to be at least 25 $\mu$s so as to allow transmission through the type 2A scheme during transmission of the PSFCH following after the PSSCH.

On the other hand, as a channel access scheme for transmission of the PSFCH according to a CP extension length of the last OFDM symbol of the PSSCH by extending the CP of the last OFDM symbol of the PSSCH transmitted by the UE, a method for selecting type 2C, type 2A, or type 2B may be considered. In the perspective of one UE, the UE may identify a traffic type of a PSSCH transmitted by the UE itself, and may also identify a traffic of a PSSCH corresponding to a PSFCH, and thus a gap between the PSSCH and the PSFCH may be configured to be less than 16 $\mu$s (including no gap) so as to allow transmission through no LBT during transmission of the PSFCH following after the PSSCH (type 2C scheme), or the gap between the PSSCH and the PSFCH may be configured as 16 $\mu$s so as to allow transmission through the type 2B scheme during the transmission of the PSFCH following after the PSSCH. Alternatively, the gap between the PSSCH and the PSFCH may be configured to be at least 25 $\mu$s so as to allow transmission through the type 2A scheme during the transmission of the PSFCH following after the PSSCH.

However, when channel access for PSSCH transmission fails to be performed, the UE may independently perform separate channel access for PSFCH transmission, and the above-described scheme for PSFCH only transmission can be applied the same.

Next, for the PSSCH and the PSFCH transmitted in one slot, the PSSCH may have a traffic having a high priority, and for the PSFCH, a traffic type of the PSCCH/PSSCH corresponding to the PSFCH and previously received from another UE has a priority lower than that of the PSSCH in a slot in which the UE is to currently perform transmission. In this case, when the UE succeeds in channel acquisition by performing type 1 channel access of the PSSCH transmitted in the same slot, multiplexing with a PSSCH in units of OFDM symbols on the PSFCH occasion is performed in the manner of TDM, and a method in which the PSFCH transmitted after the PSSCH is transmitted a type 2A or type 2B scheme may be considered. In this case, as a method for filling a gap between the PSSCH and the PSFCH, a method for filling the gap by using CP extension of the PSFCH may be considered. In the perspective of one UE, the UE may identify a traffic type of a PSSCH transmitted by the UE itself, and may also identify a traffic type of a PSSCH corresponding to a PSFCH, and thus a gap between the PSSCH and the PSFCH may be configured as 16 $\mu$s so as to allow transmission through the type 2B scheme during transmission of the PSFCH following after the PSSCH. Alternatively, the gap between the PSSCH and the PSFCH may be configured to be at least 25 $\mu$s so as to allow transmission through the type 2A scheme during transmission of the PSFCH following after the PSSCH.

On the other hand, as a channel access scheme for the PSFCH according to a CP extension length of the last OFDM symbol of the PSSCH by extending the CP of the last OFDM symbol of the PSSCH transmitted by the UE, a method for selecting type 2A or type 2B may be considered. In the perspective of one UE, the UE may identify a traffic type of a PSSCH transmitted by the UE itself, and may also identify a traffic of a PSSCH corresponding to a PSFCH, and thus a gap between the PSSCH and the PSFCH may be configured as 16 $\mu$s so as to allow transmission through the type 2B scheme during the transmission of the PSFCH following after the PSSCH. Alternatively, the gap between the PSSCH and the PSFCH may be configured to be at least 25 $\mu$s so as to allow transmission through the type 2A scheme during the transmission of the PSFCH following after the PSSCH.

However, when channel access for PSSCH transmission fails to be performed, the UE may independently perform separate channel access for PSFCH transmission, and the above-described scheme for PSFCH only transmission can be applied the same.

Unlike the above-described case where the PSCCH/PSSCH and the PSFCH are configured in the manner of TDM in one slot, in consecutive slots, the PSFCH may be first transmitted and then the PSCCH/PSSCH may be transmitted in the subsequent slot. Accordingly, a channel access scheme for the PSFCH and the PSCCH/PSSCH transmitted in the subsequent slot needs to be defined. In this case, if a UE may identify, before transmitting the PSFCH, a priority according to a traffic type of the PSCCH/PSSCH to be subsequently transmitted, a channel access scheme may be defined by comparing a priority of a traffic type corresponding to the transmission of the PSFCH and a priority of a traffic type of the PSCCH/PSSCH.

First, as shown in FIG. 33, for the PSFCH and the PSSCH transmitted in consecutive slots, on the time axis, the PSSCH may have traffic having a low priority, and for the PSFCH, a traffic type of the PSSCH/PSSCH corresponding to the PSFCH and previously received from another UE has a priority equal to or higher than that of the PSSCH in the next slot in which the UE is to currently perform transmission. In this case, for the PSFCH and the PSCCH/PSSCH in the next slot, the UE may perform channel access of the PSFCH while having a CAPC value corresponding to traffic having a low priority corresponding to the PSSCH when performing channel access during transmission of the PSFCH. Accordingly, in a case of the transmission of the PSFCH and the PSCCH/PSSCH transmitted in the next slot, a method for transmitting the PSCCH/PSSCH by using the type 2C (i.e., no LBT) scheme, or transmitting the PSCCH/PSSCH by using the type 2A or type 2B scheme may be considered. In this case, as a method for filling a gap between the PSFCH and the PSCCH/PSSCH, a method for filling the gap by using CP extension of the PSCCH/PSSCH may be considered. In the perspective of one UE, the UE may identify a traffic type of a PSSCH transmitted by the UE itself, and may also identify a traffic type of a PSSCH corresponding to a PSFCH, and thus a gap between the PSFCH and the PSCCH/PSSCH may be configured to be less than 16 $\mu$s (including no gap) so as to allow transmission through no LBT during the transmission of the PSCCH/PSSCH following after the PSFCH (type 2C scheme), or the gap between the PSFCH and the PSCCH/PSSCH may be configured as 16 $\mu$s so as to allow transmission through the type 2B scheme during transmission of the PSCCH/PSSCH following after the PSFCH. Alternatively, the gap between the PSSCH/PSSCH and the PSFCH may be configured to be at least 25 $\mu$s so as to allow transmission through the type 2A scheme during transmission of the PSCCH/PSSCH following after the PSFCH.

On the other hand, as a channel access scheme for transmission of the PSCCH/PSSCH according to a CP extension length of the last OFDM symbol of the PSFCH by extending the CP of the last OFDM symbol of the PSFCH transmitted by the UE, a method for selecting type 2C, type 2A, or type 2B may be considered. In the perspective of one UE, the UE may identify a traffic type of a PSSCH transmitted by the UE itself, and may also identify a traffic of a PSSCH corresponding to a PSFCH, and thus a gap between the PSFCH and the PSCCH/PSCCH may be configured to be less than 16 $\mu$s (including no gap) so as to allow transmission through no LBT during transmission of the PSCCH/PSSCH following after the PSFCH (type 2C scheme), or the gap between the PSFCH and the PSCCH/PSSCH may be configured as 16 $\mu$s so as to allow transmission through the type 2B scheme during the transmission of the PSCCH/PSSCH following after the PSFCH. Alternatively, the gap between the PSFCH and the PSCCH/PSSCH may be configured to be at least 25 $\mu$s so as to allow transmission through the type 2A scheme during the transmission of the PSCCH/PSSCH following after the PSSCH.

However, when channel access for PFSCH transmission fails to be performed, the UE may independently perform separate channel access for PSCCH/PSSCH transmission, and the above-described scheme in which the PSCCH/PSSCH precedes on the time axis can be applied the same.

FIGS. 33 and 34 illustrate configuration in a slot according to an embodiment of the present disclosure.

Next, as shown in FIG. 33, for a PSFCH and a PSSCH transmitted in consecutive slots, on the time axis, the PSSCH has traffic having a higher priority, and for the PSFCH, a traffic type of the PSCCH/PSSCH corresponding to the PSFCH and previously received from another UE has a priority lower than that of the PSSCH in the next slot in which the UE is to currently perform transmission. In this case, for the PSFCH and the PSCCH/PSSCH in the next slot, the UE may perform channel access of the PSFCH while having a CAPC value corresponding to traffic having a low priority corresponding to the PSFCH when performing channel access during transmission of the PSFCH. Accordingly, in a case of the transmission of the PSFCH and the PSCCH/PSSCH transmitted in the next slot, a method for transmitting the PSCCH/PSSCH by using the type 2C (i.e., no LBT) scheme, or transmitting the PSCCH/PSSCH by using the type 2A or type 2B scheme may be considered. In this case, as a method for filling a gap between the PSFCH and the PSCCH/PSSCH, a method for filling the gap by using CP extension of the PSCCH/PSSCH may be considered. In the perspective of one UE, the UE may identify a traffic type of a PSSCH transmitted by the UE itself, and may also identify a traffic type of a PSSCH corresponding to a PSFCH, and thus a gap between the PSFCH and the PSCCH/PSSCH may be configured to be less than 16 $\mu$s (including no gap) so as to allow transmission through no LBT during the transmission of the PSCCH/PSSCH following after the PSFCH (type 2C scheme), or the gap between the PSFCH and the PSCCH/PSSCH may be configured as 16 $\mu$s so as to allow transmission through the type 2B scheme during transmission of the PSCCH/PSSCH following after the PSFCH. Alternatively, the gap between the PSSCH/PSSCH and the PSFCH may be configured to be at least 25 $\mu$s so as to allow transmission through the type 2A scheme during transmission of the PSCCH/PSSCH following after the PSFCH.

On the other hand, as a channel access scheme for transmission of the PSCCH/PSSCH according to a CP extension length of the last OFDM symbol of the PSFCH by extending the CP of the OFDM symbol of the PSFCH transmitted by the UE, a method for selecting type 2C, type 2A, or type 2B may be considered. In the perspective of one UE, the UE may identify a traffic type of a PSSCH transmitted by the UE itself, and may also identify a traffic of a PSSCH corresponding to a PSFCH, and thus a gap between the PSFCH and the PSCCH/PSCCH may be configured to be less than 16 $\mu$s (including no gap) so as to allow transmission through no LBT during transmission of the PSCCH/PSSCH following after the PSFCH (type 2C scheme), or the gap between the PSFCH and the PSCCH/PSSCH may be configured as 16 $\mu$s so as to allow transmission through the type 2B scheme during the transmission of the PSCCH/PSSCH following after the PSFCH. Alternatively, the gap between the PSFCH and the PSCCH/PSSCH may be configured to be at least 25 $\mu$s so as to allow transmission through the type 2A scheme during the transmission of the PSCCH/PSSCH following after the PSFCH.

However, when channel access for PFSCH transmission fails to be performed, the UE may independently perform separate channel access for PSCCH/PSSCH transmission, and the above-described scheme in which the PSCCH/PSSCH precedes on the time axis can be applied the same.

- UE-to-UE COT sharing between SL channels

The present disclosure proposes a condition for sharing a COT between different UEs and a method for performing COT sharing.

The present disclosure proposes a method in which when a channel occupancy (CO) (or a channel occupancy time (COT)) is initiated by an SL support UE for performing PSCCH/PSSCH transmission as an SL channel and the COT is shared with another UE, a UE for receiving a PSCCH/PSSCH or transmitting a PSFCH and the UE for transmitting the PSCCH/PSSCH perform transmission, and an operation method of a transmitting UE and a receiving UE according thereto. In addition, the present disclosure proposes a method in which when a CO (or a COT) is initiated by a UE for receiving a PSCCH/PSSCH or transmitting a PSFCH and the COT is shared with another UE, a UE for receiving the PSFCH and a UE for transmitting the PSFCH perform transmission, and an operation method of a transmitting UE and a receiving UE according thereto.

First, a COT sharing condition between a UE for performing PSSCH/PSSCH transmission including unicast configuration configured to expect ACK/NACK feedback as HARQ-ACK and a single UE for performing transmission of a PSFCH including ACK/NACK feedback as HARQ-ACK corresponding to the PSSCH, and a method for performing transmission by a UE for receiving the PSCCH/PSSCH or transmitting the PSFCH and a UE for transmitting the PSCCH/PSSCH are proposed. In addition, a COT sharing condition between a UE for performing PSCCH/PSCCH transmission including groupcast transmission configured to expect NACK only feedback as HARQ-ACK and a UE group for performing transmission of a PSFCH including NACK only feedback as HARQ-ACK corresponding to the PSSCH, and a method for performing transmission by a UE for receiving the PSCCH/PSSCH or transmitting the PSFCH and a UE for transmitting the PSCCH/PSSCH are proposed.

First, when a UE for transmitting a PSSCH/PSSCH operates as an initiating device, in order to share the COT initiated by the UE is shared with another UE, a method for allowing the COT initiated by the UE to be identified by another UE may be required. Meanwhile, in the SL, the UE may indicate a priority indicator through SCI (e.g., 1st SCI). In the present disclosure, the UE for transmitting the PSCCH/PSSCH may perform channel access by configuring a CAPC used during channel access based on a priority indicator, and configure a maximum COT (MCOT) value according to the CAPC and configure a COT so that the COT does not exceed the corresponding MCOT. When the UE operating as an initiating device performs one or more PSCCH/PSCCH transmissions, the UE may perform channel access for the one or more PSCCH/PSCCH transmissions by configuring the largest CAPC value (e.g., the lowest priority value) among the CAPC configured based on the one or more priority indicators, and may perform the one or more PSCCH/PSSCH transmissions when channel access has been successfully performed. Here, the length of the COT started from the PSCCH/PSSCH transmission needs to be notified so that the corresponding COT can be shared with another UE. As a signaling method therefor, implicit signaling and explicit signaling may be used.

First, the explicit signaling method is described. The UE having received the PSCCH may recognize the CAPC value configured by the UE having transmitted the PSCCH/PSCCH, based on a priority indicator in SCI (e.g., 1st SCI) transferred through the PSCCH. Accordingly, the UE having received the PSCCH/PSSCH may identify whether the COT is shared with reference to the MCOT by the corresponding CAPC, and may determine whether the transmission of the PSFCH corresponding to the PSSCH is within a COT sharing duration.

Table 6 shows values of parameters used for channel access for each channel access priority class (CAPC) for SL transmission.

[Table 6]

| Channel Access Priority Class ($p$) | $m_p$ | $CW_{min,p}$ | $CW_{max,p}$ | $T$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms [or 10 ms] | {15,31,63,127,255,511,1023} |
| 4 | 7 | 15 | 1023 | 6ms [or 10 ms] | {15,31,63,127,255,511,1023} |

[NOTE1: For $p$ = 3,4, $T_{,p}$ = 10$ms$ if the higher layer parameter absenceOfAnyOtherTechnofogy-r14 or absenceOfAnyOtherTechnology-r16 is provided, otherwise, $T_{,p}$ = 6$ms$. ]

NOTE 2: When $T_s$ = 6$ms$ it may be increased to 8$ms$, by inserting one or more gaps. The minimum duration of a gap shall be 100$\mu s$. The maximum duration before including any such gap shall be 6$ms$.

When a PSFCH occasion for transmission of the PSFCH exists within a COT sharing duration, the COT can be shared with the UE having received the PSCCH/PSSCH when the PSFCH is transmitted. When receiving the COT, type 2 series (e.g., 2A/2B/2C) channel access rather than type 1 channel access including random backoff may be performed when the PSFCH is transmitted to the UE having transmitted the PSCCH/PSSCH. A type to be selected from among type 2A, type 2B, and 2C during the transmission of the PSFCH may be determined according to a gap between (a) the PSCCH/PSSCH transmitted by the UE having transmitted the PSCCH/PSSCH and (b) the PSFCH transmitted by the UE for transmitting the PSFCH.

- When the gap is equal to or greater than 25 $\mu$s, the UE may perform a type 2A channel access procedure and then perform PSFCH transmission in the corresponding channel.
- When the gap is 16 $\mu$s, the UE may perform a type 2B channel access procedure and then perform PSFCH transmission in the corresponding channel.
- When the gap is up to 16 $\mu$s (i.e., less than 16 $\mu$s), the UE may perform a type 2C channel access procedure and then perform PSFCH transmission in the corresponding channel.

In addition, the UE operating as an initiating device may perform one or more PSCCH/PSSCH transmissions. In this case, the UE may perform channel access for one or more PSCCH/PSSCH transmissions by configuring the largest CAPC value (i.e., the lowest priority value) among the CAPC configured based on the one or more priority indicators, and may perform the one or more PSCCH/PSSCH transmission when channel access is successfully performed.

However, in the UE, the COT may determine slots occupied by the PSCCH/PSSCH according to traffic in which the UE is to perform transmission, and thus the COT may be freely configured within the MCOT. Accordingly, when the UE having received the PSCCH/PSSCH configures the COT shared for PSFCH transmission as the MCOT and uses the same for channel access for PSFCH transmission, the criteria for the COT shared between the UEs may not be matched to each other. In order to solve this problem, a method for notifying of whether the COT is shared through SCI (e.g., 1st SCI transferred through the PSCCH) as explicit signaling. When the PSCCH/PSSCH transmission and the PSFCH transmission occur in the same cell, basically the PSFCH occasion is cell-specifically configured in the sidelink. That is, when different UEs are to transmit the PSFCH, the occasion for transmitting the PSFCH is configured the same for each cell. Accordingly, the UE for transmitting the PSCCH/PSSCH may identify a PSFCH transmission time point from a UE from which the UE for transmitting the PSCCH/PSSCH expects to receive the PSFCH, and may thus notify the UE for performing PSFCH transmission of COT sharing information through explicit signaling (e.g., 1st SCI) when transferring the PSCCH. The UE for performing the PSFCH transmission may receive the shared COT during the PSFCH transmission when a PSFCH occasion for the PSFCH transmission exists within the COT sharing duration identified based on the reception of the COT sharing information. When receiving the shared COT, the UE for performing the PSFCH transmission may perform type 2 series (e.g., 2A/2B/2C) channel access rather than type 1 channel access including random backoff when the PSFCH is transmitted to the UE having transmitted the PSCCH/PSSCH. A type to be selected from among type 2A, type 2B, and 2C during the transmission of the PSFCH may be determined according to a gap between (a) the PSCCH/PSSCH transmitted by the UE having transmitted the PSCCH/PSSCH and (b) the PSFCH transmitted by the UE for transmitting the PSFCH.

- When the gap is equal to or greater than 25 $\mu$s, the UE may perform a type 2A channel access procedure and then perform PSFCH transmission in the corresponding channel.
- When the gap is 16 $\mu$s, the UE may perform a type 2B channel access procedure and then perform PSFCH transmission in the corresponding channel.
- When the gap is up to 16 $\mu$s (i.e., less than 16 $\mu$s), the UE may perform a type 2C channel access procedure and then perform PSFCH transmission in the corresponding channel.

In addition, COT sharing may be allowed only when SL transmission of different UEs exists in the same RB set. For example, only when a second SL transmission (e.g., PSFCH transmission) after a first SL transmission (e.g., PSCCH/PSSCH transmission) is within the same RB set as the PSCCH/PSSCH transmission, the UE operating as an initiating device may notify another UE of COT sharing through COT sharing information. Here, the RB set corresponds to a unit for performing different channel access, for example, an LBT BW, i.e., a channel unit for performing LBT (when an intra guard subcarrier configuration is received). The RB set includes multiple consecutive RBs. That is, for different channel access units, contaminations can be applied to COT sharing. In consideration of the characteristics of the unlicensed band, fair co-existence with different RAT, Wi-Fi, LAA, and NR-U is required, and thus COT sharing may be allowed only in the RB set in which the UE has performed channel access to enable co-existence with other RAT.

FIG. 34 illustrates a configuration in a slot of a PSCCH/PSSCH/PSFCH. Referring to FIG. 24, the time location of the PSFCH in one slot may be TDM-ed with the PSCCH/PSSCH. Accordingly, in the consecutive slot subsequent from the PSCCH/PSSCH transmitted after a UE (UE 1) initiates a COT, or in a slot that is inconsecutive while having a time gap from the PSCCH/PSSCH but in which COT sharing is possible, a UE (UE 2) for transmitting an SL channel (e.g., PSCCCH/PSSCH/PSFCH) on a PSFCH occasion may be scheduled. In this case, the SL channel (e.g., PSCCH/PSSCH/PSFCH) transmitted by UE 2 may be transmitted by sharing the COT initiated by the UE (UE 1). However, when the SL transmission (e.g., PSCCH/PSSCH/PSFCH) performed by UE 2 at least includes transmission for UE 1, it may be allowed to apply COT sharing to the SL transmission performed by UE 2 and transmit the same. That is, when the SL transmission performed by UE 2 does not include transmission for UE 1, COT sharing is not applied to the SL transmission performed by UE 2.

When COT sharing is applied to the SL transmission performed by UE 2, UE 2 may perform type 2 series (e.g., 2A/2B/2C) channel access rather than type 1 channel access including random backoff when performing SL transmission (e.g., PSCCH/PSSCH/PSFCH). A type to be selected from among type 2A, 2B, and 2C for SL transmission (e.g., PSCCH/PSSCH/PSFCH) may be determined according to a gap between (a) PSCCH/PSSCH transmitted by the UE (UE 1) and (b) the SL transmission (e.g., PSCCH/PSSCH/PSFCH) performed by the UE (UE 2).

- When the gap is equal to or greater than 25 $\mu$s, UE 2 may perform a type 2A channel access procedure and then perform the SL transmission (e.g., PSCCH/PSSCH/PSFCH) in the corresponding channel.
- When the gap is 16 $\mu$s, UE 2 may perform a type 2B channel access procedure and then perform SL transmission in the corresponding channel.
- When the gap is up to 16 $\mu$s (i.e., less than 16 $\mu$s), UE 2 may perform a type 2C channel access procedure and then perform SL transmission in the corresponding channel.

Next, the present disclosure proposes, as another condition for sharing a COT between different UEs and another method for performing COT sharing, a method for initiating/sharing a COT in transmitting an S-SSB or a PSFCH by a UE initiating the COT, and a corresponding condition.

FIG. 32 illustrates a structure of a sidelink SSB (S-SSB) in normal CP (NCP) in an NR SL slot format as described above. Referring to FIG. 32, the UE may transmit the S-SSB to perform synchronization with different UEs through a sidelink. The example of FIG. 28 may be combined with various embodiments of the present disclosure. For example, when a CP type is NCP, for the sequence of symbols to which the S-PSS, S-SSS, and PSBCH are mapped in the S-SSB, FIG. 28 may be referred to. For example, when the CP type is extended CP (ECP), unlike FIG. 28, the number of symbols to which the PSBCH is mapped after the S-SSS within the S-SSB may be six. Accordingly, whether the CP type is NCP or ECP, the coverage of the S-SSB may differ. To secure the coverage of the S-SSB, a set for selecting/determining the number of S-SSBs transmitted to the receiving UE within one S-SSB transmission period by the transmitting UE or the number of S-SSBs transmitted to the receiving UE within one S-SSB transmission period by the transmitting UE needs to be defined or configured, or needs to be configured in advance.

More specifically, a sidelink synchronization signal (SLSS) and synchronization information are described. SLSS may include a primary sidelink synchronization signal (PSSS) and a secondary sidelink synchronization signal (SSSS) as an SL specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold-sequences may be used for the S-SSS. For example, the UE may detect an initial signal by using the S-PSS and acquire synchronization. For example, the UE may acquire detailed synchronization by using the S-PSS and the S-SSS, and may detect a synchronization signal ID. A physical sidelink broadcast channel (PSBCH) may be a (broadcast) channel in which basic information (e.g., system information) that the UE needs to know before SL signal transmission and reception is transmitted. For example, the basic information may include information related to SLSS, a duplex mode (DM), time division duplex uplink/downlink (TDD UL/DL) configuration, resource pool-related information, the type of application related to SLSS, a subframe offset, broadcast information, etc. For example, for assessment of the PSBCH performance, in NR V2X, a payload size of the PSBCH may be 56 bits including 24-bit cyclic redundancy check (CRC). The S-PSS, S-SSS, and PSBCH may be included in a block format (e.g., SLSS/PSBCH block, hereinafter, S-SSB) supporting periodic transmission. The S-SSB may have the same numerology (e.g., SCS and CP length) as the PSCCH/PSSCH in the carrier, and a transmission bandwidth of the S-SSB may be within a (pre-)configured sidelink BWP (SL BWP). For example, the bandwidth of the S-SSB may correspond to 11 RBs. For example, the PSBCH may be over 11 RBs. In addition, the frequency position of the S-SSB may be (pre-)configured. Accordingly, the UE does not need to perform hypothesis detection in the frequency to find the S-SSB in the carrier.

In the present disclosure, for example, a transmitting UE (TX UE) may be a UE for transmitting data to a (target) receiving UE (RX UE). For example, the transmitting UE may be a UE for performing PSCCH and/or PSSCH transmission. In addition, the transmitting UE may be a UE for transmitting an SL CSI-RS and/or an SL CSI report request indicator to the (target) receiving UE. In addition, the transmitting UE may be a UE for transmitting a (control) channel (e.g., PSCCH, PSSCH, etc.) and/or a reference signal (e.g., DM-RS, CSI-RS, etc.) on the (control) channel, which is to be used for SL radio link monitoring (RLM) and/or SL radio link failure (RLF) of the (target) receiving UE. In addition, the transmitting UE may be a UE for transmitting an S-SSB or an SLSS/PSBCH block to the (target) receiving UE. Meanwhile, in the present disclosure, for example, the receiving UE (RX UE) may be a UE for transmitting SL HARQ feedback to the transmitting UE according to whether data received from the transmitting UE (TX UE) has been successfully decoded and/or whether the PSCCH (related to PSSCH scheduling) transmitted by the transmitting UE has been detected/decoded successfully. In addition, the receiving UE may be a UE for performing SL CSI transmission to the transmitting UE based on the SL CSI-RS and/or SL CSI report request indicator received from the transmitting UE. In addition, the receiving UE may be a UE for transmitting an SL (L1) RSRP measurement value to TX UE based on the (pre-defined) reference signal and/or SL (L1) RSRP report request indicator received from the transmission UE. In addition, the receiving UE may be a UE for transmitting the receiving UE's own data to the transmitting UE. In addition, the receiving UE may be a UE for performing SL RLM and/or SL RLF operation based on the (pre-configured) (control) channel and/or the reference signal on the (control) channel received from the transmitting UE. In addition, RX UE may be a UE for receiving an S-SSB or SLSS/PSBCH block from TX UE and performing synchronization.

Meanwhile, in the NR sidelink communication system the transmitting UE may transmit the S-SSB or SLSS/PSBCH block to the receiving UE. The receiving UE may perform initial access by using the S-SSB or the SLSS/PSBCH block received from the transmitting UE. The S-SSB or SLSS/PSBCH block may include the S-PSS, S-SSS, and PSBCH. The receiving UE may acquire initial signal detection and synchronization by using the S-PSS received from the transmitting UE. The receiving UE may acquire detailed synchronization by using the S-SSS received from the transmitting UE together with the S-PSS, and detect a synchronization signal ID. The receiving UE may receive a master information block (MIB) through the PSBCH received from the transmitting UE, and may acquire basic system information included in the MIB. Accordingly, the S-PSS, S-SSS, and PSBCH included in the S-SSB or SLSS/PSBCH block may be very important signals for the receiving UE to acquire synchronization and basic system information, and for normal data communication, the receiving UE may need to perform an initial process of receiving and decoding the S-SSB. Meanwhile, in the NR SL system, multiple numerologies having different SCSs and/or CP lengths may be supported. In this case, as the size of the SCS increases, the length of a time resource on which the transmitting UE transmits the S-SSB is reduced, which may thus cause the reduction in the coverage of the S-SSB. Accordingly, to guarantee the coverage of the S-SSB, the number of S-SSBs transmitted to the receiving UE within the S-SSB transmission period (e.g., 160 ms) by the transmitting UE according to the size of the SCS may be pre-configured or configured as a number more than 1 for the transmitting UE. For example, when the size of SCS is 15 kHz, the transmitting UE may transmit one S-SSB to the receiving UE within one S-SSB transmission period. For example, when the size of SCS is 30 kHz, the transmitting UE may transmit one or two S-SSBs to the receiving UE within one S-SSB transmission period. In the present disclosure, the S-SSB transmission period may be referred to as an S-SSB period. Meanwhile, when the size of SCS is 60 kHz, two types of CP may be supported. The structure of the S-SSB transmitted to the receiving UE by the transmitting UE may vary according to the CP type. In this case, the CP type may be normal CP (NCP) or extended CP (ECP). For example, when the CP type is NCP, the number of symbols to which the PSBCH is mapped in the S-SSB may be 9 or 8. On the other hand, when the CP type is ECP, the number of symbols to which the PSBCH is mapped within the S-SSB may be 7 or 6.

A method in which when the transmitting UE transmits the S-SSB on the unlicensed band, symbols starting from the last symbol in a slot to at least one last OFDM symbol in the S-SSB structure configured in one slot are emptied as a gap so that LBT for channel access can be performed to enable a start symbol in the next consecutive slot to be used as a PSCCH/PSSCH transmission or automatic gain control (AGC) symbol.

- S-SSB transmission and COT sharing between PSCCHs/PSSCHs in the same UE perspective

In the perspective of one UE, when the PSCCH or PSCCH is scheduled or a transmission resource is configured so that the PSCCH or PSCCH is consecutively transmitted subsequent to the transmission of the S-SSB, for S-SSB transmission, a type-1 channel access scheme may be applied as a channel access scheme for S-SSB transmission only. When the p=1 value is applied as the CAPC for the S-SSB transmission, the MCOT length corresponding to p=1 may be configured as 2 ms (see Table 6). In this case, the UE considers, as transmission within the MCOT, PSSCH/PSCCH transmitted consecutively from the slot in which the S-SSB is transmitted, and may consider the same as transmission within a shared COT in performing channel access. In this case, according to a gap between the S-SSB transmission and the PSCCH/PSCCH transmissions, the transmitting UE may perform channel access by using one of the type 2A, 2B, and 2C channel access procedures. That is, a type to be selected from among the type 2A, 2B, and 2C channel access procedures during PSCCH/PSSCH transmission may be determined according to the corresponding gap since the UE for transmitting the S-SSB is identical to the UE for transmitting the PSCCH/PSSCH.

- If a gap is equal to or greater than 25 $\mu s$, the UE may perform a type 2A channel access procedure and then perform SL transmission (e.g., PSCCH/PSSCH) in the corresponding channel.
- If the gap is 16 $\mu s$, the UE may perform a type 2B channel access procedure and then perform SL transmission in the corresponding channel.
- If the gap is up to 16 $\mu s$ (i.e., less than 16 $\mu s$), the UE may perform a type 2C channel access procedure and then perform SL transmission in the corresponding channel.

In addition, the PSSCH/PSCCH may be scheduled or a transmission resource may be configured such that the same UE performs transmission consecutively after the S-SSB transmission. In this case, the second-to-last symbol of the slot included in the S-SSB transmission may be repeatedly transmitted in the last guard symbol, or the first symbol of the next slot may be allocated to the last guard symbol through CP extension. In this case, the second-to-last symbol of the slot may be repeatedly transmitted in the last guard symbol, or the first symbol of the next slot may be allocated to the last guard symbol through CP extension. In this case, a gap between two slots may be configured in consideration of several schemes. For example, the UE for transmitting the PSCCH/PSSCH may configure the gap as 16 $\mu s$ (or less) so that the type 2B or type 2C channel access procedure can be performed, or the gap may be configured as 25 $\mu s$ (or greater) so that a type 2A channel access procedure can be performed. By doing this, it is possible to prevent the PSSCH/PSCCH transmission, which is configured to be transmitted consecutively after the S-SSB transmission, from colliding with transmissions in the guard symbols of the same or a different RAT that share the same unlicensed spectrum channel. This is because if the guard symbol is left empty, the same or a different RAT co-existing in the same unlicensed band may determine the channel to be idle during the guard symbol and perform transmission.

As another example, in the perspective of one UE, the PSSCH/PSCCH may be scheduled so that the transmission is consecutively performed subsequently from the transmission of the S-SSB. In this case, for the S-SSB transmission, type-1 channel access may be applied as a channel access scheme only for the S-SSB transmission, while type-1 channel access may also be performed according to the CAPC value corresponding to the traffic of the consecutively transmitted PSSCH/PSCCH. Accordingly, prior to the S-SSB transmission, type-1 channel access may be performed according to the CAPC value corresponding to the traffic of the PSSCH/PSCCH, the S-SSB transmission and the PSCCH/PSSCH transmission may then be performed consecutively without additional channel access, and for the gap between two slots, the second-to-last symbol of the slot included in the S-SSB transmission may be repeatedly transmitted in the last guard symbol, or the first symbol of the next slot may be allocated to the last guard symbol through CP extension. In this case, the gap between two slots may be configured in consideration of the above-described several schemes. However, prior to the S-SSB transmission, type-1 channel access is performed according to the CAPC value corresponding to traffic of the PSSCH/PSCCH, but channel access may fail. In this case, additional channel access may be configured to be performed according to the CAPC value corresponding to the PSSCH/PSCCH traffic prior to the slot configured for PSSCH/PSCCH transmission.

- Case of sharing COT of S-SSB among different UEs

When a COT is shared among different UEs, a method for prohibiting a UE having performed S-SSB transmission from sharing the COT with different UEs may be considered for S-SSB transmission. In consideration of a characteristic that transmission of unicast data is not included in the S-SSB transmission and transmission characteristics of broadcast or groupcast, when UEs having received the S-SSB perform type 2A/2B/2C channel access (i.e., perform transmission on a channel without performing a random backoff operation for channel sensing) rather than type-1 channel access, a collision among different UEs may occur due to transmission among different UEs in the same channel. Accordingly, efficient communication cannot be established, a retransmission count may increase, and thus latency between links may be even increased.

In addition, a method in which when a COT is shared among different UEs, a p=1 value is used as a CAPC for transmission of an S-SSB (see Table 6), but only when S-SSB transmission is prioritized while having mp=1 rather than mp=2, which is a slightly higher priority over the previously defined p=1 value, the UE having performed the S-SSB transmission is prohibited from sharing the COT among different UEs may be considered. For the transmissions of channels including unicast data having p=1 as the CAPC value and the S-SSB transmission having the same p=1 value, channel access in the same channel is performed to fairly contend and acquire the channel so that COT sharing can be allowed within the same MCOT. However, for the S-SSB transmission having the same p=1 value as the CAPC value but prioritizing transmission of the S-SSB while having a configured value mp=1 rather than mp=2, it may be allowed to prioritize S-SSB transmission. However, S-SSB transmission is prioritized, but the channel is not acquired through fair contention among different UEs on the same RAT or fair contention among different UES on different RATs, and thus it may be configured that COT sharing is not to be performed within the corresponding MCOT.

- Case of sharing COT of PSFCH with same UE

In the perspective of one UE, PSSCH/PSCCH may be scheduled or a transmission resource may be configured so that the PSSCH/PSCCH is consecutively transmitted subsequent to transmission of the PSFCH. In this case, for PSFCH transmission, type-1 channel access may be applied as a channel access scheme only for PSFCH transmission. When a p=1 value is applied as a CAPC for PSFCH transmission and an MCOT length corresponding to p=1 is configured as 2 ms (see Table 6), PSSCH/PSCCH transmission performed consecutively from the slot in which the PSFCH is transmitted may be considered as transmission in the MCOT. Accordingly, in performing channel access, PSSCH/PSCCH transmission is considered as transmission within the shared COT, and channel is performed by determining a channel access type (e.g., type 2A, 2B, or 2C) according to a gap between (a) PSFCH transmission and (b) PSSCH/PSCCH transmission. A type to be selected from among the type 2A, 2B, and 2C during PSCCH/PSSCH transmission may be determined according to the corresponding gap since the UE for transmitting the PSFCH is identical to the UE for transmitting the PSCCH/PSSCH.

- If a gap is equal to or greater than 25 $\mu s$, the UE may perform a type 2A channel access procedure and then perform SL transmission (e.g., PSCCH/PSSCH) in the corresponding channel.
- If the gap is 16 $\mu s$, the UE may perform a type 2B channel access procedure and then perform SL transmission in the corresponding channel.
- If the gap is up to 16 $\mu s$ (i.e., less than 16 $\mu s$), the UE may perform a type 2C channel access procedure and then perform SL transmission in the corresponding channel.

In addition, the PSSCH/PSCCH may be scheduled or a transmission resource may be configured such that the same UE performs transmission consecutively after the PSFCH transmission. In this case, the second-to-last symbol of the slot included in the PSFCH transmission may be repeatedly transmitted in the last guard symbol, or the first symbol of the next slot may be allocated to the last guard symbol through CP extension. In this case, a gap between two slots may be configured in consideration of several schemes. For example, the UE for transmitting the PSCCH/PSSCH may configure the gap as 16 $\mu s$ so that the type 2B or type 2C channel access procedure can be performed, or the gap may be configured as 25 $\mu s$ (or greater) so that a type 2A channel access procedure can be performed. By doing this, it is possible to prevent the PSSCH/PSCCH transmission, which is configured to be transmitted consecutively after the S-SSB transmission, from colliding with transmissions in the guard symbols of the same or a different RAT that share the same unlicensed spectrum channel. This is because when the guard symbol is empty, the same or a different RAT coexisting in the same unlicensed band may determine the channel to be idle during the guard symbol and perform transmission.

As another example, in the perspective of one UE, the PSSCH/PSCCH may be scheduled so that the transmission is consecutively performed subsequently from the transmission of the PSFCH. In this case, for the PSFCH transmission, type-1 channel access may be applied as a channel access scheme only for the PSFCH transmission, while type-1 channel access may also be performed according to the CAPC value corresponding to the traffic of the consecutively transmitted PSSCH/PSCCH. Accordingly, prior to the PSFCH transmission, type-1 channel access may be performed according to the CAPC value corresponding to the traffic of the PSSCH/PSCCH, the PSFCH transmission and the PSCCH/PSSCH transmission may then be performed consecutively without additional channel access. In this case, for the gap between two slots, the second-to-last symbol of the slot included in the PSFCH transmission may be repeatedly transmitted in the last guard symbol, or the first symbol of the next slot may be allocated to the last guard symbol through CP extension. The gap between two slots may be configured in consideration of the above-described several schemes. However, prior to the PSFCH transmission, type-1 channel access is performed according to the CAPC value corresponding to traffic of the PSSCH/PSCCH, but channel access may fail. In this case, additional channel access may be configured to be performed according to the CAPC value corresponding to the PSSCH/PSCCH traffic prior to the slot configured for PSSCH/PSCCH transmission.

- Case of sharing COT of PSFCH among different UEs

As another example of the present disclosure, a similar scheme to the S-SSB transmission may be used also for the PSFCH transmission performed by the UE. When a COT is shared among different UEs, a method for prohibiting a UE having performed PSFCH transmission from sharing the COT with different UEs may be considered for PSFCH transmission. In consideration of a characteristic that transmission of unicast data is not included in the PSFCH transmission, when a transmitting UE performs PSFCH transmission and UEs having received the PSFCH perform transmission on a channel without performing a random backoff operation for channel sensing, such as type 2A/2B/2C channel access, rather than type-1 channel access, a collision among different UEs may occur due to transmission among different UEs in the same channel, accordingly, efficient communication cannot be established, a retransmission count may increase, and thus latency between links may be even increased.

As another example, a method in which when a COT is shared among different UEs, a p=1 value is used as a CAPC for transmission of a PSFCH (see Table 6), but only when PSFCH transmission is prioritized while having mp=1 rather than mp=2, which is a slightly higher priority over the previously defined p=1 value, the UE having performed the PSFCH transmission is prohibited from sharing the COT among different UEs may be considered. For the transmissions of channels including unicast data having p=1 as the CAPC value and the PSFCH transmission having the same p=1 value, channel access in the same channel is performed to fairly contend and acquire the channel so that COT sharing can be allowed within the same MCOT. However, it may be allowed to perform PSFCH transmission by prioritizing the same by configuring mp=1 rather than mp=2 while having the same p=1 value as the CAPC value. However, PSFCH transmission is prioritized, but the channel is not acquired through fair contention among different UEs on the same RAT or fair contention among different UES on different RATs, and thus it may be configured that COT sharing is not to be performed within the corresponding MCOT.

- Method for allocating resource for PSFCH in sidelink communication

Unlike the licensed band, UEs using the unlicensed band need to be designed to meet regulations on fairness and power spectral density (PSD) and an occupied channel bandwidth (OCB). PSD is limited to 10 dBM/MHz, and OCB needs to be designed to occupy 80% of a nominal BW with reference to a carrier on which a UE is to transmit a channel/signal. In a case of a downlink, when scheduling is performed for multiple users (UEs) due to the basic station scheduling issue, occupying 80% of the nominal BW may not be a significant issue. However, in a case of a sidelink and an uplink, a UE performs transmission using the licensed band, and thus a condition for OCB for transmission by the UE needs to be necessarily met. In addition, maximum power corresponding to a maximum worst condition of the PSD needs to be set to 10 dBM/MHz, and thus for the transmission of the UE, it is necessary to perform transmission in a distributed manner to the channel BW in the frequency area. The PSD limitations for each frequency band are as follows.

- 5150-5350 MHz with TPC: 10 dBm/MHz
- 5250-5350 MHz without TPC: 7 dBm/MHz
- 5150-5250 MHz without TPC: 10 dBm/MHz
- 5470-5725 MHz with TPC: 17 dBm/MHz
- 5470-5725 MHz without TPC: 14 dBm/MHz
- 60 GHz band, 13 dBm/MHz EIRP with 40 dBm EIRP

FIGS. 35 and 36 illustrate interlace structures according to an embodiment of the present disclosure.

In sidelink communication, when a UE transmits a PSSCH/PSCCH/PSFCH, the RB-based interlace structure illustrated in FIG. 36 may be used. Through the RB-based interlace structure, the UE may configure a maximum PSD, and may configure an OCB to be met. An unlicensed spectrum target for sidelink communication is a band in which an NR-U system is used, and may be a 5 GHz band or a band of 7 GHz or less. Accordingly, the RB-based interlace structure inf the NR-U system may be used in the sidelink system. In addition, the RB-based interlace structure can be also applied to transmission of HARQ-ACK feedback in the sidelink PSFCH. However, when the RB-based interlace structure is used during the PSFCH transmission, the number of RBs of one interlace is not 1, and one RB-based interlace which can occupied within one RB set with reference to a 20 MHz channel BW and 15 kHz subcarrier spacing may be a minimum of 10 RBs. Multiplexing among different UEs needs to be performed using 10 RBs only, and thus multiplexing capacity may be insufficient. In addition, in sidelink communication, when one or more RB sets are allocated to a UE for transmitting a PSFCH and the same RB-based interlace index is allocated to multiple RB sets consecutively, PSFCH transmission cannot be performed if not all RB sets successfully perform channel access. Accordingly, efficient communication having reliability through HARQ-ACK feedback on the PSSCH cannot be established.

When sidelink transmission is performed in the unlicensed spectrum, channel access may be performed for each RB set (or LBT subband), or may be performed for all RB sets. When channel access is successfully performed, a transmitting UE may transmit a PSSCH and a receiving UE having received the PSSCH may transmit a PSFCH by using the RB-based interlace structure as in FIG. 35. When the receiving UE having received the PSSCH transmits the PSFCH, the receiving UE may perform channel access in units of RB sets, and may perform PSFCH transmission in at least one RB set in which channel access has been successfully performed. A method for configuring a PSFCH resource by a receiving UE through transmission of a PSFCH so that a transmitting UE can receive HARQ-ACK feedback on a PSSCH is proposed.

As shown in FIG. 35, when a PSFCH is transmitted using an RB-based interlace structure, type 1 channel access may be performed for each RB set to which the PSFCH is allocated. Alternatively, when the PSFCH is transmitted using the RB-based interlace structure, type 1 channel access may be performed for at least one RB set, and type 2 channel access may be performed for the remaining RB sets. The type 2 channel access is performed with random backoff while having a sensing duration of a single interval of a specific space, and transmission between simultaneously allocated RB sets is performed.

Type 1 channel access may be performed for each RB set to which the PSFCH is allocated. Alternatively, type 1 channel access may be performed for one of RB sets to which the PSFCH is allocated, and type 2 channel access may be performed for the remaining RB sets. In this case, in consideration of characteristics of the unlicensed band, an RB set in which channel access is successfully performed cannot be identified in advance. Accordingly, when the PSFCH is allocated to each of the one or more RB sets according to the RB-based interlace structure, transmission of the PSFCH including at least one piece of HARQ-ACK information may be allocated to each RB set. In relation to the transmission of the PSFCH, in order to meet an OCB regulation condition (OCB requirement condition), having a common RB-based interlace is allowed in the RB-based interlace structure, and for each RB set, at least one PRB may have PUCCH format 0 and may include ACK or NACK information for HARQ-ACK feedback. When channel access is successfully performed in at least one of the one or more RB sets allocated to the PSFCH, the UE for transmitting the PSFCH may transmit ACK or NACK information for HARQ-ACK feedback, and the UE having previously transmitted a PSSCH corresponding to the PSFCH may receive ACK or NACK information, whereby efficient communication having reliability for the PSSCH can be established.

Referring to FIG. 35, when a PSFCH is transmitted on or more RB sets through the RB-based interlace structure, each RB set may have PUCCH format 0 in at least one PRB and transmit HARQ-ACK feedback, and when there is an RB set in which channel access is successfully performed during channel access for one or more RB sets, PUCCH format 0 transmitted among different RB sets may be repeatedly transmitted. In this case, in order to solve the problem of increasing cubic metric (CM) and peak-to-average power ratio (PAPR) when signals having the same phase are repeatedly transmitted while having regular frequency spaces, different cyclic shift (CS) values may be allocated between repeated transmissions of PUCCH format 0 allocated to different RB sets, and modular operation may be performed to apply the remainder of each different CS value divided by 12.

- PSFCH resource allocation method for PSSCH, based on sidelink communication

When an RB-based interlace structure is used during PSFCH transmission, the number of RBs of one interlace is not 1, and one RB-based interlace which can occupied within one RB set with reference to a 20 MHz channel BW and 15 kHz subcarrier spacing may be a minimum of 10 RBs. When PSSCH transmission using the RB-based interlace structure is performed in one or more RB sets, a UE for receiving a PSSCH needs to know information on an RB set index and an RB-based interlace for transmission of a PSFCH corresponding to the PSSCH so as to perform PSFCH transmission to a UE for transmitting the PSSCH. Hereinafter, a method for signaling information on an RB set index of an RB-based interlace for PSFCH transmission is described.

In the legacy NR sidelink communication, a UE having transmitted the PSSCH may receive, in NR PUCCH format 0 and a sequence-based PUCCH format, HARQ-ACK corresponding to the PSCCH transmitted in one slot through the PSFCH having one RB. When sidelink communication is performed in the unlicensed band, the RB-based interlace structure may be used. When the PSFCH is transmitted using the RB-based interlace structure, the UE for transmitting the PSFCH may explicitly or implicitly identify the UE for receiving the PSFCH of an interlace index to be used for PSFCH transmission. When one or more RB sets are within a BWP for PSFCH transmission, the UE for transmitting the PSFCH need to know the RB set index and the RB-based interlace index.

When the PSSCH is transmitted in one RB set, the one RB set may be an RB set for PSFCH transmission. When the PSSCH is transmitted in multiple RB sets, an RB set having a lowest index or an RB set having the highest index among RB sets in which the PSSCH is transmitted may be configured as an RB set for PSFCH transmission. All RB sets in which the PSSCH is transmitted may be configured as an RB set for PSFCH transmission. When the PSSCH is transmitted through the one or more RB sets and channel access is successfully performed in at least one RB set among the one or more RB sets in which the PSSCH is transmitted, the PSSCH may be transmitted through the one or more RB sets, and thus the UE for receiving the PSSCH may be configure all RB sets in which the PSSCH is transmitted as an RB set for PSFCH transmission. However, when the UE having received the PSSCH successfully performs channel access in all RB sets to transmit the corresponding PSFCH, the UE having received the PSSCH may transmit the PSFCH in all RB sets. The UE having transmitted the PSSCH cannot identify whether channel access performed by the UE having received the PSSCH to transmit the PSFCH has been successfully performed, and thus the RB set used for PSCCH/PSSCH transmission may be used to receive the PSFCH. In addition, the UE for performing the transmission of the PSSCH may explicitly signal, to the UE for receiving the PSSCH, an RB set index indicating an RB set for PSFCH transmission. In this case, the RB set index may be included in SCI.

When the PSSCH is transmitted using one RB interlace structure, one RB interlace may be used for PSFCH transmission. When the PSSCH is transmitted using multiple RB interlace structures, an RB interlace having the lowest index or an RB interlace having the highest index among RB interlace structures used for PSSCH transmission may be used for PSFCH transmission. In addition, the UE for performing PSSCH transmission may explicitly signal, to the UE for receiving the PSSCH, an RB interlace index indicating an RB interlace used for PSFCH transmission. In this case, the index of the RB interlace may be included in SCI.

When the RB set index and the RB interlace index are transmitted to the UE for transmitting the PSFCH, the UE for transmitting the PSFCH may transmit the PSFCH on the one or more RB sets by using an RB-based interlace structure. Each RB set of the RB sets may have PUCCH format 0 in at least one PRB, transmit HARQ-ACK feedback, and when there is an RB set in which channel access has been successfully performed during channel access for one or more RB sets, PUCCH format 0 transmitted among different RB sets may be repeatedly transmitted. In addition, different PRBs included in the same RB interlace within one RB set may have PUCH format 0 and may transmit HARQ-ACK feedback. PUCCH format 0 transmitted among different PRBs included in the same RB interlace within one RB set may be repeatedly transmitted. In this case, in order to solve the problem of increasing cubic metric (CM) and peak-to-average power ratio (PAPR) when signals having the same phase are repeatedly transmitted while having regular frequency spaces, different cyclic shift (CS) values may be allocated between repeated transmissions of PUCCH format 0 allocated to different RB sets, and modular operation may be performed to apply the remainder of each different CS value divided by 12.

- FDM method for PSFCH among different UEs (or different slots) in sidelink communication

When an RB-based interlace structure is used when transmitting a PSFCH, the number of RB of one interlace is not 1, one RB-based interlace which can be occupied within one RB set with reference to a 20 MHz channel BW and 15 kHz subcarrier spacing may be a minimum of 10 RBs. Multiplexing needs to be performed among different UEs by using only 10 RBs, and thus multiplexing capacity may be insufficient. Accordingly, the present disclosure describes a method for transmitting one or more PSFCHs within a single PSFCH occasion when one or more PSSCHs are transmitted through multiplexing among different UEs within the same RB-based interlace and multiple consecutive slot transmission (MCSt), and when one or more PSFCHs including HARQ-ACK corresponding to the PSSCHs transmitted in each slot are transmitted.

When an RB set index is indicated (transmitted) to a UE for transmitting a PSFCH, the UE for transmitting the PSFCH may allocate, for multiplexing among different UEs, an RB interlace of an RB interlace index and different PRBs within one RB-based interlace, and may transmit the PSFCH in the manner of FDM. That is, when different UEs need to transmit HARQ-ACK feedback through a PSFCH for one PSSCH transmission or when different UEs need to transmit HARQ-ACK feedback through a PSFCH for different PSSCHs transmitted within one RB set, a method for transmitting the PSFCH in the manner of FDM can be applied. In addition, when one or more PSSCHs are transmitted through transmission one multiple consecutive slots by using MCSt, an RB interlace of an RB interlace index and different PRBs within one RB-based interlace are allocated for multiplexing of PSFCHs corresponding to the PSSCHs transmitted in different slots, and thus the PSFCH may be transmitted in the manner of FDM. An FDM scheme for PSFCH transmission among different UEs and an FDM scheme for PSFCH transmission among different slots may correspond to a scheme of applying PUCCH format 0 having one RB used in legacy sidelink communication to at least one RB in one RB-based interlace. The common number of RBs which can be occupied within one RB-based interlace corresponds to 10 PRBs, and thus PSFCHs for different UEs or different slots may occupy different RBs within one RB-based interlace so that FDM multiplexing is performed. However, the UE for transmitting the PSFCH may use at least one RB for each HARQ-ACK feedback transmission, and random data may be allocated and transmitted to different RBs in the other RB-based interlace. That is, the PSFCH may be transmitted in at least one RB set, and in this case, each EB set of at least one RB set may include PRBs having multiple interlaces (interlace structures). For example, each RB set may include PRBs of a first interlace and PRBs of a second interlace. In this case, HARQ-ACK feedback information may be mapped to the PRBs of the first interlace and information (e.g., random data) other than the HARQ-ACK feedback information may be mapped to the PRBs of the second interlace. The first interlace and the second interlace may have the same structure. For example, the spacing between the first and second interlaces is 10 PRBs with reference to 15 kHz SCS and 5 PRBs with reference to 30 kHz SCS. An OCB requirement condition can be met by allocating random data to one RB-based interlace. For an area in which the OCB requirement condition is not required to be met, the UE for transmitting the PSFCH may use at least one RB for each HARQ-ACK feedback information to transmit the PSFCH in the manner of FDM among different UEs, without allocating random data to one RB-based interlace.

Separately from one RB-based interlace index for allocation of random data to meet the OCB requirement condition, an RB interlace of one RB interlace index and a PRB position for the PSFCH transmitted by different UEs within the same one RB-based interlace need to be explicitly or implicitly signaled for multiplexing among different UEs. The number of RB-based interlaces may be 10 (corresponding to index 0 to 9, respectively) with reference to 15 kHz SCS, and the number of PRBs within the same RB-based interlace may be 10 or 11. However, the number of RB-based interlaces is 10 and thus the number of PRBs which can be commonly used may be 10. In addition, the number of RB-based interlaces may be five (corresponding to index 0 to 4, respectively) with reference to 30 kHz SCS, the number of PRBs in the same RB-based interlace may be 10 or 11, and the number of PRBs which can be commonly used is 10, and thus the number of PRBs may be 10.

The RB interlace index and the index of the PRB in the same RB-based interlace may be explicitly or implicitly signaled. The RB interlace index and the index of the PRB in the same RB-based interlace may be jointly coded and explicitly signaled. The RB interlace index and the same RB-based interlace index may be implicitly signaled based on an ID of a UE having received the RB interlace index and the same RB-based interlace index.

For the signaling based on the ID of the receiving UE, Equation 1 or Equation 2 may be used.

[Equation 1]

$$\{ID \bmod (\text{maximum number of RB-based interlace indices}) \text{ of receiving UE}\}$$

[Equation 2]

$$(ID \text{ of receiving ID} * \text{random number X}) \bmod (\text{maximum RB-based interlace indices})$$

The maximum number of RB-based interlace indices in Equation 1 and Equation 2 may be calculated from (the number of RB-based interlaces according to SCS x the number of PRB indices within the same RB-based interlace). In this case, the number of RB-based interlaces may be 10 when SCS is 15 kHz, the number of RB-based interlaces may be 5 when SCS is 30 kHz, and the number of PRB interlaces within the same RB-based interlace may be 10. Random number X in Equations 1 and 2 may be a natural number. A mode B may be a value the remainder when A is divided by B.

The PRB position to be used for PSFCH transmission performed by the same UE (i.e., in a case where PSSCHs between different slots is transmitted to the same UE) within one same RB-based interlace or different UEs (i.e., in a case where PSSCH among different slots are transmitted to different UEs) for multiplexing of the PSFCH for the PSSCHs among different slots need to be explicitly or implicitly signaled. A total number of the RB-based interlaces and the number of PRBs which can be occupied within the same RB-based interlace may be configured with reference to the configured 15 kHz/30 kHz SCS. The RB interlace index and the PRB index within the same RB-based interlace may be jointly coded and explicitly signaled. When the PSSCHs among different slots are transmitted to different UEs, the RB interlace index and the same RB-based interlace index may be implicitly signaled based on the ID of the UE having received the RB interlace index and the same RB-based interlace index. The RB interlace index and the same RB-based interlace index may be signaled based on the slot index for the transmitted PSSCH or the ID of the receiving UE, and Equations 3 and 4 may be used for signaling.

$$(\text{Slot index for transmitted PSSCH or ID of receiving UE}) \bmod (\text{total number of RB-based interlace indices}) \quad \text{[Equation 3]}$$

$$\{(\text{slot index for transmitted PSSCH or ID of receiving ID}) * \text{random number Y}\} \bmod (\text{total number of RB-based interlace indices x PRB index within same RB-based interlace}) \quad \text{[Equation 4]}$$

A total number of RB-based interlace indices in Equations 3 and 4 may be calculated from (the number of RB-based interlaces according to SCS x the number of PRB indices within same RB-based interlace). In this case, the number of RB-based interlaces may be 10 when SCS is 15 kHz, the number of RB-based interlaces may be 5 when SCS is 30 kHz, and the number of PRB interlaces within the same RB-based interlace may be 10. Random number Y in Equations 3 and 4 may be a natural number. A mode B may be a value the remainder when A is divided by B.

When the RB set index and the RB interlace index are indicated to the UE for transmitting the PSFCH through the above-described method, the UE for transmitting the PSFCH may additionally receive an allocation of different PRBs within one same RB-based interlace, and transmit the PSFCH in the manner of FDM. As the transmission is performed in the manner of FDM, multiplexing between different UEs may be possible. That is, when different UEs for one PSSCH transmission need to transmit feedback through the PSFCH, FDM transmission may be performed. Alternatively, when different UEs for different PSSCHs transmitted within one RB set transmit feedback within one same RB-based interlace, FDM transmission may be performed. In addition, when one or more PSSCHs transmitted using MCSt, the PSFCH may be transmitted in the manner of FDM for multiplexing of PSFCHs corresponding to PSCCHs transmitted in different slots. The structure of PUCCH format 0 having one RB used in the legacy sidelink communication may be applied to at least one RB within one RB-based interlace. The common number of RBs which can be occupied within one RB-based interlace corresponds to 10 PRBs, and thus PSFCHs for different UEs or different slots may be positioned in different RBs in one RB-based interlace. This is for performing FDM multiplexing of the PSFCHs for different UEs or different slots. However, the UE for transmitting the PSFCH may use at least one RB to transmit each piece of feedback information, receive an allocation of random data for different RBs within the other RB-based interlace, and transmit the same. Accordingly, an OCB requirement condition can be met. However, for an area in which the OCB requirement condition does not need to be met, the UE for transmitting the PSFCH may use at least one RB for each HARQ-ACK feedback transmission to transmit the PSFCH in the manner of FDM between different UEs, without allocating random data within one RB-based interlace.

Separately from one RB-based interlace index for allocation of random data to meet the OCB requirement condition, a PRB position to be used for PSFCH transmission corresponding to the PSSCHs transmitted to different UEs or to be used for PSFCH transmission corresponding to the PSSCHs transmitted to the same UE in different slots may be explicitly or implicitly signaled. This is for allowing PSFCH transmission to be performed within one same RB-based interlace. The number of PRBs which can be occupied within the same RB-based interlace may be configured with reference to 15 kHz/30 kHz SCS. The PRB index within the same RB-based interlace may be explicitly or implicitly signaled. The RB interlace index and the PRB index within the same RB-based interlace may be jointly coded and explicitly signaled. When the PSSCHs among different slots are transmitted to different UEs, the RB interlace index and the same RB-based interlace index may be implicitly signaled based on the ID of the UE having received the RB interlace index and the same RB-based interlace index. The RB interlace index and the same RB-based interlace index may be signaled based on the slot index for the transmitted PSSCH or the ID of the receiving UE, and Equations 5 and 6 may be used for signaling.

$$\text{(Slot index for transmitted PSSCH or ID of receiving UE) mod (PRB index within same RB-based interlace)} \qquad \text{[Equation 5]}$$

$$\{\text{(Slot index for transmitted PSSCH or ID of receiving ID)} * \text{random number Z}\} \text{ mod (PRB index within same RB-based interlace)} \qquad \text{[Equation 6]}$$

The number of PRB interlaces within the same RB-based interlace in Equations 5 and 6 may be 10. Random number Z in Equations 5 and 6 may be a natural number. A mode B may be a value the remainder when A is divided by B.

FIG. 37 is a flowchart illustrating a method for transmitting a PSFCH according to an embodiment of the present disclosure.

Hereinafter, referring to FIG. 37, a method for transmitting a PSFCH, described through FIGS. 1 to 36, is described.

A UE may receive a physical sidelink shared channel (PSSCH) (S3710). The UE may transmit a physical sidelink feedback channel (PSFCH) including hybrid automatic repeat request - acknowledgement (HARQ-ACK) feedback information corresponding to the PSSCH (S3720).

The PSFCH may be transmitted in at least one resource block (RB) set. Each RB set of the at least one RB set may include physical resource blocks (PRBs) having a first interlace structure and PRBs having a second interlace structure.

First data may be mapped to the PRBs having the first interlace structure and second data may be mapped to the PRBs having the second interlace structure.

The first data corresponds to the HARQ-ACK feedback information, and the first data and the second data may be different from each other.

The PRBs having the second interlace structure may be commonly configured for a terminal other than the terminal, which communicates with the terminal.

When the PSSCH is received on multiple RB sets, an RB set in which the PSFCH is transmitted may be an RB set having the lowest index among the multiple RB sets.

The UE may receive indication information indicating at least one PRB among the PRBs having the first interlace structure, to which the HARQ-ACK feedback information is mapped, and

The HARQ-ACK feedback information may be mapped to a resource of the at least one PRB indicated by the indication information.

The indication information may include an index indicating the number of PRBs having the first interlace structure.

The resource to which the HARQ-ACK feedback information is mapped may be determined based on the index and an ID of the terminal.

The UE for performing the PSFCH transmission method described through FIG. 37 may be the UE described in FIG. 11. Specifically, the UE may be configured to include a communication module for transmitting or receiving a radio signal, and a processor for controlling the communication module.

The method and system of the present disclosure are described with reference to specific embodiments, but some or all of the elements or the operations may be implemented using a computing system having general-purpose hardware architecture.

The above description of the present disclosure is merely illustrative, and it would be easily understood by those skilled in the art could easily make modifications without departing from the technical concept of the present disclosure or changing essential features. Therefore, the above embodiments should be considered illustrative and should not be construed as limiting. For example, each element described as a single type may be distributed, and likewise, elements described as being distributed may be implemented as a combined form.

The scope of the present disclosure is indicated by the following claims rather than the detailed description, and it should be construed that all changes or modifications derived from the meaning and scope of the claims and their equivalents are included in the scope of the present disclosure.

**Claims**

1. A terminal configured to operate in a wireless communication system, the terminal comprising:

   a communication module; and
   a processor configured to control the communication module,
   wherein the processor is configured to:

   receive a physical sidelink shared channel (PSSCH); and
   transmit a physical sidelink feedback channel (PSFCH) comprising hybrid automatic repeat request-acknowledgement (HARQ-ACK) feedback information corresponding to the PSSCH,
   wherein the PSFCH is transmitted in one or more resource block (RB) sets,
   wherein each RB set of the one or more RB sets comprises physical resource blocks (PRBs) having a first interlace structure and PRBs having a second interlace structure,
   wherein first data is mapped to the PRBs having the first interlace structure, and second data is mapped to the PRBs having the second interlace structure,
   wherein the first data is the HARQ-ACK feedback information, and
   wherein the first data and the second data are different from each other.

2. The terminal of claim 1, wherein the PRBs having the second interlace structure are also commonly configured for a terminal other than the terminal, which communicates with the terminal.

3. The terminal of claim 1, wherein, when the PSSCH is received on multiple RB sets, an RB set in which the PSFCH is transmitted is an RB set having a lowest index among the multiple RB sets.

4. The terminal of claim 1, wherein the processor is configured to receive indication information indicating at least one PRB among the PRBs having the first interlace structure, to which the HARQ-ACK feedback information is mapped, and
   the HARQ-ACK feedback information is mapped to a resource of the at least one PRB indicated by the indication information.

5. The terminal of claim 4, wherein the indication information comprises an index indicating the number of the PRBs having the first interlace structure.

6. The terminal of claim 5, wherein the resource to which the HARQ-ACK feedback information is mapped is determined based on the index and an ID of the terminal.

7. A method for use by a terminal of a wireless communication system, the method comprising:

   receiving a physical sidelink shared channel (PSSCH); and
   transmitting a physical sidelink feedback channel (PSFCH) comprising hybrid automatic repeat request-acknowledgement (HARQ-ACK) feedback information corresponding to the PSSCH,
   wherein the PSFCH is transmitted in one or more resource block (RB) sets,
   wherein each RB set of the one or more RB sets comprises physical resource blocks (PRBs) having a first interlace structure and PRBs having a second interlace structure,
   wherein first data is mapped to the PRBs having the first interlace structure, and second data is mapped to the PRBs having the second interlace structure,
   wherein the first data is the HARQ-ACK feedback information, and
   wherein the first data and the second data are different from each other.

8. The method of claim 7, wherein the PRBs having the second interlace structure are also commonly configured for a terminal other than the terminal, which communicates with the terminal.

9. The method of claim 7, wherein when the PSSCH is received on multiple RB sets, an RB set in which the PSFCH is transmitted is an RB set having a lowest index among the multiple RB sets.

10. The method of claim 7, further comprising receiving indication information indicating at least one PRB among the PRBs having the first interlace structure, to which the HARQ-ACK feedback information is mapped,
    wherein the HARQ-ACK feedback information is mapped to a resource of the at least one PRB indicated by the indication information.

11. The method of claim 10, wherein the indication information comprises an index indicating the number of the PRBs having the first interlace structure.

12. The terminal of claim 11, wherein the resource to which the HARQ-ACK feedback information is mapped is determined based on the index and an ID of the terminal.

[Fig. 1]

1 radio frame, $T_f = (\Delta f_{max} N_f / 100) \cdot T_c = 10\,\text{ms}$

1 sub-frame, $T_{sf} = (\Delta f_{max} N_f / 1000) \cdot T_c = 1\,\text{ms}$

| #0 | #1 | #2 | #3 | ... | #8 | #9 |
|----|----|----|----|-----|----|----|

| slot#0 | slot#1 | slot#2 | slot#3 | ... | #slot#($2^\mu$-2) | slot#($2^\mu$-1) |
|--------|--------|--------|--------|-----|-------------------|-------------------|

1 slot, $T_{slot} = (\Delta f_{max} N_f / 1000) \cdot T_c \cdot 2^{-\mu} = 2^{-\mu}\,\text{ms}$

[Fig. 2]

[Fig. 3]

INITIAL CELL SEARCH

SYSTEM INFORMATION RECEPTION

RANDOM ACCESS PROCESS

TYPICAL DL/UL Tx/Rx

PSS/SSS & PBCH

PDCCH/PDSCH For RMSI/OSI

PRACH

PDCCH/ PDSCH

PUSCH

PDCCH/ PDSCH

PDCCH/ PDSCH

PUSCH/ PUCCH

S101    S102    S103    S104    S105    S106    S107    S108

[Fig. 4]

[Fig. 5]

[Fig. 6]

[Fig. 7]

[Fig. 8]

[Fig. 9]

(a) Single CC                    (b) Multiple CC

[Fig. 10]

[Fig. 11]

[Fig. 12]

PU5-U

(a)

PU5-U

(b)

[Fig. 13]

BS(e.g. eNB or gNB)

UE 1                    UE 2

[Fig. 14]

| | |
|---|---|
| Unit #($N_F$-1) | Unit #($2N_F$-1) |
| Unit #1 | Unit #($N_F$+1) |
| Unit #0 | Unit #$N_F$ |

D2D signal transmission from a
UE allocated with unit#0

D2D signal transmission from a
UE allocated with unit#0

[Fig. 15]

(a)

(b)

[Fig. 16]

[Fig. 17]

(a)      (b)      (c)

● : Tx UE
⊘ : Rx UE

[Fig. 18]

1 sub-channel

Freq.
Time

▧ : PSCCH   □ : PSSCH   ▨ : HARQ feedback resource

[Fig. 19]

[Fig. 20]

[Fig. 21]

[Fig. 22]

[Fig. 23]

(a)

No gap between configured grant PUSCH and scheduled UL transmission

Configured grant PUSCH

Scheduled UL Transmission

The UE may transmit scheduled UL transmission

Start of slot#n

(b)

No gap between configured grant PUSCH and scheduled UL transmission

Configured grant PUSCH

Scheduled UL Transmission

X

The UE may transmit scheduled UL transmission

Start of slot#n

Start of slot#n-1

Terminate the ongoing configured PUSCH at least one slot before slot#n

[Fig. 24]

[Fig. 25]

[Fig. 26]

Unoccupied

Occupied

| Channel Occupancy Time | | | | Channel Occupancy Time | | |

Extended CCA                    CCA

( a )

```
        ┌─────────────────────┐
        │   CCA check during   │
        │   CCA slot(>20us)    │
        └─────────────────────┘
                   │
                   ▼
            ◇ Is Channel idle? ◇ ──No──► ┌──────────────────────────────────┐
                   │                      │         "Extanded CCA"            │
                  Yes                     │  1) Randomly select N = [1,q]     │
                   │   ◄──────────────────│  2) Perform backoff with counter of N │
        No         ▼                      └──────────────────────────────────┘
        ◄─── ◇  Start  ◇
              ◇ to TX? ◇
                   │
                  Yes
                   ▼
        ┌─────────────────────┐
        │  Tx during less than │
        │   Maximum Channel    │
        │   Occupancy Time     │
        └─────────────────────┘
```

( b )

[Fig. 27]

[Fig. 28]

Example without any transmission (Understanding 2)

Idle periods and FFP when only UE initates COT

Idle periods and FFP when only gNB initates COT

Idle periods when both UE and gNB can initate COT

[Fig. 29]

Example with transmission (Understanding 1)

Idle periods when both UE and gNB can initate COT (with tranmission)

[Fig. 30]

[Fig. 31]

[Fig. 32]

[Fig. 33]

[Fig. 34]

[Fig. 35]

[Fig. 36]

One interlace

One slot

[Fig. 37]

S3710

Receive physical sidelink shared channel (PSSCH)

S3720

Transmit physical sidelink feedback channel (PSFCH) including hybrid automatic repeat request – acknowledgement (HARQ-ACK) feedback information corresponding to PSSCH

## INTERNATIONAL SEARCH REPORT

| International application No. |
| --- |
| **PCT/KR2023/017803** |

| A. | CLASSIFICATION OF SUBJECT MATTER |
| --- | --- |

**H04W 72/25**(2023.01)i; **H04L 1/18**(2006.01)i; **H04L 5/00**(2006.01)i; **H04W 74/08**(2009.01)i; **H04W 92/18**(2009.01)i; **H04W 72/04**(2009.01)i; **H04W 72/12**(2009.01)i

According to International Patent Classification (IPC) or to both national classification and IPC

| B. | FIELDS SEARCHED |
| --- | --- |

Minimum documentation searched (classification system followed by classification symbols)

H04W 72/25(2023.01); H04W 72/04(2009.01); H04W 88/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSSCH, PSFCH, RB(resource block) set, HARQ-ACK, feedback, index, UE ID, PSD(power spectral density), OCB(occupied channel bandwidth)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y<br>A | LG ELECTRONICS. Discussion on physical channel design framework for sidelink on unlicensed spectrum. R1-2209479, 3GPP TSG RAN WG1 #110bis-e, e-Meeting. 30 September 2022.<br>See sections 2.1.2 and 2.3. | 1,7<br>2,8<br>3-6,9-12 |
| Y | HUAWEI et al. Physical channel design for sidelink operation over unlicensed spectrum. R1-2208449, 3GPP TSG-RAN WG1 Meeting #110bis-e, e-Meeting. 30 September 2022.<br>See section 2.4.3. | 2,8 |
| A | APPLE. Discussion on Physical Channel Design Framework for Sidelink on FR1 Unlicensed Spectrum. R1-2209586, 3GPP TSG RAN WG1 #110bis-e, e-Meeting. 30 September 2022.<br>See section 2. | 1-12 |
| A | QUALCOMM INCORPORATED. Physical Channel Design for Sidelink on Unlicensed Spectrum. R1-2212118, 3GPP TSG-RAN WG1 #111. 05 November 2022.<br>See section 2. | 1-12 |

| ☑ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 March 2024** | **06 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/017803**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2020-0034923 A (KT CORPORATION) 01 April 2020 (2020-04-01)<br>See paragraphs [0156]-[0236]; and figures 14-15. | 1-12 |

Form PCT/ISA/210 (second sheet) (July 2022)

**INTERNATIONAL SEARCH REPORT**
Information on patent family members

International application No.

**PCT/KR2023/017803**

| Patent document cited in search report | | | Publication date (day/month/year) | Patent family member(s) | | | Publication date (day/month/year) |
|---|---|---|---|---|---|---|---|
| KR | 10-2020-0034923 | A | 01 April 2020 | CN | 110944403 | A | 31 March 2020 |
| | | | | KR | 10-2434619 | B1 | 24 August 2022 |
| | | | | US | 11405143 | B2 | 02 August 2022 |
| | | | | US | 2020-0099476 | A1 | 26 March 2020 |

Form PCT/ISA/210 (patent family annex) (July 2022)